# EUROPEAN PATENT APPLICATION

(11) **EP 3 869 609 A1**
(43) Date of publication of application: **25.08.2021**
(21) Application number: 21152445.9
(22) Date of filing: 20.01.2021
(51) Int. Cl.: H01M 12/08, H01M 4/86, H01M 4/88, H01M 4/90, H01M 4/38, H01M 4/02

(54) **POSITIVE ELECTRODE, LITHIUM-AIR BATTERY COMPRISING POSITIVE ELECTRODE, METHOD OF MANUFACTURING POSITIVE ELECTRODE, AND BARRIER LAYER**

(30) Priority: 24.02.2020 KR 20200022375
(71) Applicant: Samsung Electronics Co., Ltd., Suwon-si 16677 (KR)
(72) Inventor: KIM, Taeyoung, 16678 Gyeonggi-do (KR); PARK, Jungock, 16678 Gyeonggi-do (KR); LEE, Dongjoon, 16678 Gyeonggi-do (KR); LEE, Heungchan, 16678 Gyeonggi-do (KR)
(74) Representative: Elkington and Fife LLP

(57) **Abstract**

A positive electrode configured to use oxygen as a positive active material, the positive electrode including: a porous layer, and a barrier layer disposed on a surface of the porous layer, wherein the barrier layer includes a first lithium-containing metal oxide; a lithium-air battery including the positive electrode; a method of manufacturing the positive electrode; and a barrier layer.

## Description

### FIELD OF THE INVENTION

The present disclosure relates to a positive electrode, a lithium-air battery including the positive electrode, and a method of preparing the positive electrode.

### BACKGROUND OF THE INVENTION

A lithium-air battery employs lithium metal as a negative electrode and may not store air, i.e., the positive active material, in the battery, thus enabling the battery to have a large capacity.

The theoretical energy density per unit weight of a lithium-air battery may be very high, about 3,500 Watt-hour per kilogram (Wh/kg) or greater. Such an energy density of the lithium-air battery is about 10 times greater than that of a lithium ion battery.

Positive electrodes of lithium air batteries may be prepared by mixing a carbonaceous conductive agent, a binder, or the like. Upon charge/discharge of a lithium-air battery, radicals or the like may be generated during electrochemical reactions, and a carbonaceous conductive agent, a binder, or the like may be decomposed.

A lithium-air battery may employ, e.g., include, a positive electrode including a carbonaceous conductive agent or a binder.

Desired is a positive electrode that is chemically stable against radicals or the like generated during electrochemical reactions.

### SUMMARY OF THE INVENTION

Provided is a positive electrode that is chemically stable and has a novel structure.

Provided is a lithium-air battery including the positive electrode.

Provided is a method of manufacturing the positive electrode.

Additional aspects will be set forth in part in the description which follows and, in part, will be apparent from the description, or may be learned by practice of the presented embodiments of the disclosure.

According to an embodiment,
a positive electrode configured to use oxygen as a positive active material includes:
a porous layer; and
a barrier layer disposed on a surface of the porous layer,
wherein the barrier layer includes a first lithium-containing metal oxide.

According to an embodiment,
a lithium-air battery includes
the positive electrode;
a negative electrode including lithium; and
an electrolyte between the positive electrode and the negative electrode.

According to an embodiment,
a method of manufacturing a positive electrode includes
molding a first composition including a first lithium-containing metal oxide to form a molded composition;
heat-treating the molded composition to prepare a first layer;
preparing a second composition including the first lithium-containing metal oxide and a binder;
coating the second composition on a substrate;
drying the second composition on the substrate to form a second layer;
disposing the second layer on the first layer to form a laminate; and
heat-treating the laminate at a temperature of about 900 °C to about 1,300 °C under an oxidizing atmosphere to manufacture the positive electrode. According to an embodiment,
a barrier layer includes:
a first lithium-containing metal oxide, and
a second lithium-containing metal oxide,
wherein
a melting point of the second lithium-containing metal oxide is lower than a melting point of the first lithium-containing metal oxide,
an electronic conductivity of the first lithium-containing metal oxide at a temperature of 25 °C is 1×10⁻⁶ siemens per centimeter to about 5×10⁻¹ siemens per centimeter,
an ionic conductivity of the first lithium-containing metal oxide at a temperature of 25 °C is 1×10⁻⁷ siemens per centimeter to about 1×10⁻¹ siemens per centimeter, and
the barrier layer has a gas permeability of about 0.001 to about 2,000 cubic centimeters for a 1 centimeter film thickness per square meter per day under a pressure difference of 1 atmosphere.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic cross-sectional view of a positive electrode and a barrier membrane;
FIG. 2 is a schematic cross-sectional view of an embodiment of a monolithic positive electrode including a porous layer and a barrier layer;
FIG. 3 is a schematic cross-sectional view of an embodiment of a lithium-air battery including a monolithic positive electrode;
FIG. 4 is an image showing liquid barrier characteristics of the barrier layer manufactured in Example 2, wherein the diameter of the petri dish is about 9cm;
FIG. 5 is a graph of intensity (arbitrary units (a.u.)) versus diffraction angle (degrees two-theta (°2θ)), which shows the results of X-ray diffraction ("XRD") analysis of the spinel compounds manufactured in Preparation Examples 1, 2, 3, and 8, when analyzed using Cu Ka radiation;
FIG. 6 is a graph of intensity (a.u.) versus diffraction angle (°2θ) radiation, which shows XRD spectra using Cu Ka of the perovskite compounds manufactured in Preparation Examples 9 to 15; and
FIG. 7 is a schematic view illustrating an embodiment of a lithium-air battery.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The terms used in the present specification are merely used to describe particular embodiments and are not intended to limit the present inventive concept. An expression used in the singular encompasses the expression of the plural, unless it has a clearly different meaning in the context. In the present specification, it is to be understood that the terms such as "including", "having," or the like, are intended to indicate the existence of the features, numbers, steps, actions, components, parts, ingredients, materials, or combinations thereof disclosed in the specification, and are not intended to preclude the possibility that one or more other features, numbers, steps, actions, components, parts, ingredients, materials, or combinations thereof may exist or may be added. As used herein, "/" may be construed, depending on the context, as referring to "and" or "or".

In the drawings, the thicknesses of layers and regions are exaggerated or reduced for clarity. Like reference numerals in the drawings and specification denote like elements. In the present specification, it will be understood that when an element, e.g., a layer, a film, a region, or a substrate, is referred to as being "on" or "above" another element, it can be directly on the other element or intervening layers may also be present. While such terms as "first", "second", or the like, may be used to describe various components, such components must not be limited to the above terms. The above terms are used only to distinguish one component from another.

Furthermore, relative terms, such as "lower" and "upper," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

The term "monolithic structure" as used herein refers to a structure, e.g., one body structure or a single structure, including elements of different shapes or porosities, wherein these elements have the substantially identical composition, and these elements are chemically linked to one another in the absence of an interface. Accordingly, the monolithic structure is different from a simple laminate structure and assembled structure of elements of different shapes or porosities. The expression that "elements have the substantially identical composition" as used herein means that a major component included in each element are identical to one another. The term "major component" refers to the component having the maximum content from among the total components included in the element. For example, a content of the major component in each element is 50 percent by weight (wt%) or greater, 60 wt% or greater, 70 wt% or greater, 80 wt% or greater, or 90 wt% or greater.

The term "relative density" as used herein refers to a density calculated from the volume and weight of an article prepared using a material relative to a theoretical density of the material.

The term "size" of a pore as used herein refers to an average diameter of pores in the case of a spherical pore or an average length of the major axes in the case of a non-spherical pore. The "pore" as used herein refers to an open pore. An average diameter of pores may be, for example, measured using nitrogen adsorption. In an embodiment, an average diameter of pores may be, for example, an arithmetic average size of pores of automatically measured diameter by using a software or a manually measured pore size from a scanning electron microscope image.

The term "size" of a particle as used herein refers to an average diameter of particles in the case of a spherical particles or an average length of the major axes in the case of a non-spherical particles. The average diameter of particles refers to a median diameter ("D50") of particles, and the median diameter is defined as a particle diameter corresponding to 50 % of a cumulative diameter distribution and refers to a particle diameter of 50 % in samples. The median diameter ("D50") of particles may be measured using a particle size analyzer ("PSA").

The "moisture barrier characteristics and gas barrier characteristics" as used herein may be respectively measured using MOCON Aquatran model 1 and MOCON Oxytran 2/21 instrument (available from MOCON, Inc.) by a continuous flow test method according to ASTM D3985. In an embodiment, moisture barrier characteristics of a substrate may be determined as to whether the distilled water is impregnated in the substrate 12 hours after dropping distilled water onto the substrate.

A spinel compound, as used herein, refers to a compound that is isostructural with spinel, i.e., MgAl₂O₄.

A perovskite compound, as used herein, refers to a compound that is isostructural with perovskite, i.e., CaTiO₃.

A layered compound as used herein, refers to a compound having a layered structure, for example, a compound that is isostructural with α-NaFeO₂ or LiCoO₂.

A garnet compound as used herein, refers to a compound that is isostructural with garnet, , i.e., X₃Y₂(SiO₄)₃, wherein X is a divalent cation, such as Ca²⁺, Mg²⁺, Fe²⁺, Mn²⁺, or a combination thereof, and Y is a trivalent cation, such as Al³⁺, Fe³⁺, Cr³⁺, or a combination thereof.

A NASICON compound, as used herein, refers to a compound that is isostructural with NASICON, i.e., Na₁₊ₓZr₂SiₓP₃₋ₓO₁₂, wherein 0<x<3.

A LISICON compound, as used herein, refers to a compound that is isostructural with LISICON, i.e., Li₂₊₂ₓZn₁₋ₓGeO₄, wherein 0<x<1.

A tavorite compound, as used herein, refers to a compound that is isostructural with tavorite, i.e., LiFe(PO₄)(OH).

A triplite compound, as used herein, refers to a compound that is isostructural with triplite, i.e., (MnₓFe₁₋ₓ)₂PO₄(F_{y}OH_{1-y}) wherein 0<x<1 and 0<y<1.

An anti-perovskite compound, as used herein, refers to a compound that is isostructural with perovskite, i.e., CaTiO₃, except that the anion and cation positions are reversed, such as in Li₃OBr.

A silicate compound, as used herein, refers to a compound that is isostructural with a compound having silicate of the formula [SiO^{(4-2x)-}₍₄₋ₓ₎], wherein 0≤X<2.

A borate compound, as used herein, refers to a compound that is isostructural with borate comprising BO₃ or BO₄ units, such as Ca₃(BO₃)₂.

Hereinafter, according to an embodiment, a positive electrode, a lithium-air battery including the positive electrode, and a method of preparing the positive electrode will be described in further detail.

The positive electrode according to an embodiment may use oxygen as a positive active material and include a porous layer and a barrier layer disposed on a, e.g., one, surface of the porous layer, wherein the barrier layer may include a first lithium-containing metal oxide. A porosity of the porous layer may be greater than a porosity of the barrier layer in the positive electrode.

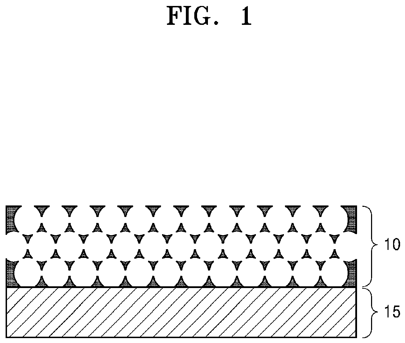

As shown in FIG. 1, a barrier membrane 15 may be disposed on a, e.g., one, surface of a positive electrode 10 to help prevent contact between air introduced from the outside in a lithium-air battery and a lithium metal negative electrode. Although it is not shown in FIG. 1, an electrolyte layer and a lithium metal negative electrode may be sequentially disposed on a, e.g., one, surface of the barrier membrane 15. As the additional barrier membrane 15 is disposed on the positive electrode 10, the structure of the lithium-air battery may be complicated. In addition, an additional interfacial resistance may be generated between the positive electrode 10 and the barrier membrane 15 and an internal resistance of the lithium-air battery may be increased.

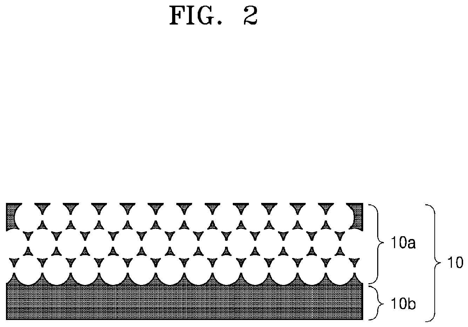

In contrast, as shown in FIG. 2, the positive electrode 10 according to an embodiment may include a porous layer 10a and a barrier layer 10b disposed on a, e.g., one, surface of the porous layer 10a, wherein the barrier layer 10b may include a first lithium-containing metal oxide. That is, as the positive electrode 10 has a structure including the barrier layer 10b including the first lithium-containing metal oxide, in addition to the porous layer 10a, a separate barrier membrane is omitted. Accordingly, the structure of the lithium-air battery may be simple, and an interfacial resistance between a positive electrode and a separate barrier membrane may be prevented. The lithium-air battery may have a reduced internal resistance, and cycle characteristics of the lithium-air battery may be improved. In addition, as the barrier layer 10b includes the first lithium-containing metal oxide, the barrier layer 10b may provide lithium ionic conductivity as well as barrier characteristics. The first lithium-containing metal oxide may be an oxide including lithium and at least one metal other than lithium.

As the barrier layer 10b includes the first lithium-containing metal oxide, and the first lithium-containing metal oxide has electron conductive characteristics in addition to lithium ion conductive characteristics, the barrier layer 10b may have the same electronic conductivity as the porous layer 10a, and the barrier layer 10b may be different from an electrically insulating barrier membrane that only has lithium ionic conductivity and does not have electronic conductivity.

The barrier layer 10b may have, for example, a monolithic structure with the porous layer 10a. As the barrier layer 10b has a monolithic structure with the porous layer 10a, the structure and manufacturing process of a lithium-air battery may be simpler. In addition, as the barrier layer 10b has a monolithic structure with the porous layer 10a, deterioration that occurs at an interface between the barrier layer 10b and the porous layer 10a may be prevented, and a lithium-air battery including the positive electrode may have improved lifespan characteristics.

A relative density of the barrier layer 10b may be, for example, 70% or greater, 75 % or greater, 80 % or greater, 85 % or greater, 90 % or greater, 95 % or greater, 96 % or greater, 97 % or greater, 98 % or greater, or 99 % or greater. A relative density of the barrier layer 10b may be, for example, in a range of about 70 % to about 100 %, about 75 % to about 100 %, about 80 % to about 100 %, about 85 % to about 100 %, about 90 % to about 100 %, about 95 % to about 100 %, about 96 % to about 100 %, about 97 % to about 100 %, about 98 % to about 100 %, or about 99 % to about 100 %. When the barrier layer 10b has a high relative density within any of these ranges, the barrier layer 10b may have a denser structure, and the barrier layer 10b may have further improved barrier characteristics.

The porosity of the barrier layer 10b may be, for example, 10 % or less, 5 % or less, 1 % or less, 0.5 % or less, 0.1 % or less, 0.01 % or less, or 0.001 % or less, based on a total volume of the barrier layer. When the barrier layer 10b has a low porosity within any of these ranges, the barrier layer 10b may have a denser structure.

The content of the first lithium-containing metal oxide included in the barrier layer 10b may be 50 wt% or greater, 60 wt% or greater, 70 wt% or greater, 75 wt% or greater, 80 wt% or greater, 85 wt% or greater, 90 wt% or greater, 95 wt% or greater, 96 wt% or greater, 97 wt% or greater, 98 wt% or greater, or 99 wt% or greater, based on the total weight of the barrier layer 10b. The content of the first lithium-containing metal oxide included in the barrier layer 10b may be, for example, in a range of about 60 wt% to about 100 wt%, about 70 wt% to about 100 wt%, about 75 wt% to about 100 wt%, about 80 wt% to about 100 wt%, about 85 wt% to about 100 wt%, about 90 wt% to about 100 wt%, about 95 wt% to about 100 wt%, about 96 wt% to about 100 wt%, about 97 wt% to about 100 wt%, about 98 wt% to about 100 wt%, or about 99 wt% to about 100 wt%. When the barrier layer 10b has a content of the first lithium-containing metal oxide within any of these ranges, the barrier layer 10b may be dense and provide chemically stable barrier characteristics.

The barrier layer 10b may further include at least one of a second lithium-containing metal oxide or a lithium salt. As the barrier layer 10b further includes at least one of a second lithium-containing metal oxide or a lithium salt, the barrier layer 10b may have a further improved relative density. As the barrier layer 10b has further improved relative density, the barrier layer 10b may have further improved barrier characteristics.

The melting point of the second lithium-containing metal oxide included in the barrier layer 10b may be lower than the melting point of the first lithium-containing metal oxide. As the melting point of the second lithium-containing metal oxide is lower than the melting point of the first lithium-containing metal oxide, the second lithium-containing metal oxide may be melted among the first lithium-containing metal oxide particles, first lithium-containing metal oxide particles may be bound to one another or spacing among, e.g., between, the first lithium-containing metal oxide particles may be charged, and the relative density of the barrier layer 10b may be improved. The second lithium-containing metal oxide may be at least one of a lithium ionic conductor or an electronic conductor.

For example, the second lithium-containing metal oxide included in the barrier layer 10b may be at least one of Li₂B₄O₇, Li_{1+x+y}AlₓTi₂₋ₓSi_{y}P_{3-y}O₁₂ (wherein 0<x<2 and 0≤y<3), BaTiO₃, Pb(ZrₐTi₁₋ₐ)O₃ ("PZT") (wherein 0≤a≤1), Pb₁₋ₓLaₓZr_{1-y}Ti_{y}O₃ ("PLZT") (wherein 0≤x<1 and 0≤y<1), Pb(Mg_{1/3}Nb_{2/3})O₃-PbTiO₃ ("PMN-PT"), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(AlₐGa₁₋ₐ)ₓ(Ti_{b}Ge_{1-b})₂₋ₓSi_{y}P_{3-y}O₁₂ (wherein 0≤x≤1, 0≤y≤1, 0≤a≤1, and 0≤b≤1, LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (wherein M is Te, Nb, or Zr, and x may be an integer from 1 to 10), Li₇La₃Zr₂O₁₂ ("LLZO"), or Li₃₊ₓLa₃Zr₂₋ₐMₐO₁₂ (M-doped LLZO, wherein M is Ga, W, Nb, Ta, or Al, and x may be an integer from 1 to 10, 0<a<2).

For example, the lithium salt included in the barrier layer 10b may be at least one of LiCI, LiF, LiBr, Lil, LiPF₆, LiBF₄, LiAsF₆, LiClO₄, LiNO₃, lithium bis(oxalato) borate ("LiBOB"), LiN(SO₂CF₃)₂, LiN(SO₂C₂F₅)₂, LiC(SO₂CF₃)₃, LiN(SO₃CF₃)₂, LiC₄F₉SO₃, LiAlCl₄, or lithium trifluoromethanesulfonate (LiCF₃SO₃, "LiTfO").

The thickness of the barrier layer 10b may be, for example, 500 % or less, 450 % or less, 400 % or less, 350 % or less, 300 % or less, 250 % or less, 200 % or less, 150 % or less, 100 % or less, 50 % or less, 45 % or less, 40 % or less, 35 % or less, 30 % or less, 25 % or less, 20 % or less, 15 % or less, 10 % or less, or 5 % or less than the thickness of the porous layer 10a. The thickness of the barrier layer 10b may be, for example, in a range of about 0.1 % to about 500 %, about 1 % to about 450 %, about 1 % to about 400 %, about 1 % to about 350 %, about 1 % to about 300 %, about 1 % to about 250 %, about 1 % to about 200 %, about 1 % to about 150 %, about 1 % to about 100 %, about 0.1 % to about 50 %, about 1 % to about 45 %, about 1 % to about 40 %, about 1 % to about 35 %, about 1 % to about 30 %, about 1 % to about 25 %, about 1 % to about 20 %, about 1 % to about 15 %, about 1 % to about 10 %, or about 1 % to about 5 % of the thickness of the porous layer 10a. When the barrier layer 10b has a small thickness within any of these ranges, the thickness of the porous layer 10a included in the positive electrode 10 may increase, and the lithium-air battery may have an improved energy density.

In an embodiment, the barrier layer 10b may have moisture barrier characteristics and gas barrier characteristics. As the barrier layer 10b has barrier characteristics preventing at least one of moisture or gas, lithium metal negative electrode may be isolated and protected from the external environment, and deterioration of the lithium metal negative electrode may be prevented and lifespan characteristics of the lithium-air battery may be improved. Gas prevented by the barrier layer 10b may be, for example, negative electrode corrosive gases such as oxygen, steam, or carbon dioxide. The barrier layer 10b may serve as an oxygen barrier layer, a moisture blocking layer, or a carbon dioxide barrier layer. The gas permeability of the barrier layer 10b may be, for example, in a range of about 0.001 to about 2,000 cubic centimeters for a 1 centimeter film thickness per square meter per day under a pressure difference of 1 atmosphere (cm³cm/m² day atm). The term "gas" as used herein is construed as including at least one of oxygen, carbon dioxide, or water vapor. The gas permeability may be, for example, oxygen permeability, carbon dioxide permeability, or water vapor permeability.

The porous layer 10a may include, for example, the first lithium-containing metal oxide. Accordingly, as the porous layer 10a and the barrier layer 10b includes the same first lithium-containing metal oxide, composition uniformity of the positive electrode 10 may be improved.

As the positive electrode 10 includes the porous layer 10a and the barrier layer 10b, and the porous layer 10a and the barrier layer 10b includes the first lithium-containing metal oxide, decomposition due to, for example, radical accompanied during electrochemical reactions may be prevented in the positive electrode 10, as compared with a positive electrode including a carbonaceous conductive agent, and a lithium-air battery 100 including the positive electrode 10 may have improved charging and discharging characteristics.

As shown in FIG. 1, when the positive electrode 10 is connected to the barrier membrane 15 by heat treatment or the like to enhance lithium ionic conductivity between the positive electrode 10 and the barrier membrane 15, as the composition of the positive electrode 10 differs from the composition of the barrier membrane 15, during heat treatment, an additional phase may be generated at an interface between the positive electrode 10 and the barrier membrane 15 by interactive diffusion and may serve as a resistive layer. In contrast, as shown in FIG. 2, as the porous layer 10a and the barrier layer 10b included in the positive electrode 10 according to an embodiment includes the same first lithium-containing metal oxide, generation of an additional phase by interactive diffusion may be suppressed, and generation of a resistive layer may be prevented. An interfacial resistance between the porous layer 10a and the barrier layer 10b may be prevented, the internal resistance of the positive electrode 10 may be decreased, and the lithium-air battery may have a decreased internal resistance and improved cycle characteristics. For example, the content of the first lithium-containing metal oxide included in the porous layer 10a and that of the barrier layer 10b may be identical to each other. In an embodiment, the composition of the porous layer 10a may be identical to the composition of the barrier layer 10b. In an embodiment, the positive electrode 10 may have a monolithic structure of the porous layer 10a and the barrier layer 10b.

For example, the porosity of the porous layer 10a may be 10 % or greater, 20 % or greater, 30 % or greater, 40 % or greater, 50 % or greater, 55 % or greater, 60 % or greater, 65 % or greater, 70 % or greater, 75 % or greater, 80 % or greater, 85 % or greater, or 90 % or greater, based on a total volume of the porous layer 10a. For example, the porosity of the porous layer 10a may be in a range of about 50 % to about 99 %, about 51 % to about 99 %, about 55 % to about 99 %, about 60 % to about 99 %, about 65 % to about 95 %, about 70 % to about 95 %, about 75 % to about 95 %, about 80 % to about 95 %, about 85 % to about 95 %, or about 90 % to about 95 %, based on a total volume of the porous layer 10a. The porosity is a volume of pores relative to the total volume of the porous layer 10a. When the porous layer 10a has a high porosity within such ranges, an energy density of a lithium-air battery including the positive electrode 10 may be increased.

The local porosity of the porous layer 10a may be, for example, different depending on the position in the porous layer 10a. In an embodiment, the porous layer 10a may include a, e.g., one, surface adjacent to the barrier layer 10b and another surface facing the surface adjacent to the barrier layer 10b, and the porosity in a peripheral area of the surface adjacent to the barrier layer 10b may be less than or greater than the porosity in a peripheral area of the other surface. In an embodiment, the porosity of the porous layer 10a in a peripheral area of the surface adjacent to the barrier layer 10b may be 50 % or greater, and the porosity of the porous layer 10a in a peripheral area of the other surface facing the surface may be 50 % or less. In an embodiment, the porosity of the porous layer 10a in a peripheral area of the surface adjacent to the barrier layer 10b may be in a range of about 50 % to about 99 %, and the porosity of the porous layer 10a in a peripheral area of the other surface facing the surface may be about 1 % to about 50 %. In an embodiment, the porous layer 10a may have a porosity gradient from a, e.g., one, surface adjacent to the barrier layer 10b to the other surface facing the surface. In an embodiment, the porous layer 10a may have the highest porosity in a, e.g., one, surface adjacent to the barrier layer 10b, and the porous layer 10a may have the lowest porosity in the other surface facing the surface. In an embodiment, the porous layer 10a may have the lowest porosity in a, e.g., one, surface adjacent to the barrier layer 10b, and the porous layer 10a may have the highest porosity in the other surface facing the surface.

For example, a loading level of the porous layer 10a may be 4 milligrams per square centimeter (mg/cm²) or greater, 4.2 mg/cm² or greater, 4.4 mg/cm² or greater, 4.6 mg/cm² or greater, 4.8 mg/cm² or greater, 5 mg/cm² or greater, 5.2 mg/cm² or greater, 5.4 mg/cm² or greater, 5.6 mg/cm² or greater, or 5.8 mg/cm² or greater. For example, a loading level of the porous layer 10a may be in a range of about 4 mg/cm² to about 100 mg/cm², about 4 mg/cm² to about 50 mg/cm², about 4 mg/cm² to about 30 mg/cm², about 4 mg/cm² to about 20 mg/cm², about 4 mg/cm² to about 10 mg/cm², about 4.2 mg/cm² to about 9.5 mg/cm², about 4.4 mg/cm² to about 9 mg/cm², about 4.6 mg/cm² to about 8.5 mg/cm², about 4.8 mg/cm² to about 8 mg/cm², about 5 mg/cm² to about 8 mg/cm², about 5.2 mg/cm² to about 7.5 mg/cm², about 5.4 mg/cm² to about 7 mg/cm², about 5.6 mg/cm² to about 7 mg/cm², or about 5.8 mg/cm² to about 7 mg/cm². By having a high loading level of the porous layer 10a within such ranges and a porosity of 50 % or greater, a battery having a high energy density of 800 watt-hours per kilogram (Wh/kg) or greater may be realized. The loading level is a weight of the first lithium-containing metal oxide disposed on a unit area of the porous layer 10a.

The thickness of the porous layer 10a may be, for example, about 1 µm to about 1,000 µm, about 1 µm to about 500 µm, about 1 µm to about 400 µm, about 1 µm to about 300 µm, about 1 µm to about 200 µm, about 1 µm to about 100 µm, about 1 µm to about 80 µm, about 1 µm to about 70 µm, about 1 µm to about 60 µm, about 1 µm to about 50 µm, about 5 µm to about 45 µm, about 10 µm to about 40 µm, or about 20 µm to about 40 µm. When the thickness of the porous layer 10a is less than 1 µm, for example, the mechanical strength may be weak, and when the thickness of the porous layer 10a is greater than 1,000 µm, for example, the battery may have a deteriorated, e.g., decreased, energy density. For example, the thickness of the barrier layer 10b may be 50 % or less than the thickness of the porous layer 10a. For example, the thickness of the barrier layer 10b may be 40 % or less, 30 % or less, 20 % or less, or 10 % or less than the thickness of the porous layer 10a.

The size of a pore included in the porous layer 10a may be, for example, 1 µm or less, 900 nm or less, 800 nm or less, 700 nm or less, 600 nm or less, 500 nm or less, 400 nm or less, 300 nm or less, or 200 nm or less. The size of a pore included in the porous layer 10a may be in a range of, for example, about 1 nm to about 1,000 nm, about 10 nm to about 900 nm, about 50 nm to about 800 nm, about 100 nm to about 700 nm, about 100 nm to about 600 nm, about 100 nm to about 500 nm, about 100 nm to about 400 nm, about 100 nm to about 300 nm, or about 100 nm to about 200 nm. The porous layer 10a may provide a high specific surface area by including small pores having a size of less than 1 µm. The area of a reaction site where an electrode reaction may occur in the positive electrode including the porous layer 10a may increase, and high rate characteristics of a battery including the porous layer 10a may be improved.

The pores included in the porous layer 10a may be irregularly and non-periodically arranged in the porous layer 10a, and the porous layer 10a including irregular and non-periodic pores may be distinguished from a porous layer formed of inorganic materials including periodic and ordered pores prepared by anodic oxidation. The pores included in the porous layer 10a may be, for example, open pores.

The positive electrode 10 including the porous layer 10a and barrier layer 10b may be, for example, an inorganic film. The positive electrode 10 may be formed of, for example, a lithium-containing metal oxide. For example, the positive electrode 10 may not include a carbonaceous material such as a porous carbonaceous conductive agent and may be a film including the porous layer 10a and the barrier layer 10b. For example, the positive electrode 10 may be a film that does not contain organic components such as an organic binder. The term "inorganic membrane" as used herein refers to a porous membrane that may be essentially inorganic and does not contain organic substances. The porous inorganic film may unintentionally include organic components used in a manufacturing process, residues thereof, or variations thereof. However, the content of these organic components, residues thereof, or variations thereof may be 1 wt% or less, 0.5 wt% or less, 0.1 wt% or less, 0.05 wt% or less, 0.01 wt% or less, 0.001 wt% or less of the total weight of the porous inorganic film. In an embodiment, due to, for example, at least one of evaporation or decomposition of organic components upon thermal gravimetric analysis ("TGA") analysis at a temperature of about 25 °C to about 900 °C, the inorganic film may undergo a weight change of 1 wt% or less, 0.5 wt% or less, 0.1 wt% or less, 0.05 wt% or less, 0.01 wt% or less, or 0.001 wt% or less. The positive electrode 10 may be, for example, a self-standing film, and the positive electrode 10 may be easy to handle and transport and may be applied to, e.g., used in, various types of lithium-air batteries. The term "self-standing film" as used herein refers to a film that maintains a film shape without a support layer.

The shape of the positive electrode 10 is not particularly limited. The positive electrode may have any suitable form of a positive electrode that may be used in lithium-air batteries. For example, the positive electrode may have a two-dimensional structure such as a sheet form or a three-dimensional structure such as a tube form.

For example, the positive electrode 10 may not conduct proton ions (H⁺), and thus, the positive electrode 10 may be distinguished from the electrode or electrolyte membrane used for fuel batteries. For example, at least one of a positive electrode or an electrolyte membrane of fuel batteries conducts proton ions, however, the positive electrode 10 according to an embodiment may not conduct proton ions. The positive electrode 10 is a non-flexible film that may not be bendable or flexible, and the positive electrode 10 may be distinguished from the electrode used in lithium ion batteries. In an embodiment, a positive electrode of a lithium-ion battery that does not use oxygen as a positive active material may be bendable or flexible, however, the positive electrode 10 according to an embodiment may not be bendable or flexible. The first lithium-containing metal oxide included in at least one of the porous layer 10a or the barrier layer 10b may be, for example, a crystalline lithium ionic conductor. The first lithium-containing metal oxide may be crystalline by including lithium, and the first lithium-containing metal oxide may provide a migration pathway for lithium ions. Accordingly, the first lithium-containing metal oxide may be a lithium ionic conductor. As the first lithium-containing metal oxide is a lithium ionic conductor, the positive electrode 10 may not further include a separate electrolyte.

The first lithium-containing metal oxide included in at least one of the porous layer 10a or the barrier layer 10b may be, for example, a crystalline electronic conductor. As the first lithium-containing metal oxide may be crystalline and have electronic conductivity, the first lithium-containing metal oxide may provide a migration pathway for electrons. Accordingly, the first lithium-containing metal oxide may be an electronic conductor. As the first lithium-containing metal oxide is an electronic conductor, the positive electrode 10 may not further include a separate conductive agent.

The first lithium-containing metal oxide included in at least one of the porous layer 10a or the barrier layer 10b may be, for example, a mixed conductor having lithium ionic conductivity and electronic conductivity. The mixed conductor may have, for example, an electronic conductivity of 1×10⁻⁶ siemens per centimeter (S/cm) or greater and an ionic conductivity of 1.0×10⁻⁷ S/cm or greater, for example, 2.0×10⁻⁷ S/cm or greater. In an embodiment, the mixed conductor may have, for example, an electronic conductivity in a range of about 1×10⁻⁶ S/cm to about 5.0×10⁻¹ S/cm. In an embodiment, the mixed conductor may have, for example, an ionic conductivity in a range of about 1.0×10⁻⁷ S/cm to about 1.0×10⁻¹ S/cm, for example, in a range of about 2.0×10⁻⁷ S/cm to about 1.0×10⁻¹ S/cm. The mixed conductor may have, for example, an electronic conductivity of 5.0×10⁻⁶ S/cm or greater and an ionic conductivity of 5.0×10⁻⁷ S/cm or greater. The mixed conductor may have, for example, an electronic conductivity of 1.0×10⁻⁵ S/cm or greater and an ionic conductivity of 1.0×10⁻⁶ S/cm or greater. The mixed conductor may have, for example, an electronic conductivity of 5.0×10⁻⁵ S/cm or greater and an ionic conductivity of 5.0×10⁻⁶ S/cm or greater. The mixed conductor may have, for example, an electronic conductivity of 1.0×10⁻⁴ S/cm or greater and an ionic conductivity of 1.0×10⁻⁵ S/cm or greater. The mixed conductor may have, for example, an electronic conductivity of 5.0×10⁻⁴ S/cm or greater and an ionic conductivity of 5.0×10⁻⁵ S/cm or greater. The mixed conductor may have, for example, an electronic conductivity of 1.0×10⁻³ S/cm or greater and an ionic conductivity of 1.0×10⁻⁴ S/cm or greater. The mixed conductor may have, for example, an electronic conductivity of 5.0×10⁻³ S/cm or greater and an ionic conductivity of 5.0×10⁻⁴ S/cm or greater. The mixed conductor may have, for example, an electronic conductivity of 1.0×10⁻² S/cm or greater and an ionic conductivity of 1.0×10⁻³ S/cm or greater. The mixed conductor may have, for example, an electronic conductivity of 1.0×10⁻¹ S/cm or greater and an ionic conductivity of 1.0×10⁻² S/cm or greater. As the first lithium-containing metal oxide provides ionic conductivity and electronic conductivity simultaneously as a mixed conductor, the positive electrode 10 may have gas and moisture barrier characteristics by using the porous layer 10b and the barrier layer 10b, each including the first lithium-containing metal oxide, without a separate conductive agent and a separate electrolyte.

For example, the first lithium-containing metal oxide may be at least one compound of a spinel compound or a perovskite compound. When the first lithium-containing metal oxide includes a compound having such a crystalline structure, decomposition of the positive electrode 10 due to, for example, radicals or the like accompanied during electrochemical reactions may be further prevented.

For example, the first lithium-containing metal oxide may include a perovskite compound represented by Formula 1:

Formula 1 LiₓA_{y}G_{z}O_{3-δ}

wherein, in Formula 1, A and G may each independently be at least one metal element of Groups 2 to 16 of the Periodic Table of Elements, δ may be oxygen vacancy, and 0<x<1, 0<y<1, 0<x+y≤1, O<z≤1.5, and 0≤δ≤1.5.

The perovskite compound is a compound having a perovskite crystalline structure or a perovskite-like crystalline structure.

In an embodiment, in Formula 1, A may be at least one of Ca, Sr, Ba, Y, La, Ce, Pr, Nd, Pm, Sm, Gd, Tb, Dy, Ho, or Er, G may be at least one of Ti, Pd, Pb, Fe, Ir, Co, Rh, Mn, Cr, Ni, Ru, Re, Sn, V, Ge, W, Zr, Mo, Hf, U, Nb, Th, Ta, Bi, Ca, Sr, Ba, Y, La, Ce, Pr, Nd, Pm, Sm, Gd, Tb, Dy, Ho, Er, Mg, Al, Sc, Zn, Ga, Rb, Ag, Cd, In, Sb, Pt, or Au, δ may be oxygen vacancy, and 0.2<x:50.7, 0<y≤0.7, 0<x+y<1, 0<z≤1.2, and 0≤δ≤1.2.

In an embodiment, in Formula 1, A may be at least one of La, Ce, Pr, Gd, Ca, Sr, or Ba, G may be at least one of Ti, Mn, Ni, Ru, Cr, Co, Ir, Fe, Pd, Pb, Rh, Sn, V, Re, Ge, W, Zr, Mo, Nb, Ta, Hf, or Bi, δ may be oxygen vacancy, and 0.2<x≤0.5, 0.4<y≤0.7, 0<x+y<1, 0.8<z≤1.2, 0≤δ≤1.0.

The perovskite compound may have, for example, an ABO₃ phase. For example, at least one of vacancy and lithium (Li) may be arranged at sites of A and the ABO₃ phase may have an orthorhombic, cubic, monoclinic, or triclinic crystalline phase with oxygen defects. In addition, the lithium concentration in the A site may be optimized, and thus, lithium ion conduction may be excellent, and the electronic conductivity may be increased by introducing a metal (G) with low oxygen defect generation energy at the B site.

For example, the perovskite compound may include a GO₆ octahedron, the GO₆ octahedron may include vertices of six oxygens and have a structure in which G of Formula 1 may be located in the center of the octahedron, and the octahedron may share corners of the octahedron (corner sharing). In addition, lanthanum (La), lithium (Li), and vacancy may be randomly distributed according to the composition, e.g., composition ratio, in a space formed by connecting the vertices of the octahedron. For example, in the perovskite compound, lithium ions may be conducted through an empty layer in lanthanum (La), and electrons may be conducted through a metal (G) ion layer.

For example, an X-ray diffraction analysis of the perovskite compound may provide a main peak at a diffraction angle of 2θ=32.5°±2.5°, and a minor peak at a diffraction angle 2θ of at least one of 46.5°±2.5° or 57.5°±2.5°. The "main peak" refers to the highest peak in terms of intensity, and the "minor peak" has a lower intensity than the main peak.

For example, a ratio (I_{b}:Iₐ) of a peak intensity (I (46.5°±2.5°):I_{b}) at a diffraction angle 2θ=46.5°±2.5° to a peak intensity (I (32.5°±2.5°):Iₐ) at a diffraction angle 2θ=32.5°±2.5° of X-ray diffraction of the perovskite compound may be 0.1:1 or greater, for example, about 0.1:1 to about 0.9:1, or for example, about 0.2:1 to about 0.6:1. A ratio ((I_{c}:Iₐ) of a peak intensity (I (57.5°±2.5°):I_{c}) at a diffraction angle 2θ=57.5°±2.5° to a peak intensity (I (32.5°±2.5°):lₐ) at a diffraction angle 2θ=32.5°±2.5° of X-ray diffraction of the perovskite material may be 0.1:1 or greater, for example, about 0.1:1 to about 0.9:1, for example, about 0.2:1 to about 0.6:1, or for example about 0.2:1 to about 0.4:1.

For example, the perovskite compound may include at least one of Li_{0.34}La_{0.55}TiO_{3-δ} (wherein 0≤δ≤1.0), Li₀.₃₄La₀.₅₅MnO_{3-δ} (wherein 0≤δ≤1.0), Li_{0.34}La₀.₅₅NiO_{3-δ} (wherein 0≤δ≤1.0), Li_{0.34}La_{0.55}CrO_{3-δ} (wherein 0≤δ≤1.0), Li_{0.34}La_{0.55}CoO_{3-δ} (wherein 0≤δ≤1.0), Li_{0.34}La_{0.55}IrO_{3-δ} (wherein 0≤δ≤1.0), Li_{0.34}La_{0.55}RuO_{3-δ} (wherein 0≤δ≤1.0), Li_{0.34}La_{0.55}FeO_{3-δ} (wherein 0≤δ≤1.0), Li_{0.34}La_{0.55}PdO_{3-δ} (wherein 0≤δ≤1.0), Li_{0.34}La_{0.55}PbO_{3-δ} (wherein 0≤δ≤1.0), Li_{0.34}La_{0.55}RhO_{3-δ} (wherein 0≤δ≤1.0), Li_{0.34}La_{0.55}SnO_{3-δ} (wherein 0≤δ≤1.0), Li_{0.34}La_{0.55}VO_{3-δ} (wherein 0≤δ≤1.0), Li_{0.34}La_{0.55}ReO_{3-δ} (wherein 0≤δ≤1.0), Li_{0.34}La_{0.55}GeO_{3-δ} (wherein 0≤δ≤1.0), Li_{0.34}La_{0.55}WO_{3-δ} (wherein 0≤δ≤1.0), Li_{0.34}La_{o.55}ZrO_{3-δ} (wherein 0≤δ≤1.0), Li_{0.34}La_{0.55}MoO_{3-δ} (wherein 0≤δ≤1.0), Li_{0.34}La_{0.55}NbO_{3-δ} (wherein 0≤δ≤1.0), Li₀.₃₄La₀.₅₅TaO_{3-δ} (wherein 0≤δ≤1.0), Li_{0.34}La_{0.55}HfO_{3-δ} (wherein 0≤δ≤1.0), Li_{0.34}La_{0.55}BiO_{3-δ} (wherein 0≤δ≤1.0), Li₀.₁₀La_{0.63}TiO_{3-δ} (wherein 0≤δ≤1.0), Li_{0.10}La_{0.63}MnO_{3-δ} (wherein 0≤δ≤1.0), Li_{0.10}La_{0.63}NiO_{3-δ} (wherein 0≤δ≤1.0), Li_{0.10}La_{0.63}CrO_{3-δ} (wherein 0≤δ≤1.0), Li_{0.10}La_{0.63}CoO_{3-δ} (wherein 0≤δ≤1.0), Li_{0.10}La_{0.63}IrO_{3-δ} (wherein 0≤δ≤1.0), Li_{0.10}La_{0.63}RuO_{3-δ} (wherein 0≤δ≤1.0), Li_{0.10}La_{0.63}FeO_{3-δ} (wherein 0≤δ≤1.0), Li_{0.10}La_{0.63}PdO_{3-δ} (wherein 0≤δ≤1.0), Li_{0.10}La_{0.63}PbO_{3-δ} (wherein 0≤δ≤1.0), Li_{0.10}La_{0.63}RhO_{3-δ} (wherein 0≤δ≤1.0), Li_{0.10}La_{0.63}SnO_{3-δ} (wherein 0≤δ≤1.0), Li_{0.10}La_{0.63}VO_{3-δ} (wherein 0≤δ≤1.0), Li_{0.10}La_{0.63}ReO_{3-δ} (wherein 0≤δ≤1.0), Li_{0.10}La_{0.63}GeO_{3-δ} (wherein 0≤δ≤1.0), Li_{0.10}La_{0.63}WO_{3-δ} (wherein 0≤δ≤1.0), Li_{0.10}La_{0.63}ZrO_{3-δ} (wherein 0≤δ≤1.0), Li_{0.10}La_{0.63}MoO_{3-δ} (wherein 0≤δ≤1.0), Li_{0.10}La_{0.63}NbO_{3-δ} (wherein 0≤δ≤1.0), Li_{0.10}La_{0.63}TaO_{3-δ} (wherein 0≤δ≤1.0), Li_{0.10}La_{0.63}HfO_{3-δ} (wherein 0≤δ≤1.0), Li_{0.10}La_{0.63}BiO_{3-δ} (wherein 0≤δ≤1.0), Li_{0.20}La_{0.60}TiO_{3-δ} (wherein 0≤δ≤1.0), Li_{0.20}La_{0.60}MnO_{3-δ} (wherein 0≤δ≤1.0), Li_{0.20}La_{0.60}NiO_{3-δ} (wherein 0≤δ≤1.0), Li_{0.20}La_{0.60}CrO_{3-δ} (wherein 0≤δ≤1.0), Li_{0.20}La_{0.60}CoO_{3-δ} (wherein 0≤δ≤1.0), Li_{0.20}La_{0.60}IrO_{3-δ} (wherein 0≤δ≤1.0), Li_{0.20}La_{0.60}RuO_{3-δ} (wherein 0≤δ≤1.0), Li_{0.2}La_{0.60}FeO_{3-δ} (wherein 0≤δ≤1.0), Li_{0.20}La_{0.60}PdO_{3-δ} (wherein 0≤δ≤1.0), Li_{0.20}La_{0.60}PbO_{3-δ} (wherein 0≤δ≤1.0), Li_{0.20}La_{0.60}RhO_{3-δ} (wherein 0≤δ≤1.0), Li_{0.20}La_{0.60}SnO_{3-δ} (wherein 0≤δ≤1.0), Li_{0.20}La_{0.60}VO_{3-δ} (wherein 0≤δ≤1.0), Li_{0.20}La_{0.60}ReO_{3-δ} (wherein 0≤δ≤1.0), Li_{0.20}La_{0.60}GeO_{3-δ} (wherein 0≤δ≤1.0), Li_{0.20}La_{0.60}WO_{3-δ} (wherein 0≤δ≤1.0), Li_{0.20}La_{0.60}ZrO_{3-δ} (wherein 0≤δ≤1.0), Li_{0.20}La_{0.60}MoO_{3-δ} (wherein 0≤δ≤1.0), Li_{0.20}La_{0.60}NbO_{3-δ} (wherein 0≤δ≤1.0), Li_{0.20}La_{0.60}TaO_{3-δ} (wherein 0≤δ≤1.0), Li_{0.20}La_{0.60}HfO_{3-δ} (wherein 0≤δ≤1.0), Li_{0.20}La_{0.60}BiO_{3-δ} (wherein 0≤δ≤1.0), Li_{0.30}La_{0.57}TiO_{3-δ} (wherein 0≤δ≤1.0), Li_{0.30}La_{0.57}MnO_{3-δ} (wherein 0≤δ≤1.0), Li_{0.30}La_{0.57}NiO_{3-δ} (wherein 0≤δ≤1.0), Li_{0.30}La_{0.57}CrO_{3-δ} (wherein 0≤δ≤1.0), Li_{0.30}La_{0.57}CoO_{3-δ} (wherein 0≤δ≤1.0), Li_{0.30}La_{0.57}IrO_{3-δ} (wherein 0≤δ≤1.0), Li_{0.30}La_{0.57}RuO_{3-δ} (wherein 0≤δ≤1.0), Li_{0.30}La_{0.57}FeO_{3-δ} (wherein 0≤δ≤1.0), Li_{0.30}La_{0.57}PdO_{3-δ} (wherein 0≤δ≤1.0), Li_{0.30}La_{0.57}PbO_{3-δ} (wherein 0≤δ≤1.0), Li_{0.30}La_{0.57}RhO_{3-δ} (wherein 0≤δ≤1.0), Li_{0.30}La₀.₅₇SnO_{3-δ} (wherein 0≤δ≤1.0), Li_{0.30}La_{0.57}VO_{3-δ} (wherein 0≤δ≤1.0), Li_{0.30}La_{0.57}ReO_{3-δ} (wherein 0≤δ≤1.0), Li_{0.30}La_{0.57}GeO_{3-δ} (wherein 0≤δ≤1.0), Li_{0.30}La_{0.57}WO_{3-δ} (wherein 0≤δ≤1.0), Li_{0.30}La_{0.57}ZrO_{3-δ} (wherein 0≤δ≤1.0), Li_{0.30}La_{0.57}MoO_{3-δ} (wherein 0≤δ≤1.0), Li_{0.30}La_{0.57}NbO_{3-δ} (wherein 0≤δ≤1.0), Li_{0.30}La_{0.57}TaO_{3-δ} (wherein 0≤δ≤1.0), Li_{0.30}La_{0.57}HfO_{3-δ} (wherein 0≤δ≤1.0), Li_{0.30}La_{0.57}BiO_{3-δ} (wherein 0≤δ≤1.0), Li_{0.40}La_{0.53}TiO_{3-δ} (wherein 0≤δ≤1.0), Li_{0.40}La_{0.53}MnO_{3-δ} (wherein 0≤δ≤1.0), Li_{0.40}La_{0.53}NiO_{3-δ} (wherein 0≤δ≤1.0), Li_{0.40}La_{0.53}CrO_{3-δ} (wherein 0≤δ≤1.0), Li_{0.40}La_{0.53}CoO_{3-δ} (wherein 0≤δ≤1.0), Li_{0.40}La_{0.53}IrO_{3-δ} (wherein 0≤δ≤1.0), Li_{0.40}La_{0.53}RuO_{3-δ} (wherein 0≤δ≤1.0), Li_{0.40}La_{0.53}FeO_{3-δ} (wherein 0≤δ≤1.0), Li_{0.40}La_{0.53}PdO_{3-δ} (wherein 0≤δ≤1.0), Li_{0.40}La_{0.53}PbO_{3-δ} (wherein 0≤δ≤1.0), Li_{0.40}La_{0.53}RhO_{3-δ} (wherein 0≤δ≤1.0), Li_{0.40}La_{0.53}SnO_{3-δ} (wherein 0≤δ≤1.0), Li_{0.40}La_{0.53}VO_{3-δ} (wherein 0≤δ≤1.0), Li_{0.40}La_{0.53}ReO_{3-δ} (wherein 0≤δ≤1.0), Li_{0.40}La_{0.53}GeO_{3-δ} (wherein 0≤δ≤1.0), Li_{0.40}La_{0.53}WO_{3-δ} (wherein 0≤δ≤1.0), Li_{0.40}La_{0.53}ZrO_{3-δ} (wherein 0≤δ≤1.0), Li_{0.40}La_{0.53}MoO_{3-δ} (wherein 0≤δ≤1.0), Li_{0.40}La_{0.53}NbO_{3-δ} (wherein 0≤δ≤1.0), Li_{0.40}La_{0.53}TaO_{3-δ} (wherein 0≤δ≤1.0), Li_{0.40}La_{0.53}HfO_{3-δ} (wherein 0≤δ≤1.0), Li_{0.40}La_{0.53}BiO_{3-δ} (wherein 0≤δ≤1.0), Li_{0.45}La_{0.52}TiO_{3-δ} (wherein 0≤δ≤1.0), Li_{0.45}La_{0.52}MnO_{3-δ} (wherein 0≤δ≤1.0), Li_{0.45}La_{0.52}NiO_{3-δ} (wherein 0≤δ≤1.0), Li_{0.45}La_{0.52}CrO_{3-δ} (wherein 0≤δ≤1.0), Li_{0.45}La_{0.52}CoO_{3-δ} (wherein 0≤δ≤1.0), Li_{0.45}La₀.₅₂IrO_{3-δ} (wherein 0≤δ≤1.0), Li_{0.45}La_{0.52}RuO_{3-δ} (wherein 0≤δ≤1.0), Li_{0.45}La_{0.52}FeO_{3-δ} (wherein 0≤δ≤1.0), Li_{0.45}La_{0.52}PdO_{3-δ} (wherein 0≤δ≤1.0), Li_{0.45}La_{0.52}PbO_{3-δ} (wherein 0≤δ≤1.0), Li_{0.45}La_{0.52}RhO_{3-δ} (wherein 0≤δ≤1.0), Li_{0.45}La_{0.52}SnO_{3-δ} (wherein 0≤δ≤1.0), Li_{0.45}La₀.₅₂VO_{3-δ} (wherein 0≤δ≤1.0), Li_{0.45}La_{0.52}ReO_{3-δ} (wherein 0≤δ≤1.0), Li_{0.45}La_{0.52}GeO_{3-δ} (wherein 0≤δ≤1.0), Li_{0.45}La_{0.52}WO_{3-δ} (wherein 0≤δ≤1.0), Li_{0.45}La_{0.52}ZrO_{3-δ} (wherein 0≤δ≤1.0), Li_{0.45}La_{0.52}MoO_{3-δ} (wherein 0≤δ≤1.0), Li_{0.45}La_{0.52}NbO_{3-δ} (wherein 0≤δ≤1.0), Li_{0.45}La_{0.52}TaO_{3-δ} (wherein 0≤δ≤1.0), Li_{0.45}La_{0.52}HfO_{3-δ} (wherein 0≤δ≤1.0), Li_{0.45}La_{0.52}BiO_{3-δ} (wherein 0≤δ≤1.0), Li_{0.34}Ce_{0.55}TiO_{3-δ} (wherein 0≤δ≤1.0), Li_{0.34}Ce_{0.55}MnO_{3-δ} (wherein 0≤δ≤1.0), Li_{0.34}Ce_{0.55}NiO_{3-δ} (wherein 0≤δ≤1.0), Li_{0.34}Ce_{0.55}CrO_{3-δ} (wherein 0≤δ≤1.0), Li_{0.34}Ce_{0.55}CoO_{3-δ} (wherein 0≤δ≤1.0), Li_{0.34}Ce₀.₅₅IrO_{3-δ} (wherein 0≤δ≤1.0), Li_{0.34}Ce_{0.55}RuO_{3-δ} (wherein 0≤δ≤1.0), Li₀.₃₄Ce_{0.55}FeO_{3-δ} (wherein 0≤δ≤1.0), Li_{0.34}Ce_{o.55}PdO_{3-δ} (wherein 0≤δ≤1.0), Li_{0.34}Ce_{0.55}PbO_{3-δ} (wherein 0≤δ≤1.0), Li_{0.34}Ce_{0.55}RhO_{3-δ} (wherein 0≤δ≤1.0), Li_{0.34}Ce_{0.55}SnO_{3-δ} (wherein 0≤δ≤1.0), Li_{0.34}Ce_{0.55}VO_{3-δ} (wherein 0≤δ≤1.0), Li_{0.34}Ce_{0.55}ReO_{3-δ} (wherein 0≤δ≤1.0), Li_{0.34}Ce_{0.55}GeO_{3-δ} (wherein 0≤δ≤1.0), Li_{0.34}Ce_{0.55}WO_{3-δ} (wherein 0≤δ≤1.0), Li_{0.34}Ce_{0.55}ZrO_{3-δ} (wherein 0≤δ≤1.0), Li_{0.34}Ce_{0.55}MoO_{3-δ} (wherein 0≤δ≤1.0), Li_{0.34}Ce_{0.55}NbO_{3-δ} (wherein 0≤δ≤1.0), Li_{0.34}Ce_{0.55}TaO_{3-δ} (wherein 0≤δ≤1.0), Li_{0.34}Ce_{0.55}HfO_{3-δ} (wherein 0≤δ≤1.0), Li_{0.34}Ce_{0.55}BiO_{3-δ} (wherein 0≤δ≤1.0), Li_{0.10}Ce_{0.63}TiO_{3-δ} (wherein 0≤δ≤1.0), Li_{0.10}Ce_{0.63}MnO_{3-δ} (wherein 0≤δ≤1.0), Li_{0.10}Ce_{0.63}NiO_{3-δ} (wherein 0≤δ≤1.0), Li_{0.10}Ce_{0.63}CrO_{3-δ} (wherein 0≤δ≤1.0), Li_{0.10}Ce_{0.63}CoO_{3-δ} (wherein 0≤δ≤1.0), Li_{0.10}Ce_{0.63}IrO-_{δ} (wherein 0≤δ≤1.0)₃, Li_{0.10}Ce_{0.63}RuO_{3-δ} (wherein 0≤δ≤1.0), Li_{0.10}Ce_{0.63}FeO_{3-δ} (wherein 0≤δ≤1.0), Li_{0.10}Ce_{0.63}Pd_{3-δ} (wherein 0≤δ≤1.0), Li_{0.10}Ce_{0.63}PbO_{3-δ} (wherein 0≤δ≤1.0), Li_{0.10}Ce_{0.63}RhO_{3-δ} (wherein 0≤δ≤1.0), Li_{0.10}Ce_{0.63}SnO₃₋₅ (wherein 0≤δ≤1.0), Li_{0.10}Ce_{0.63}VO_{3-δ} (wherein 0≤δ≤1.0), Li_{0.10}Ce_{0.63}ReO_{3-δ} (wherein 0≤δ≤1.0), Li_{0.10}Ce_{0.63}GeO_{3-δ} (wherein 0≤δ≤1.0), Li_{0.10}Ce_{0.63}WO_{3-δ} (wherein 0≤δ≤1.0), Li_{0.10}Ce_{0.63}ZrO_{3-δ} (wherein 0≤δ≤1.0), Li_{0.10}Ce_{0.63}MoO_{3-δ} (wherein 0≤δ≤1.0), Li_{0.10}Ce_{0.63}NbO_{3-δ} (wherein 0≤δ≤1.0), Li_{0.10}Ce_{0.63}TaO_{3-δ} (wherein 0≤δ≤1.0), Li_{0.10}Ce_{0.63}HfO_{3-δ} (wherein 0≤δ≤1.0), Li_{0.10}Ce_{0.63}BiO_{3-δ} (wherein 0≤δ≤1.0), Li_{0.20}Ce_{0.60}TiO_{3-δ} (wherein 0≤δ≤1.0), Li_{0.20}Ce_{0.60}MnO_{3-δ} (wherein 0≤δ≤1.0), Li_{0.20}Ce_{0.60}NiO_{3-δ} (wherein 0≤δ≤1.0), Li_{0.20}Ce_{0.60}CrO_{3-δ} (wherein 0≤δ≤1.0), Li_{0.20}Ce_{0.60}CoO_{3-δ} (wherein 0≤δ≤1.0), Li_{0.20}Ce_{0.60}IrO_{3-δ} (wherein 0≤δ≤1.0), Li_{0.20}Ce_{0.60}RuO_{3-δ} (wherein 0≤δ≤1.0), Li_{0.20}Ce_{0.60}FeO_{3-δ} (wherein 0≤δ≤1.0), Li_{0.20}Ce_{0.60}PdO_{3-δ} (wherein 0≤δ≤1.0), Li_{0.20}Ce_{0.60}PbO_{3-δ} (wherein 0≤δ≤1.0), Li_{0.20}Ce_{0.60}RhO_{3-δ} (wherein 0≤δ≤1.0), Li_{0.20}Ce_{0.60}SnO_{3-δ} (wherein 0≤δ≤1.0), Li_{0.20}Ce_{0.60}VO_{3-δ} (wherein 0≤δ≤1.0), Li_{0.20}Ce_{0.60}ReO_{3-δ} (wherein 0≤δ≤1.0), Li_{0.20}Ce_{0.60}GeO_{3-δ} (wherein 0≤δ≤1.0), Li_{0.20}Ce_{0.60}WO_{3-δ} (wherein 0≤δ≤1.0), Li_{0.20}Ce_{0.60}ZrO_{3-δ} (wherein 0≤δ≤1.0), Li_{0.20}Ce_{0.60}MoO_{3-δ} (wherein 0≤δ≤1.0), Li_{0.20}Ce_{0.60}NbO_{3-δ} (wherein 0≤δ≤1.0), Li_{0.20}Ce_{0.60}TaO_{3-δ} (wherein 0≤δ≤1.0), Li_{0.20}Ce_{0.60}HfO_{3-δ} (wherein 0≤δ≤1.0), Li₀.₂₀Ce_{0.60}BiO_{3-δ} (wherein 0≤δ≤1.0), Li_{0.30}Ce_{0.57}TiO_{3-δ} (wherein 0≤δ≤1.0), Li_{0.30}Ce_{0.57}MnO_{3-δ} (wherein 0≤δ≤1.0), Li_{0.30}Ce_{0.57}NiO_{3-δ} (wherein 0≤δ≤1.0), Li_{0.30}Ce_{0.57}CrO_{3-δ} (wherein 0≤δ≤1.0), Li_{0.30}Ce_{0.57}CoO_{3-δ} (wherein 0≤δ≤1.0), Li_{0.30}Ce_{0.57}lrO_{3-δ} (wherein 0≤δ≤1.0), Li_{0.30}Ce_{0.57}RuO_{3-δ} (wherein 0≤δ≤1.0), Li_{0.30}Ce_{0.57}FeO_{3-δ} (wherein 0≤δ≤1.0), Li_{0.30}Ce_{0.57}PdO_{3-δ} (wherein 0≤δ≤1.0), Li_{0.30}Ce_{0.57}PbO_{3-δ} (wherein 0≤δ≤1.0), Li_{0.30}Ce_{0.57}RhO_{3-δ} (wherein 0≤δ≤1.0), Li_{0.30}Ce_{0.57}SnO_{3-δ} (wherein 0≤δ≤1.0), Li_{0.30}Ce_{0.57}VO_{3-δ} (wherein 0≤δ≤1.0), Li_{0.30}Ce_{0.57}ReO_{3-δ} (wherein 0≤δ≤1.0), Li_{0.30}Ce_{0.57}GeO_{3-δ} (wherein 0≤δ≤1.0), Li_{0.30}Ce_{0.57}WO_{3-δ} (wherein 0≤δ≤1.0), Li_{0.30}Ce_{0.57}ZrO_{3-δ} (wherein 0≤δ≤1.0), Li_{0.30}Ce_{0.57}MoO_{3-δ} (wherein 0≤δ≤1.0), Li_{0.30}Ce_{0.57}NbO_{3-δ} (wherein 0≤δ≤1.0), Li_{0.30}Ce_{0.57}TaO_{3-δ} (wherein 0≤δ≤1.0), Li_{0.30}Ce_{0.57}HfO_{3-δ} (wherein 0≤δ≤1.0), Li_{0.30}Ce_{0.57}BiO_{3-δ} (wherein 0≤δ≤1.0), Li_{0.40}Ce_{0.53}TiO_{3-δ} (wherein 0≤δ≤1.0), Li_{0.40}Ce_{0.53}MnO_{3-δ} (wherein 0≤δ≤1.0), Li_{0.40}Ce_{0.53}NiO_{3-δ} (wherein 0≤δ≤1.0), Li_{0.40}Ce_{0.53}CrO_{3-δ} (wherein 0≤δ≤1.0), Li_{0.40}Ce_{0.53}CoO_{3-δ} (wherein 0≤δ≤1.0), Li_{0.40}Ce_{0.53}IrO_{3-δ} (wherein 0≤δ≤1.0), Li_{0.40}Ce_{0.53}RuO_{3-δ} (wherein 0≤δ≤1.0), Li_{0.40}Ce_{0.53}FeO_{3-δ} (wherein 0≤δ≤1.0), Li_{0.40}Ce_{0.53}PdO_{3-δ} (wherein 0≤δ≤1.0), Li_{0.40}Ce_{0.53}PbO_{3-δ} (wherein 0≤δ≤1.0), Li_{0.40}Ce_{0.53}RhO_{3-δ} (wherein 0≤δ≤1.0), Li_{0.40}Ce_{0.53}SnO_{3-δ} (wherein 0≤δ≤1.0), Li_{0.40}Ce_{0.53}VO_{3-δ} (wherein 0≤δ≤1.0), Li_{0.40}Ce_{0.53}ReO_{3-δ} (wherein 0≤δ≤1.0), Li_{0.40}Ce_{0.53}GeO_{3-δ} (wherein 0≤δ≤1.0), Li_{0.40}Ce_{0.53}WO_{3-δ} (wherein 0≤δ≤1.0), Li_{0.40}Ce_{0.53}ZrO_{3-δ} (wherein 0≤δ≤1.0), Li_{0.40}Ce_{0.53}MoO_{3-δ} (wherein 0≤δ≤1.0), Li_{0.40}Ce_{0.53}NbO_{3-δ} (wherein 0≤δ≤1.0), Li_{0.40}Ce_{0.53}TaO_{3-δ} (wherein 0≤δ≤1.0), Li_{0.40}Ce_{0.53}HfO_{3-δ} (wherein 0≤δ≤1.0), Li_{0.40}Ce_{0.53}BiO_{3-δ} (wherein 0≤δ≤1.0), Li_{0.45}Ce_{0.52}TiO_{3-δ} (wherein 0≤δ≤1.0), Li_{0.45}Ce_{0.52}MnO_{3-δ} (wherein 0≤δ≤1.0), Li_{0.45}Ce_{0.52}NiO_{3-δ} (wherein 0≤δ≤1.0), Li_{0.45}Ce_{0.52}CrO_{3-δ} (wherein 0≤δ≤1.0), Li_{0.45}Ce_{0.52}CoO_{3-δ} (wherein 0≤δ≤1.0), Li_{0.45}Ce_{0.52}IrO_{3-δ} (wherein 0≤δ≤1.0), Li_{0.45}Ce_{0.52}RuO_{3-δ} (wherein 0≤δ≤1.0), Li_{0.45}Ce_{0.52}FeO_{3-δ} (wherein 0≤δ≤1.0), Li_{0.45}Ce_{0.52}PdO_{3-δ} (wherein 0≤δ≤1.0), Li_{0.45}Ce_{0.52}PbO_{3-δ} (wherein 0≤δ≤1.0), Li_{0.45}Ce_{0.52}RhO_{3-δ} (wherein 0≤δ≤1.0), Li_{0.45}Ce_{0.52}SnO_{3-δ} (wherein 0≤δ≤1.0), Li_{0.45}Ce_{0.52}VO_{3-δ} (wherein 0≤δ≤1.0), Li_{0.45}Ce_{0.52}ReO_{3-δ} (wherein 0≤δ≤1.0), Li_{0.45}Ce_{0.52}GeO_{3-δ} (wherein 0≤δ≤1.0), Li_{0.45}Ce_{0.52}WO_{3-δ} (wherein 0≤δ≤1.0), Li_{0.45}Ce_{0.52}ZrO_{3-δ} (wherein 0≤δ≤1.0), Li_{0.45}Ce_{0.52}MoO_{3-δ} (wherein 0≤δ≤1.0), Li_{0.45}Ce_{0.52}NbO_{3-δ} (wherein 0≤δ≤1.0), Li_{0.45}Ce_{0.52}TaO_{3-δ} (wherein 0≤δ≤1.0), Li_{0.45}Ce_{0.52}HfO_{3-δ} (wherein 0≤δ≤1.0), Li_{0.45}Ce_{0.52}BiO_{3-δ} (wherein 0≤δ≤1.0), Li_{0.34}Pr_{0.55}TiO_{3-δ} (wherein 0≤δ≤1.0), Li_{0.34}Pr_{0.55}MnO_{3-δ} (wherein 0≤δ≤1.0), Li_{0.34}Pr_{0.55}NiO_{3-δ} (wherein 0≤δ≤1.0), Li_{0.34}Pr_{0.55}CrO_{3-δ} (wherein 0≤δ≤1.0), Li_{0.34}Pr_{0.55}CoO_{3-δ} (wherein 0≤δ≤1.0), Li_{0.34}Pr_{0.55}IrO_{3-δ} (wherein 0≤δ≤1.0), Li_{0.34}Pr_{0.55}RuO_{3-δ} (wherein 0≤δ≤1.0), Li_{0.34}Pr_{0.55}FeO_{3-δ} (wherein 0≤δ≤1.0), Li_{0.34}Pr_{0.55}PdO_{3-δ} (wherein 0≤δ≤1.0), Li_{0.34}Pr_{0.55}PbO_{3-δ} (wherein 0≤δ≤1.0), Li_{0.34}Pr_{0.55}RhO_{3-δ} (wherein 0≤δ≤1.0), Li_{0.34}Pr_{0.55}SnO_{3-δ} (wherein 0≤δ≤1.0), Li_{0.34}Pr_{0.55}VO_{3-δ} (wherein 0≤δ≤1.0), Li_{0.34}Pr_{0.55}ReO_{3-δ} (wherein 0≤δ≤1.0), Li_{0.34}Pr_{0.55}GeO_{3-δ} (wherein 0≤δ≤1.0), Li_{0.34}Pr_{0.55}WO_{3-δ} (wherein 0≤δ≤1.0), Li_{0.34}Pr_{0.55}ZrO_{3-δ} (wherein 0≤δ≤1.0), Li_{0.34}Pr_{0.55}MoO_{3-δ} (wherein 0≤δ≤1.0), Li_{0.34}Pr_{0.55}NbO_{3-δ} (wherein 0≤δ≤1.0), Li_{0.34}Pr_{0.55}TaO_{3-δ} (wherein 0≤δ≤1.0), Li_{0.34}Pr_{0.55}HfO_{3-δ} (wherein 0≤δ≤1.0), Li_{0.34}Pr_{0.55}BiO_{3-δ} (wherein 0≤δ≤1.0), Li_{0.10}Pr_{0.63}TiO_{3-δ} (wherein 0≤δ≤1.0), Li_{0.10}Pr_{0.63}MnO_{3-δ} (wherein 0≤δ≤1.0), Li_{0.10}Pr_{0.63}NiO_{3-δ} (wherein 0≤δ≤1.0),Li_{0.10}Pr_{0.63}CrO_{3-δ} (wherein 0≤δ≤1.0), Li_{0.10}Pr_{0.63}CoO_{3-δ} (wherein 0≤δ≤1.0), Li_{0.10}Pr_{0.63}IrO_{3-δ} (wherein 0≤δ≤1.0), Li_{0.10}Pr_{0.63}RuO_{3-δ} (wherein 0≤δ≤1.0), Li_{0.10}Pr_{0.63}FeO_{3-δ} (wherein 0≤δ≤1.0), Li_{0.10}Pr_{0.63}PdO_{3-δ} (wherein 0≤δ≤1.0), Li_{0.10}Pr_{0.63}PbO_{3-δ} (wherein 0≤δ≤1.0), Li_{0.10}Pr_{0.63}RhO_{3-δ} (wherein 0≤δ≤1.0), Li_{1.10}Pr_{0.63}SnO_{3-δ} (wherein 0≤δ≤1.0), Li_{0.10}Pr_{0.63}VO_{3-δ} (wherein 0≤δ≤1.0), Li_{0.10}Pr_{0.63}ReO_{3-δ} (wherein 0≤δ≤1.0), Li_{0.10}Pr_{0.63}GeO_{3-δ} (wherein 0≤δ≤1.0), Li_{0.10}Pr_{0.63}WO_{3-δ} (wherein 0≤δ≤1.0), Li_{0.10}Pr_{0.63}ZrO_{3-δ} (wherein 0≤δ≤1.0), Li_{0.10}Pr_{0.63}MoO_{3-δ} (wherein 0≤δ≤1.0), Li_{0.10}Pr_{0.63}NbO_{3-δ} (wherein 0≤δ≤1.0), Li_{0.10}Pr_{0.63}TaO_{3-δ} (wherein 0≤δ≤1.0), Li_{0.10}Pr_{0.63}HfO_{3-δ} (wherein 0≤δ≤1.0), Li_{0.10}Pr_{0.63}BiO_{3-δ} (wherein 0≤δ≤1.0), Li_{0.20}Pr_{0.60}TiO_{3-δ} (wherein 0≤δ≤1.0), Li_{0.20}Pr_{0.60}MnO_{3-δ} (wherein 0≤δ≤1.0), Li_{0.20}Pr_{0.60}NiO_{3-δ} (wherein 0≤δ≤1.0), Li_{0.20}Pr_{0.60}CrO_{3-δ} (wherein 0≤δ≤1.0), Li_{0.20}Pr_{0.60}CoO_{3-δ} (wherein 0≤δ≤1.0), Li_{0.20}Pr_{0.60}IrO_{3-δ} (wherein 0≤δ≤1.0), Li_{0.20}Pr_{0.60}RuO_{3-δ} (wherein 0≤δ≤1.0), Li_{0.20}Pr_{0.60}FeO_{3-δ} (wherein 0≤δ≤1.0),Li_{0.20}Pr_{0.60}PdO_{3-δ} (wherein 0≤δ≤1.0), Li_{0.20}Pr_{0.60}PbO_{3-δ} (wherein 0≤δ≤1.0), Li_{0.20}Pr_{0.60}RhO_{3-δ} (wherein 0≤δ≤1.0), Li_{0.20}Pr_{0.60}SnO_{3-δ} (wherein 0≤δ≤1.0), Li_{0.20}Pr_{0.60}VO_{3-δ} (wherein 0≤δ≤1.0), Li_{0.20}Pr_{0.60}ReO_{3-δ} (wherein 0≤δ≤1.0), Li_{0.20}Pr_{0.60}GeO_{3-δ} (wherein 0≤δ≤1.0), Li_{0.20}Pr_{0.60}WO_{3-δ} (wherein 0≤δ≤1.0), Li_{0.20}Pr_{0.60}ZrO_{3-δ} (wherein 0≤δ≤1.0), Li_{0.20}Pr_{0.60}MoO_{3-δ} (wherein 0≤δ≤1.0), Li_{0.20}Pr_{0.60}NbO_{3-δ} (wherein 0≤δ≤1.0), Li_{0.20}Pr_{0.60}TaO_{3-δ} (wherein 0≤δ≤1.0), Li_{0.20}Pr_{0.60}HfO_{3-δ} (wherein 0≤δ≤1.0), Li_{0.20}Pr_{0.60}BiO_{3-δ} (wherein 0≤δ≤1.0), Li_{0.30}Pr_{0.57}TiO_{3-δ} (wherein 0≤δ≤1.0),Li_{0.30}Pr_{0.57}MnO_{3-δ} (wherein 0≤δ≤1.0), Li_{0.30}Pr_{0.57}NiO_{3-δ} (wherein 0≤δ≤1.0), Li_{0.30}Pr_{0.57}CrO_{3-δ} (wherein 0≤δ≤1.0), Li_{0.30}Pr_{0.57}CoO_{-δ} (wherein 0≤δ≤1.0)₃, Li_{0.30}Pr_{0.57}IrO_{3-δ} (wherein 0≤δ≤1.0), Li_{0.30}Pr_{0.57}RuO_{3-δ} (wherein 0≤δ≤1.0), Li_{0.30}Pr_{0.57}FeO_{3-δ} (wherein 0≤δ≤1.0), Li_{0.30}Pr_{0.57}PdO_{3-δ} (wherein 0≤δ≤1.0), Li_{0.30}Pr₀.₅₇PbO_{3-δ} (wherein 0≤δ≤1.0), Li_{0.30}Pr_{0.57}RhO_{3-δ} (wherein 0≤δ≤1.0), Li_{0.30}Pr_{0.57}SnO_{3-δ} (wherein 0≤δ≤1.0), Li_{0.30}Pr₀.₅₇VO_{3-δ} (wherein 0≤δ≤1.0), Li_{0.30}Pr_{0.57}ReO_{3-δ} (wherein 0≤δ≤1.0), Li_{0.30}Pr_{0.57}GeO_{3-δ} (wherein 0≤δ≤1.0), Li_{0.30}Pr_{0.57}WO_{3-δ} (wherein 0≤δ≤1.0), Li_{0.30}Pr_{0.57}ZrO_{3-δ} (wherein 0≤δ≤1.0), Li_{0.30}Pr_{0.57}MoO_{3-δ} (wherein 0≤δ≤1.0), Li_{0.30}Pr_{0.57}NbO_{3-δ} (wherein 0≤δ≤1.0), Li_{0.30}Pr_{0.57}TaO_{3-δ} (wherein 0≤δ≤1.0), Li_{0.30}Pr_{0.57}HfO_{3-δ} (wherein 0≤δ≤1.0), Li_{0.30}Pr0.₅₇BiO_{3-δ} (wherein 0≤δ≤1.0), Li_{0.40}Pr_{0.53}TiO_{3-δ} (wherein 0≤δ≤1.0), Li_{0.40}Pr_{0.53}MnO_{3-δ} (wherein 0≤δ≤1.0), Li_{0.40}Pr_{0.53}NiO_{3-δ} (wherein 0≤δ≤1.0), Li_{0.40}Pr_{0.53}CrO_{3-δ} (wherein 0≤δ≤1.0), Li_{0.40}Pr_{0.53}CoO_{3-δ} (wherein 0≤δ≤1.0), Li_{0.40}Pr_{0.53}IrO_{3-δ} (wherein 0≤δ≤1.0), Li_{0.40}Pr_{0.53}RuO_{3-δ} (wherein 0≤δ≤1.0), Li_{0.40}Pr_{0.53}FeO_{3-δ} (wherein 0≤δ≤1.0), Li_{0.40}Pr_{0.53}PdO_{3-δ} (wherein 0≤δ≤1.0), Li_{0.40}Pr_{0.53}PbO_{3-δ} (wherein 0≤δ≤1.0), Li_{0.40}Pr_{0.53}RhO_{3-δ} (wherein 0≤δ≤1.0), Li_{0.40}Pr_{0.53}SnO_{3-δ} (wherein 0≤δ≤1.0), Li_{0.40}Pr_{0.53}VO_{3-δ} (wherein 0≤δ≤1.0), Li_{0.40}Pr_{0.53}ReO_{3-δ} (wherein 0≤δ≤1.0), Li_{0.40}Pr_{0.53}GeO_{3-δ} (wherein 0≤δ≤1.0), Li_{0.40}Pr_{0.53}WO_{3-δ} (wherein 0≤δ≤1.0), Li_{0.40}Pr_{0.53}ZrO_{3-δ} (wherein 0≤δ≤1.0), Li_{0.40}Pr_{0.53}MoO_{3-δ} (wherein 0≤δ≤1.0), Li_{0.40}Pr_{0.53}NbO_{3-δ} (wherein 0≤δ≤1.0), Li_{0.40}Pr_{0.53}TaO_{3-δ} (wherein 0≤δ≤1.0), Li_{0.40}Pr_{0.53}HfO_{3-δ} (wherein 0≤δ≤1.0), Li_{0.40}Pr_{0.53}BiO_{3-δ} (wherein 0≤δ≤1.0), Li_{0.45}Pr_{0.52}TiO_{3-δ} (wherein 0≤δ≤1.0), Li_{0.45}Pr_{0.52}MnO_{3-δ} (wherein 0≤δ≤1.0), Li_{0.45}Pr_{0.52}NiO_{3-δ} (wherein 0≤δ≤1.0), Li_{0.45}Pr_{0.52}CrO_{3-δ} (wherein 0≤δ≤1.0), Li_{0.45}Pr_{0.52}CoO_{3-δ} (wherein 0≤δ≤1.0), Li_{0.45}Pr_{0.52}IrO_{3-δ} (wherein 0≤δ≤1.0), Li_{0.45}Pr_{0.52}RuO_{3-δ} (wherein 0≤δ≤1.0), Li_{0.45}Pr_{0.52}FeO_{3-δ} (wherein 0≤δ≤1.0), Li_{0.45}Pr_{0.52}PdO_{3-δ} (wherein 0≤δ≤1.0), Li_{0.45}Pr_{0.52}PbO_{3-δ} (wherein 0≤δ≤1.0), Li_{0.45}Pr_{0.52}RhO_{3-δ} (wherein 0≤δ≤1.0), Li_{0.45}Pr_{0.52}SnO_{3-δ} (wherein 0≤δ≤1.0), Li_{0.45}Pr_{0.52}VO_{3-δ} (wherein 0≤δ≤1.0), Li_{0.45}Pr_{0.52}ReO_{3-δ} (wherein 0≤δ≤1.0), Li_{0.45}Pr_{0.52}GeO_{3-δ} (wherein 0≤δ≤1.0), Li_{0.45}Pr_{0.52}WO_{3-δ} (wherein 0≤δ≤1.0), Li_{0.45}Pr_{0.52}ZrO_{3-δ} (wherein 0≤δ≤1.0), Li_{0.45}Pr_{0.52}MoO_{3-δ} (wherein 0≤δ≤1.0), Li_{0.45}Pr_{0.52}NbO_{3-δ} (wherein 0≤δ≤1.0), Li_{0.45}Pr_{0.52}TaO_{3-δ} (wherein 0≤δ≤1.0), Li_{0.45}Pr_{0.52}HfO_{3-δ} (wherein 0≤δ≤1.0), Li_{0.45}Pr_{0.52}BiO_{3-δ} (wherein 0≤δ≤1.0), Li_{0.10}Ca_{0.80}TiO_{3-δ} (wherein 0≤δ≤1.0), Li_{0.10}Ca_{0.80}MnO_{3-δ} (wherein 0≤δ≤1.0), Li_{0.10}Ca_{0.80}NiO_{3-δ} (wherein 0≤δ≤1.0), Li_{0.10}Ca_{0.80}CrO_{3-δ} (wherein 0≤δ≤1.0), Li_{0.10}Ca_{0.80}CoO_{3-δ} (wherein 0≤δ≤1.0), Li_{0.10}Ca_{0.80}IrO_{3-δ} (wherein 0≤δ≤1.0), Li_{0.10}Ca_{0.80}RuO_{3-δ} (wherein 0≤δ≤1.0), Li_{0.10}Ca_{0.80}FeO_{3-δ} (wherein 0≤δ≤1.0), Li_{0.10}Ca_{0.80}PdO_{3-δ} (wherein 0≤δ≤1.0), Li_{0.10}Ca_{0.80}PbO_{3-δ} (wherein 0≤δ≤1.0), Li_{0.10}Ca_{0.80}RhO_{3-δ} (wherein 0≤δ≤1.0), Li_{0.10}Ca_{0.80}SnO_{3-δ} (wherein 0≤δ≤1.0), Li_{0.10}Ca_{0.80}VO_{3-δ} (wherein 0≤δ≤1.0), Li_{0.10}Ca_{0.80}ReO_{3-δ} (wherein 0≤δ≤1.0), Li_{0.10}Ca_{0.80}GeO_{3-δ} (wherein 0≤δ≤1.0), Li_{0.10}Ca_{0.80}WO_{3-δ} (wherein 0≤δ≤1.0), Li_{0.10}Ca_{0.80}ZrO_{3-δ} (wherein 0≤δ≤1.0), Li_{0.10}Ca_{0.80}MoO_{3-δ} (wherein 0≤δ≤1.0), Li_{0.10}Ca_{0.80}NbO_{3-δ} (wherein 0≤δ≤1.0), Li_{0.10}Ca_{0.80}TaO_{3-δ} (wherein 0≤δ≤1.0), Li_{0.10}Ca_{0.80}HfO_{3-δ} (wherein 0≤δ≤1.0), Li_{0.10}Ca_{0.80}BiO_{3-δ} (wherein 0≤δ≤1.0), Li_{0.20}Ca_{0.60}TiO_{3-δ} (wherein 0≤δ≤1.0), Li_{0.20}Ca_{0.60}MnO_{3-δ} (wherein 0≤δ≤1.0), Li_{0.20}Ca_{0.60}NiO_{3-δ} (wherein 0≤δ≤1.0), Li_{0.20}Ca_{0.60}CrO_{3-δ} (wherein 0≤δ≤1.0), Li_{0.20}Ca_{0.60}CoO_{3-δ} (wherein 0≤δ≤1.0), Li_{0.20}Ca_{0.60}IrO_{3-δ} (wherein 0≤δ≤1.0), Li_{0.20}Ca_{0.60}RuO_{3-δ} (wherein 0≤δ≤1.0), Li_{0.20}Ca_{0.60}FeO_{3-δ} (wherein 0≤δ≤1.0), Li_{0.20}Ca_{0.60}PdO_{3-δ} (wherein 0≤δ≤1.0), Li_{0.20}Ca_{0.60}PbO_{3-δ} (wherein 0≤δ≤1.0), Li_{0.20}Ca_{0.60}RhO_{3-δ} (wherein 0≤δ≤1.0), Li_{0.20}Ca_{0.60}SnO_{3-δ} (wherein 0≤δ≤1.0), Li_{0.20}Ca_{0.60}VO_{3-δ} (wherein 0≤δ≤1.0), Li_{0.20}Ca_{0.60}ReO_{3-δ} (wherein 0≤δ≤1.0), Li_{0.20}Ca_{0.60}GeO_{3-δ} (wherein 0≤δ≤1.0), Li_{0.20}Ca_{0.60}WO_{3-δ} (wherein 0≤δ≤1.0), Li_{0.20}Ca_{0.60}ZrO_{3-δ} (wherein 0≤δ≤1.0), Li_{0.20}Ca_{0.60}MoO_{3-δ} (wherein 0≤δ≤1.0), Li_{0.20}Ca_{0.60}NbO_{3-δ} (wherein 0≤δ≤1.0), Li_{0.20}Ca_{0.60}TaO_{3-δ} (wherein 0≤δ≤1.0), Li_{0.20}Ca_{0.60}HfO_{3-δ} (wherein 0≤δ≤1.0), Li_{0.20}Ca_{0.60}BiO_{3-δ} (wherein 0≤δ≤1.0), Li_{0.25}Ca_{0.50}TiO_{3-δ} (wherein 0≤δ≤1.0), Li_{0.25}Ca_{0.50}MnO_{3-δ} (wherein 0≤δ≤1.0), Li_{0.25}Ca_{0.50}NiO_{3-δ} (wherein 0≤δ≤1.0), Li_{0.25}Ca_{0.50}CrO_{3-δ} (wherein 0≤δ≤1.0), Li_{0.25}Ca_{0.50}CoO_{3-δ} (wherein 0≤δ≤1.0), Li_{0.25}Ca_{0.50}IrO_{3-δ} (wherein 0≤δ≤1.0), Li_{0.25}Ca_{0.50}RuO_{3-δ} (wherein 0≤δ≤1.0), Li_{0.25}Ca_{0.50}FeO_{3-δ} (wherein 0≤δ≤1.0), Li_{0.25}Ca_{0.50}PdO_{3-δ} (wherein 0≤δ≤1.0), Li_{0.25}Ca_{0.50}PbO_{3-δ} (wherein 0≤δ≤1.0), Li_{0.25}Ca_{0.50}RhO_{3-δ} (wherein 0≤δ≤1.0), Li_{0.25}Ca_{0.50}SnO_{3-δ} (wherein 0≤δ≤1.0), Li_{0.25}Ca_{0.50}VO_{3-δ} (wherein 0≤δ≤1.0), Li_{0.25}Ca_{0.50}ReO_{3-δ} (wherein 0≤δ≤1.0), Li_{0.25}Ca_{0.50}GeO_{3-δ} (wherein 0≤δ≤1.0), Li_{0.25}Ca_{0.50}WO_{3-δ} (wherein 0≤δ≤1.0), Li_{0.25}Ca_{0.50}ZrO_{3-δ} (wherein 0≤δ≤1.0), Li_{0.25}Ca_{0.50}MoO_{3-δ} (wherein 0≤δ≤1.0), Li_{0.25}Ca_{0.50}NbO_{3-δ} (wherein 0≤δ≤1.0), Li_{0.25}Ca_{0.50}TaO_{3-δ} (wherein 0≤δ≤1.0), Li_{0.25}Ca_{0.50}HfO_{3-δ} (wherein 0≤δ≤1.0), Li_{0.25}Ca_{0.50}BiO_{3-δ} (wherein 0≤δ≤1.0), Li_{0.30}Ca_{0.40}TiO_{3-δ} (wherein 0≤δ≤1.0), Li_{0.30}Ca_{0.40}MnO_{3-δ} (wherein 0≤δ≤1.0), Li_{0.30}Ca_{0.40}NiO_{3-δ} (wherein 0≤δ≤1.0), Li_{0.30}Ca_{0.40}CrO_{3-δ} (wherein 0≤δ≤1.0), Li_{0.30}Ca_{0.40}CoO_{3-δ} (wherein 0≤δ≤1.0), Li_{0.30}Ca_{0.40}IrO_{3-δ} (wherein 0≤δ≤1.0), Li_{0.30}Ca_{0.40}RuO_{3-δ} (wherein 0≤δ≤1.0), Li_{0.30}Ca_{0.40}FeO_{3-δ} (wherein 0≤δ≤1.0), Li_{0.30}Ca_{0.40}PdO_{3-δ} (wherein 0≤δ≤1.0), Li_{0.30}Ca_{0.40}PbO_{3-δ} (wherein 0≤δ≤1.0), Li_{0.30}Ca_{0.40}RhO_{3-δ} (wherein 0≤δ≤1.0), Li_{0.30}Ca_{0.40}SnO_{3-δ} (wherein 0≤δ≤1.0), Li_{0.30}Ca_{0.40}VO_{3-δ} (wherein 0≤δ≤1.0), Li_{0.30}Ca_{0.40}ReO_{3-δ} (wherein 0≤δ≤1.0), Li_{0.30}Ca_{0.40}GeO_{3-δ} (wherein 0≤δ≤1.0), Li_{0.30}Ca_{0.40}WO_{3-δ} (wherein 0≤δ≤1.0), Li_{0.30}Ca_{0.40}ZrO_{3-δ} (wherein 0≤δ≤1.0), Li_{0.30}Ca_{0.40}MoO_{3-δ} (wherein 0≤δ≤1.0), Li_{0.30}Ca_{0.40}NbO_{3-δ} (wherein 0≤δ≤1.0), Li_{0.30}Ca_{0.40}TaO_{3-δ} (wherein 0≤δ≤1.0), Li_{0.30}Ca_{0.40}HfO_{3-δ} (wherein 0≤δ≤1.0), Li_{0.30}Ca_{0.40}TiO_{3-δ} (wherein 0≤δ≤1.0), Li_{0.40}Ca_{0.20}TiO_{3-δ} (wherein 0≤δ≤1.0), Li_{0.40}Ca_{0.20}MnO_{3-δ} (wherein 0≤δ≤1.0), Li_{0.40}Ca_{0.20}NiO_{3-δ} (wherein 0≤δ≤1.0), Li_{0.40}Ca_{0.20}CrO_{3-δ} (wherein 0≤δ≤1.0), Li_{0.40}Ca_{0.20}CoO_{3-δ} (wherein 0≤δ≤1.0), Li_{0.40}Ca_{0.20}IrO_{3-δ} (wherein 0≤δ≤1.0), Li_{0.40}Ca_{0.20}RuO_{3-δ} (wherein 0≤δ≤1.0), Li_{0.40}Ca_{0.20}FeO_{3-δ} (wherein 0≤δ≤1.0), Li_{0.40}Ca_{0.20}PdO_{3-δ} (wherein 0≤δ≤1.0), Li_{0.40}Ca_{0.20}PbO_{3-δ} (wherein 0≤δ≤1.0), Li_{0.40}Ca_{0.20}RhO_{3-δ} (wherein 0≤δ≤1.0), Li_{0.40}Ca_{0.20}SnO_{3-δ} (wherein 0≤δ≤1.0), Li_{0.40}Ca_{0.20}VO_{3-δ} (wherein 0≤δ≤1.0), Li_{0.40}Ca_{0.20}ReO_{3-δ} (wherein 0≤δ≤1.0), Li_{0.40}Ca_{0.20}GeO_{3-δ} (wherein 0≤δ≤1.0), Li_{0.40}Ca_{0.20}WO_{3-δ} (wherein 0≤δ≤1.0), Li_{0.40}Ca_{0.20}ZrO_{3-δ} (wherein 0≤δ≤1.0), Li_{0.40}Ca_{0.20}MoO_{3-δ} (wherein 0≤δ≤1.0), Li_{0.40}Ca_{0.20}NbO_{3-δ} (wherein 0≤δ≤1.0), Li_{0.40}Ca_{0.20}TaO_{3-δ} (wherein 0≤δ≤1.0), Li_{0.40}Ca_{0.20}HfO_{3-δ} (wherein 0≤δ≤1.0), Li_{0.40}Ca_{0.20}BiO_{3-δ} (wherein 0≤δ≤1.0), Li_{0.10}Sr_{0.80}TiO_{3-δ} (wherein 0≤δ≤1.0), Li_{0.10}Sr_{0.80}MnO_{3-δ} (wherein 0≤δ≤1.0), Li_{0.10}Sr_{0.80}NiO_{3-δ} (wherein 0≤δ≤1.0), Li_{0.10}Sr_{0.80}CrO_{3-δ} (wherein 0≤δ≤1.0), Li_{0.10}Sr_{0.80}CoO_{3-δ} (wherein 0≤δ≤1.0), Li_{0.10}Sr_{0.80}IrO_{3-δ} (wherein 0≤δ≤1.0), Li_{0.10}Sr_{0.80}RUO_{3-δ} (wherein 0≤δ≤1.0), Li_{0.10}Sr_{0.80}FeO_{3-δ} (wherein 0≤δ≤1.0), Li_{0.10}Sr_{0.80}PdO_{3-δ} (wherein 0≤δ≤1.0), Li_{0.10}Sr_{0.80}PbO_{3-δ} (wherein 0≤δ≤1.0), Li_{0.10}Sr_{0.80}RhO_{3-δ} (wherein 0≤δ≤1.0), Li_{0.10}Sr_{0.80}SnO_{3-δ} (wherein 0≤δ≤1.0), Li_{0.10}Sr_{0.80}VO_{3-δ} (wherein 0≤δ≤1.0), Li_{0.10}Sr_{0.80}ReO_{3-δ} (wherein 0≤δ≤1.0), Li_{0.10}Sr_{0.80}GeO_{3-δ} (wherein 0≤δ≤1.0), Li_{0.10}Sr_{0.80}WO_{3-δ} (wherein 0≤δ≤1.0), Li_{0.10}Sr_{0.80}ZrO_{3-δ} (wherein 0≤δ≤1.0), Li_{0.10}Sr_{0.80}MoO_{3-δ} (wherein 0≤δ≤1.0), Li_{0.10}Sr_{0.80}NbO_{3-δ} (wherein 0≤δ≤1.0), Li_{0.10}Sr_{0.80}TaO_{3-δ} (wherein 0≤δ≤1.0), Li_{0.10}Sr_{0.80}HfO_{3-δ} (wherein 0≤δ≤1.0), Li_{0.10}Sr_{0.80}BiO_{3-δ} (wherein 0≤δ≤1.0), Li_{0.20}Sr_{0.60}TiO_{3-δ} (wherein 0≤δ≤1.0), Li_{0.20}Sr_{0.60}MnO_{3-δ} (wherein 0≤δ≤1.0), Li_{0.20}Sr_{0.60}NiO_{3-δ} (wherein 0≤δ≤1.0), Li_{0.20}Sr_{0.60}CrO_{3-δ} (wherein 0≤δ≤1.0), Li_{0.20}Sr_{0.60}CoO_{3-δ} (wherein 0≤δ≤1.0), Li_{0.20}Sr_{0.60}IrO_{3-δ} (wherein 0≤δ≤1.0), Li_{0.20}Sr_{0.60}RuO_{3-δ} (wherein 0≤δ≤1.0), Li_{0.20}Sr_{0.60}FeO_{3-δ} (wherein 0≤δ≤1.0), Li_{0.20}Sr_{0.60}PdO_{3-δ} (wherein 0≤δ≤1.0), Li_{0.20}Sr_{0.60}PbO_{3-δ} (wherein 0≤δ≤1.0), Li_{0.20}Sr_{0.60}RhO_{3-δ} (wherein 0≤δ≤1.0), Li_{0.20}Sr_{0.60}SnO_{3-δ} (wherein 0≤δ≤1.0), Li_{0.20}Sr_{0.60}VO_{3-δ} (wherein 0≤δ≤1.0), Li_{0.20}Sr_{0.60}ReO_{3-δ} (wherein 0≤δ≤1.0), Li_{0.20}Sr_{0.60}GeO_{3-δ} (wherein 0≤δ≤1.0), Li_{0.20}Sr_{0.60}WO_{3-δ} (wherein 0≤δ≤1.0), Li_{0.20}Sr_{0.60}ZrO_{3-δ} (wherein 0≤δ≤1.0), Li_{0.20}Sr_{0.60}MoO_{3-δ} (wherein 0≤δ≤1.0), Li_{0.20}Sr_{0.60}NbO_{3-δ} (wherein 0≤δ≤1.0), Li_{0.20}Sr_{0.60}TaO_{3-δ} (wherein 0≤δ≤1.0), Li_{0.20}Sr_{0.60}HfO_{3-δ} (wherein 0≤δ≤1.0), Li_{0.20}Sr_{0.60}BiO_{3-δ} (wherein 0≤δ≤1.0), Li_{0.25}Sr_{0.50}TiO_{3-δ} (wherein 0≤δ≤1.0), Li_{0.25}Sr_{0.50}MnO_{3-δ} (wherein 0≤δ≤1.0), Li_{0.25}Sr_{0.50}NiO_{3-δ} (wherein 0≤δ≤1.0), Li_{0.25}Sr_{0.50}CrO_{3-δ} (wherein 0≤δ≤1.0), Li_{0.25}Sr_{0.50}CoO_{3-δ} (wherein 0≤δ≤1.0), Li_{0.25}Sr_{0.50}IrO_{3-δ} (wherein 0≤δ≤1.0), Li_{0.25}Sr_{0.50}RUO_{3-δ} (wherein 0≤δ≤1.0), Li_{0.25}Sr_{0.50}FeO_{3-δ} (wherein 0≤δ≤1.0), Li_{0.25}Sr_{0.50}PdO_{3-δ} (wherein 0≤δ≤1.0), Li_{0.25}Sr_{0.50}PbO_{3-δ} (wherein 0≤δ≤1.0), Li_{0.25}Sr_{0.50}RhO_{3-δ} (wherein 0≤δ≤1.0), Li_{0.25}Sr_{0.50}SnO_{3-δ} (wherein 0≤δ≤1.0), Li_{0.25}Sr_{0.50}VO_{3-δ} (wherein 0≤δ≤1.0), Li_{0.25}Sr_{0.50}ReO_{3-δ} (wherein 0≤δ≤1.0), Li_{0.25}Sr_{0.50}GeO_{3-δ} (wherein 0≤δ≤1.0), Li_{0.25}Sr_{0.50}WO_{3-δ} (wherein 0≤δ≤1.0), Li_{0.25}Sr_{0.50}ZrO_{3-δ} (wherein 0≤δ≤1.0), Li_{0.25}Sr_{0.50}MoO_{3-δ} (wherein 0≤δ≤1.0), Li_{0.25}Sr_{0.50}NbO_{3-δ} (wherein 0≤δ≤1.0), Li_{0.25}Sr_{0.50}TaO_{3-δ} (wherein 0≤δ≤1.0), Li_{0.25}Sr_{0.50}HfO_{3-δ} (wherein 0≤δ≤1.0), Li_{0.25}Sr_{0.50}BiO_{3-δ} (wherein 0≤δ≤1.0), Li_{0.30}Sr_{0.40}TiO_{3-δ} (wherein 0≤δ≤1.0), Li_{0.30}Sr_{0.40}MnO_{3-δ} (wherein 0≤δ≤1.0), Li_{0.30}Sr_{0.40}NiO_{3-δ} (wherein 0≤δ≤1.0), Li_{0.30}Sr_{0.40}CrO_{3-δ} (wherein 0≤δ≤1.0), Li_{0.30}Sr_{0.40}CoO_{3-δ} (wherein 0≤δ≤1.0), Li_{0.30}Sr_{0.40}IrO_{3-δ} (wherein 0≤δ≤1.0), Li_{0.30}Sr_{0.40}RuO_{3-δ} (wherein 0≤δ≤1.0), Li_{0.30}Sr_{0.40}FeO_{3-δ} (wherein 0≤δ≤1.0), Li_{0.30}Sr_{0.40}PdO_{3-δ} (wherein 0≤δ≤1.0), Li_{0.30}Sr_{0.40}PbO_{3-δ} (wherein 0≤δ≤1.0), Li_{0.30}Sr_{0.40}RhO_{3-δ} (wherein 0≤δ≤1.0), Li_{0.30}Sr_{0.40}SnO_{3-δ} (wherein 0≤δ≤1.0), Li_{0.30}Sr_{0.40}VO_{3-δ} (wherein 0≤δ≤1.0), Li_{0.30}Sr_{0.40}ReO_{3-δ} (wherein 0≤δ≤1.0), Li_{0.30}Sr_{0.40}GeO_{3-δ} (wherein 0≤δ≤1.0), Li_{0.30}Sr_{0.40}WO_{3-δ} (wherein 0≤δ≤1.0), Li_{0.30}Sr₀₄₀ZrO_{3-δ} (wherein 0≤δ≤1.0), Li_{0.30}Sr_{0.40}MoO_{3-δ} (wherein 0≤δ≤1.0), Li_{0.30}Sr_{0.40}NbO_{3-δ} (wherein 0≤δ≤1.0), Li_{0.30}Sr_{0.40}TaO_{3-δ} (wherein 0≤δ≤1.0), Li_{0.30}Sr_{0.40}HfO_{3-δ} (wherein 0≤δ≤1.0), Li_{0.30}Sr_{0.40}BiO_{3-δ} (wherein 0≤δ≤1.0), Li_{0.40}Sr_{0.20}TiO_{3-δ} (wherein 0≤δ≤1.0), Li_{0.40}Sr_{0.20}MnO_{3-δ} (wherein 0≤δ≤1.0), Li_{0.40}Sr_{0.20}NiO_{3-δ} (wherein 0≤δ≤1.0), Li_{0.40}Sr_{0.20}CrO_{3-δ} (wherein 0≤δ≤1.0), Li_{0.40}Sr_{0.20}CoO_{3-δ} (wherein 0≤δ≤1.0), Li_{0.40}Sr_{0.20}IrO_{3-δ} (wherein 0≤δ≤1.0), Li_{0.40}Sr_{0.20}RuO_{3-δ} (wherein 0≤δ≤1.0), Li_{0.40}Sr_{0.20}FeO_{3-δ} (wherein 0≤δ≤1.0), Li_{0.40}Sr_{0.20}PdO_{3-δ} (wherein 0≤δ≤1.0), Li_{0.40}Sr_{0.20}PbO_{3-δ} (wherein 0≤δ≤1.0), Li_{0.40}Sr_{0.20}RhO_{3-δ} (wherein 0≤δ≤1.0), Li_{0.40}Sr_{0.20}SnO_{3-δ} (wherein 0≤δ≤1.0), Li_{0.40}Sr_{0.20}VO_{3-δ} (wherein 0≤δ≤1.0), Li_{0.40}Sr_{0.20}ReO_{3-δ} (wherein 0≤δ≤1.0), Li_{0.40}Sr_{0.20}GeO_{3-δ} (wherein 0≤δ≤1.0), Li_{0.40}Sr_{0.20}WO_{3-δ} (wherein 0≤δ≤1.0), Li_{0.40}Sr_{0.20}ZrO_{3-δ} (wherein 0≤δ≤1.0), Li_{0.40}Sr_{0.20}MoO_{3-δ} (wherein 0≤δ≤1.0), Li_{0.40}Sr_{0.20}NbO_{3-δ} (wherein 0≤δ≤1.0), Li_{0.40}Sr_{0.20}TaO_{3-δ} (wherein 0≤δ≤1.0), Li_{0.40}Sr_{0.20}HfO_{3-δ} (wherein 0≤δ≤1.0), Li_{0.40}Sr_{0.20}BiO_{3-δ} (wherein 0≤δ≤1.0), Li_{0.10}Ba_{0.80}TiO_{3-δ} (wherein 0≤δ≤1.0), Li_{0.10}Ba_{0.80}MnO_{3-δ} (wherein 0≤δ≤1.0), Li_{0.10}Ba_{0.80}NiO_{3-δ} (wherein 0≤δ≤1.0), Li_{0.10}Ba_{0.80}CrO_{3-δ} (wherein 0≤δ≤1.0), Li_{0.10}Ba_{0.80}CoO_{3-δ} (wherein 0≤δ≤1.0), Li_{0.10}Ba_{0.80}IrO_{3-δ} (wherein 0≤δ≤1.0), Li_{0.10}Ba_{0.80}RuO_{3-δ} (wherein 0≤δ≤1.0), Li_{0.10}Ba_{0.80}FeO_{3-δ} (wherein 0≤δ≤1.0), Li_{0.10}Ba_{0.80}PdO_{3-δ} (wherein 0≤δ≤1.0), Li_{0.10}Ba_{0.80}PbO_{3-δ} (wherein 0≤δ≤1.0), Li_{0.10}Ba_{0.80}RhO_{3-δ} (wherein 0≤δ≤1.0), Li_{0.10}Ba_{0.80}SnO_{3-δ} (wherein 0≤δ≤1.0), Li_{0.10}Ba_{0.80}VO_{3-δ} (wherein 0≤δ≤1.0), Li_{0.10}Ba_{0.80}ReO_{3-δ} (wherein 0≤δ≤1.0), Li_{0.10}Ba_{0.80}GeO_{3-δ} (wherein 0≤δ≤1.0), Li_{0.10}Ba_{0.80}WO_{3-δ} (wherein 0≤δ≤1.0), Li_{0.10}Ba_{0.80}ZrO_{3-δ} (wherein 0≤δ≤1.0), Li_{0.10}Ba_{0.80}MoO_{3-δ} (wherein 0≤δ≤1.0), Li_{0.10}Ba_{0.80}NbO_{3-δ} (wherein 0≤δ≤1.0), Li_{0.10}Ba_{0.80}TaO_{3-δ} (wherein 0≤δ≤1.0), Li_{0.10}Ba_{0.80}HfO_{3-δ} (wherein 0≤δ≤1.0), Li_{0.10}Ba_{0.80}BiO_{3-δ} (wherein 0≤δ≤1.0), Li_{0.20}Ba_{0.60}TiO_{3-δ} (wherein 0≤δ≤1.0), Li_{0.20}Ba_{0.60}MnO_{3-δ} (wherein 0≤δ≤1.0), Li_{0.20}Ba_{0.60}NiO_{3-δ} (wherein 0≤δ≤1.0), Li_{0.20}Ba_{0.60}CrO_{3-δ} (wherein 0≤δ≤1.0), Li_{0.20}Ba_{0.60}CoO_{3-δ} (wherein 0≤δ≤1.0), Li_{0.20}Ba_{0.60}IrO_{3-δ} (wherein 0≤δ≤1.0), Li_{0.20}Ba_{0.60}RuO_{3-δ} (wherein 0≤δ≤1.0), Li_{0.20}Ba_{0.60}FeO_{3-δ} (wherein 0≤δ≤1.0), Li_{0.20}Ba_{0.60}PdO_{3-δ} (wherein 0≤δ≤1.0), Li_{0.20}Ba_{0.60}PbO_{3-δ} (wherein 0≤δ≤1.0), Li_{0.20}Ba_{0.60}RhO_{3-δ} (wherein 0≤δ≤1.0), Li_{0.20}Ba_{0.60}SnO_{3-δ} (wherein 0≤δ≤1.0), Li_{0.20}Ba_{0.60}VO_{3-δ} (wherein 0≤δ≤1.0), Li_{0.20}Ba_{0.60}ReO_{3-δ} (wherein 0≤δ≤1.0), Li_{0.20}Ba_{0.60}GeO_{3-δ} (wherein 0≤δ≤1.0), Li_{0.20}Ba_{0.60}WO_{3-δ} (wherein 0≤δ≤1.0), Li_{0.20}Ba_{0.60}ZrO_{3-δ} (wherein 0≤δ≤1.0), Li_{0.20}Ba_{0.60}MoO_{3-δ} (wherein 0≤δ≤1.0), Li_{0.20}Ba_{0.60}NbO_{3-δ} (wherein 0≤δ≤1.0), Li_{0.20}Ba_{0.60}TaO_{3-δ} (wherein 0≤δ≤1.0), Li_{0.20}Ba_{0.60}HfO_{3-δ} (wherein 0≤δ≤1.0), Li_{0.20}Ba_{0.60}BiO_{3-δ} (wherein 0≤δ≤1.0), Li_{0.25}Ba_{0.50}TiO_{3-δ} (wherein 0≤δ≤1.0), Li_{0.25}Ba_{0.50}MnO_{3-δ} (wherein 0≤δ≤1.0), Li_{0.25}Ba_{0.50}NiO_{3-δ} (wherein 0≤δ≤1.0), Li_{0.25}Ba_{0.50}CrO_{3-δ} (wherein 0≤δ≤1.0), Li_{0.25}Ba_{0.50}CoO_{3-δ} (wherein 0≤δ≤1.0), Li_{0.25}Ba_{0.50}IrO_{3-δ} (wherein 0≤δ≤1.0), Li_{0.25}Ba_{0.50}RuO_{3-δ} (wherein 0≤δ≤1.0), Li_{0.25}Ba_{0.50}FeO_{3-δ} (wherein 0≤δ≤1.0), Li_{0.25}Ba_{0.50}PdO_{3-δ} (wherein 0≤δ≤1.0), Li_{0.25}Ba_{0.50}PbO_{3-δ} (wherein 0≤δ≤1.0), Li_{0.25}Ba_{0.50}RhO_{3-δ} (wherein 0≤δ≤1.0), Li_{0.25}Ba_{0.50}SnO_{3-δ} (wherein 0≤δ≤1.0), Li_{0.25}Ba_{0.50}VO_{3-δ} (wherein 0≤δ≤1.0), Li_{0.25}Ba_{0.50}ReO_{3-δ} (wherein 0≤δ≤1.0), Li_{0.25}Ba_{0.50}GeO_{3-δ} (wherein 0≤δ≤1.0), Li_{0.25}Ba_{0.50}WO_{3-δ} (wherein 0≤δ≤1.0), Li_{0.25}Ba_{0.50}ZrO_{3-δ} (wherein 0≤δ≤1.0), Li_{0.25}Ba_{0.50}MoO_{3-δ} (wherein 0≤δ≤1.0), Li_{0.25}Ba_{0.50}NbO_{3-δ} (wherein 0≤δ≤1.0), Li_{0.25}Ba_{0.50}TaO_{3-δ} (wherein 0≤δ≤1.0), Li_{0.25}Ba_{0.50}HfO_{3-δ} (wherein 0≤δ≤1.0), Li_{0.25}Ba_{0.50}BiO_{3-δ} (wherein 0≤δ≤1.0), Li_{0.30}Ba_{0.40}TiO_{3-δ} (wherein 0≤δ≤1.0), Li_{0.30}Ba_{0.40}MnO_{3-δ} (wherein 0≤δ≤1.0), Li_{0.30}Ba_{0.40}NiO_{3-δ} (wherein 0≤δ≤1.0), Li_{0.30}Ba_{0.40}CrO_{3-δ} (wherein 0≤δ≤1.0), Li_{0.30}Ba_{0.40}CoO_{3-δ} (wherein 0≤δ≤1.0), Li_{0.30}Ba_{0.40}IrO_{3-δ} (wherein 0≤δ≤1.0), Li_{0.30}Ba_{0.40}RuO_{3-δ} (wherein 0≤δ≤1.0), Li_{0.30}Ba_{0.40}FeO_{3-δ} (wherein 0≤δ≤1.0), Li_{0.30}Ba_{0.40}PdO_{3-δ} (wherein 0≤δ≤1.0), Li_{0.30}Ba_{0.40}PbO_{3-δ} (wherein 0≤δ≤1.0), Li_{0.30}Ba_{0.40}RhO_{3-δ} (wherein 0≤δ≤1.0), Li_{0.30}Ba_{0.40}SnO_{3-δ} (wherein 0≤δ≤1.0), Li_{0.30}Ba_{0.40}VO_{3-δ} (wherein 0≤δ≤1.0), Li_{0.30}Ba_{0.40}ReO_{3-δ} (wherein 0≤δ≤1.0), Li_{0.30}Ba_{0.40}GeO_{3-δ} (wherein 0≤δ≤1.0), Li_{0.30}Ba_{0.40}WO_{3-δ} (wherein 0≤δ≤1.0), Li_{0.30}Ba_{0.40}ZrO_{3-δ} (wherein 0≤δ≤1.0), Li_{0.30}Ba_{0.40}MoO_{3-δ} (wherein 0≤δ≤1.0), Li_{0.30}Ba_{0.40}NbO_{3-δ} (wherein 0≤δ≤1.0), Li_{0.30}Ba_{0.40}TaO_{3-δ} (wherein 0≤δ≤1.0), Li_{0.30}Ba_{0.40}HfO_{3-δ} (wherein 0≤δ≤1.0), Li_{0.30}Ba_{0.40}BiO_{3-δ} (wherein 0≤δ≤1.0), Li_{0.40}Ba_{0.20}TiO_{3-δ} (wherein 0≤δ≤1.0), Li_{0.40}Ba_{0.20}MnO_{3-δ} (wherein 0≤δ≤1.0), Li_{0.40}Ba_{0.20}NiO_{3-δ} (wherein 0≤δ≤1.0), Li_{0.40}Ba_{0.20}CrO_{3-δ} (wherein 0≤δ≤1.0), Li_{0.40}Ba_{0.20}CoO_{3-δ} (wherein 0≤δ≤1.0), Li_{0.40}Ba_{0.20}IrO_{3-δ} (wherein 0≤δ≤1.0), Li_{0.40}Ba_{0.20}RuO_{3-δ} (wherein 0≤δ≤1.0), Li_{0.40}Ba_{0.20}FeO_{3-δ} (wherein 0≤δ≤1.0), Li_{0.40}Ba_{0.20}PdO_{3-δ} (wherein 0≤δ≤1.0), Li_{0.40}Ba_{0.20}PbO_{3-δ} (wherein 0≤δ≤1.0), Li_{0.40}Ba_{0.20}RhO_{3-δ} (wherein 0≤δ≤1.0), Li_{0.40}Ba_{0.20}SnO_{3-δ} (wherein 0≤δ≤1.0), Li_{0.40}Ba_{0.20}VO_{3-δ} (wherein 0≤δ≤1.0), Li_{0.40}Ba_{0.20}ReO_{3-δ} (wherein 0≤δ≤1.0), Li_{0.40}Ba_{0.20}GeO_{3-δ} (wherein 0≤δ≤1.0), Li_{0.40}Ba_{0.20}WO_{3-δ} (wherein 0≤δ≤1.0), Li_{0.40}Ba_{0.20}ZrO_{3-δ} (wherein 0≤δ≤1.0), Li_{0.40}Ba_{0.20}MoO_{3-δ} (wherein 0≤δ≤1.0), Li_{0.40}Ba_{0.20}NbO_{3-δ} (wherein 0≤δ≤1.0), Li_{0.40}Ba_{0.20}TaO_{3-δ} (wherein 0≤δ≤1.0), Li_{0.40}Ba_{0.20}HfO_{3-δ} (wherein 0≤δ≤1.0), Li_{0.40}Ba_{0.20}BiO_{3-δ} (wherein 0≤δ≤1.0), Li_{0.25}La_{0.50}TiO_{3-δ} (wherein 0≤δ≤1.0), Li_{0.25}La_{0.50}MnO_{3-δ} (wherein 0≤δ≤1.0), Li_{0.25}La_{0.50}NiO_{3-δ} (wherein 0≤δ≤1.0), Li_{0.25}La_{0.50}CrO_{3-δ} (wherein 0≤δ≤1.0), Li_{0.25}La_{0.50}CoO_{3-δ} (wherein 0≤δ≤1.0), Li_{0.25}La_{0.50}IrO_{3-δ} (wherein 0≤δ≤1.0), Li_{0.25}La_{0.50}RuO_{3-δ} (wherein 0≤δ≤1.0), Li_{0.25}La_{0.50}FeO_{3-δ} (wherein 0≤δ≤1.0), Li_{0.25}La_{0.50}PdO_{3-δ} (wherein 0≤δ≤1.0), Li_{0.25}La_{0.50}PbO_{3-δ} (wherein 0≤δ≤1.0), Li_{0.25}La_{0.50}RhO_{3-δ} (wherein 0≤δ≤1.0), Li_{0.25}La_{0.50}SnO_{3-δ} (wherein 0≤δ≤1.0), Li_{0.25}La_{0.50}VO_{3-δ} (wherein 0≤δ≤1.0), Li_{0.25}La_{0.50}ReO_{3-δ} (wherein 0≤δ≤1.0), Li_{0.25}La_{0.50}GeO_{3-δ} (wherein 0≤δ≤1.0), Li_{0.25}La_{0.50}WO_{3-δ} (wherein 0≤δ≤1.0), Li_{0.25}La_{0.50}ZrO_{3-δ} (wherein 0≤δ≤1.0), Li_{0.25}La_{0.50}MoO_{3-δ} (wherein 0≤δ≤1.0), Li_{0.25}La_{0.50}NbO_{3-δ} (wherein 0≤δ≤1.0), Li_{0.25}La_{0.50}TaO_{3-δ} (wherein 0≤δ≤1.0), Li_{0.25}La_{0.50}HfO_{3-δ} (wherein 0≤δ≤1.0), Li_{0.25}La_{0.50}BiO_{3-δ} (wherein 0≤δ≤1.0), Li_{0.05}La_{0.82}Ti_{0.70}O_{3-δ} (wherein 0≤δ≤1.0), Li_{0.05}La_{0.82}Mn_{0.70}O_{3-δ} (wherein 0≤δ≤1.0), Li_{0.10}La_{0.82}Mn_{0.70}O_{3-δ} (wherein 0≤δ≤1.0), Li_{0.20}La_{0.77}Mn_{0.70}O_{3-δ} (wherein 0≤δ≤1.0), Li_{0.05}La_{0.82}Nb_{0.70}O_{3-δ} (wherein 0≤δ≤1.0), Li_{0.10}La_{0.80}Nb_{0.70}O_{3-δ} (wherein 0≤δ≤1.0), Li_{0.20}La_{0.77}Nb_{0.70}O_{3-δ} (wherein 0≤δ≤1.0), Li_{0.05}La_{0.82}Ta_{0.70}O_{3-δ} (wherein 0≤δ≤1.0), Li_{0.10}La_{0.80}Ta_{0.70}O_{3-δ} (wherein 0≤δ≤1.0), Li_{0.20}La_{0.77}Ta_{0.70}O_{3-δ} (wherein 0≤δ≤1.0), Li_{0.05}La_{0.82}V_{0.70}O_{3-δ} (wherein 0≤δ≤1.0), Li_{0.10}La_{0.80}V_{0.70}O_{3-δ} (wherein 0≤δ≤1.0), Li_{0.20}La_{0.77}V_{0.70}O_{3-δ} (wherein 0≤δ≤1.0), Li_{0.05}La_{0.82}W_{0.70}O_{3-δ} (wherein 0≤δ≤1.0), Li_{0.10}La_{0.80}W_{0.70}O_{3-δ} (wherein 0≤δ≤1.0), Li_{0.20}La_{0.77}W_{0.70}O_{3-δ} (wherein 0≤δ≤1.0), Li_{0.05}La_{0.82}Mo_{0.70}O_{3-δ} (wherein 0≤δ≤1.0), Li_{0.10}La_{0.80}Mo_{0.70}O_{3-δ} (wherein 0≤δ≤1.0), Li_{0.20}La_{0.77}Mo_{0.70}O_{3-δ} (wherein 0≤δ≤1.0), Li_{0.05}La_{0.82}Bi_{0.70}O_{3-δ} (wherein 0≤δ≤1.0), Li_{0.10}La_{0.80}Bi_{0.70}O_{3-δ} (wherein 0≤δ≤1.0), Li_{0.20}La_{0.77}Bi_{0.70}O_{3-δ} (wherein 0≤δ≤1.0), Li_{0.05}La_{0.82}Cr_{0.70}O_{3-δ} (wherein 0≤δ≤1.0), Li_{0.10}La_{0.80}Cr_{0.70}O_{3-δ} (wherein 0≤δ≤1.0), or Li_{0.20}La_{0.77}Cr_{0.70}O_{3-δ} (wherein 0≤δ≤1.0).

For example, the perovskite compound may be Li_{0.31}La_{0.56}TiO₃, Li_{0.34}La_{0.55}RuO₃, Li_{0.2}Ca_{0.6}Mn_{0.5}Ni_{0.5}O₃, Li_{0.34}La_{0.55}RuO_{3-δ}, or Li_{0.2}Ca_{0.6}Mn_{0.5}Ni_{0.5}O_{3-δ}. Any suitable perovskite compound containing lithium and providing electronic conductivity and ionic conductivity simultaneously may be used.

The perovskite compound may have, for example, an electronic conductivity at a temperature of 25 °C of 1.0×10⁻⁶ S/cm or greater and an ionic conductivity of 1.0×10⁻⁷ S/cm or greater, for example, 2.0×10⁻⁷ S/cm or greater.

The perovskite compound may have, for example, an electronic conductivity at a temperature of 25 °C of 5.0×10⁻⁶ S/cm or greater, 1.0×10⁻⁵ S/cm or greater, 5.0×10⁻⁵ S/cm or greater, 1.0×10⁻⁴ S/cm or greater, 5.0×10⁻⁴ S/cm or greater, 1.0×10⁻³ S/cm or greater, 5.0×10⁻³ S/cm or greater, 1.0×10⁻² S/cm or greater, 5.0×10⁻² S/cm or greater, or 1.0×10⁻¹ S/cm or greater. When a high electronic conductivity of the perovskite compound is within such ranges, internal resistance of the positive electrode and the battery including the perovskite compound may decrease, and the battery may have improved cycle characteristics.

The perovskite compound may have, for example, an ionic conductivity at a temperature of 25 °C of 5.0×10⁻⁷ S/cm or greater, 1.0×10⁻⁶ S/cm or greater, 5.0×10⁻⁶ S/cm or greater, 1.0×10⁻⁵ S/cm or greater, 5.0×10⁻⁵ S/cm or greater, 1.0×10⁻⁴ S/cm or greater, 5.0×10⁻⁴ S/cm or greater, 1.0×10⁻³ S/cm or greater, 5.0×10⁻³ S/cm or greater, or 1.0×10⁻² S/cm or greater. When a high ionic conductivity of the perovskite compound is within such ranges, internal resistance of the positive electrode and the battery including the perovskite compound may further decrease, and the battery may have improved cycle characteristics.

For example, the first lithium-containing metal oxide may include a spinel compound represented by Formula 2 or Formula 3:

Formula 2 Li_{1±x}M_{2±}γO_{4-δ1}

Formula 3 Li_{4±a}M_{5±b}O_{12-δ2}

wherein, in Formulae 2 and 3, M may be at least one metal element of Groups 2 to 16 of the Periodic Table of Elements, δ1 and δ2 may each be oxygen vacancy, and 0<x<1, 0<y<1, 0≤δ1≤1, 0<a<2, 0.3<b<5, and 0≤δ2≤3.

The spinel compound is a compound having a spinel crystalline structure or a spinel-like crystalline structure.

In an embodiment, in Formulae 2 and 3, M may be at least one of Ni, Pd, Pb, Fe, Ir, Co, Rh, Mn, Cr, Ru, Re, Sn, V, Ge, W, Zr, Ti, Mo, Hf, U, Nb, Th, Ta, Bi, Ca, Sr, Ba, Y, La, Ce, Pr, Nd, Pm, Sm, Gd, Tb, Dy, Ho, Er, Mg, Al, Sc, Zn, Ga, Rb, Ag, Cd, In, Sb, Pt, or Au, δ1 and δ2 may each be an oxygen vacancy, and 0<x<1, 0<y<1, 0≤δ1≤1, 0<a<2, 0.3<b<5, and 0≤δ2≤3.

In an embodiment, the spinel compound may be represented by Formula 4:

Formula 4 Li_{4±a}Ti_{5-b}M'_{c}O_{12-δ}

wherein, in Formula 4, M' may include at least one of Cr, Mg, Ca, Sr, Sc, Y, La, Ce, Pr, Nd, Sm, Eu, Gd, Tb, Dy, Ho, Er, Tm, Yb, Lu, Zr, Hf, V, Nb, Ta, Mo, W, Mn, Tc, Re, Fe, Ru, Os, Co, Rh, Ir, Ni, Pd, Pt, Cu, Ag, Au, Zn, Cd, Hg, Al, Ga, In, Tl, Ge, Sn, Pb, Sb, Bi, Po, As, Se, or Te, δ may be an oxygen vacancy, and 0.3<a<2, 0.3<b<2, 0.3<c<2, and 0≤δ≤3. In an embodiment, 0≤δ≤2.5, 0≤δ≤2, 0≤δ≤1.5, 0≤δ≤1, or 0≤δ≤0.5.

In an X-ray diffraction ("XRD") spectrum of the spinel compound of Formula 4, a peak intensity ratio (Iₐ:I_{b}) of a peak intensity (Iₐ) corresponding to a crystal plane (111) at a diffraction angle 2θ=18°±2.5° to a peak intensity (I_{b}) at a diffraction angle 2θ=23.5°±2.5° may be 1:1 or less, 0.9:1 or less, 0.8:1 or less, 0.7:1 or less, 0.6:1 or less, 0.5:1 or less, or 0.4:1 or less. When the spinel compound has such a peak intensity ratio, the electronic conductivity and the ionic conductivity may further improve.

The spinel compound of Formula 4 may have another phase different from a phase having a spinel-like crystal structure. For example, a composite conductor (the spinel compound of Formula 4) may include a phase having a spinel-like crystal structure that belongs to an Fd-3m space group, and in addition to the phase, the composite conductor may include another phase that is different from the phase having a spinel-like crystal structure and is Li₂TiO₃, Gd₂Ti₂O₇, GdTiO₃, LiNbO₃, or Nb₂O₅. As the composite conductor has a polycrystalline structure including a plurality of different phases, the electronic conductivity and the ionic conductivity of the composite conductor may further improve.

For example, a band gap between a valence band of the spinel compound and a conduction band of the spinel compound may be, for example, 2.0 electron volts (eV) or less, 1.8 eV or less, 1.6 eV or less, 1.4 eV or less, or 1.2 eV or less. A band gap between a valence band and a conduction band of a composite conductor may be small, electron transfer from the valence band to the conduction band may be facilitated, and electronic conductivity of the spinel compound may be improved.

In the spinel compound of Formula 4, for example, Ti may have at least one oxidation number of a trivalent oxidation number or a tetravalent oxidation number. For example, as Ti in the composite conductor has a mixed valence state with at least two different oxidation numbers, a new state density function may be observed near the Fermi energy (Ef), and the band gap between the valence band and the conduction band may be reduced. In conclusion, the spinel compound may have further improved electronic conductivity.

M' in the spinel compound may have, for example, an oxidation number different from an oxidation number of Ti. For example, due to the additional inclusion of M' having an oxidation number different from those of Ti in the composite conductor, an additional new state density function may be observed near the Fermi energy (Ef), and the band gap between the valence band and the conduction band may be reduced. In conclusion, the spinel compound may have further improved electronic conductivity.

The spinel compound of Formula 4 may provide further improved ionic conductivity through the inclusion of an oxygen vacancy. Further, due to the inclusion of an oxygen vacancy in the composite conductor, the position of the state density function may be shifted closer to the Fermi energy (Ef), and the band gap between the valance band and the conduction band may be reduced. In conclusion, the spinel compound may have further improved electronic conductivity.

In an embodiment, the spinel compound may include at least one of Li_{4±x}Ti_{5-y}Mg_{z}O_{12-δ} (0.4<x≤1, 0.4<y≤1, 0.4<z≤1, and 0<δ≤3), Li_{4±x}Ti_{5-y}Ca_{z}O_{12-δ} (wherein 0.4<x≤1, 0.4<y≤1, 0.4<z≤1, and 0<δ≤3), Li_{4±x}Ti_{5-y}Sr_{z}O_{12-δ} (wherein 0.4<x≤1, 0.4<y≤1, 0.4<z≤1, and 0<δ≤3), Li_{4±x}Ti_{5-y}Sc_{z}O_{12-δ} (wherein 0.4<x≤1, 0.4<y≤1, 0.4<z≤1, and 0<δ≤3), Li_{4±x}Ti_{5-y}Y_{z}O_{12-δ} (wherein 0.4<x≤1, 0.4<y≤1, 0.4<z≤1, and 0<δ≤3), Li_{4±x}Ti_{5-y}La_{z}O_{12-δ} (wherein 0.4<x≤1, 0.4<y≤1, 0.4<z≤1, and 0<δ≤3), Li_{4±x}Ti_{5-y}Ce_{z}O_{12-δ} (wherein 0.4<x≤1, 0.4<y≤1, 0.4<z≤1, and 0<δ≤3), Li_{4±x}Ti_{5-y}Pr_{z}O_{12-δ} (wherein 0.4<x≤1, 0.4<y≤1, 0.4<z≤1, and 0<δ≤3), Li_{4±x}Ti_{5-y}Nd_{z}O_{12-δ} (wherein 0.4<x≤1, 0.4<y≤1, 0.4<z≤1, and 0<δ≤3), Li_{4±x}Ti_{5-y}Sm_{z}O_{12-δ} (wherein 0.4<x≤1, 0.4<y≤1, 0.4<z≤1, and 0<δ≤3), Li_{4±x}Ti_{5-y}Eu_{z}O_{12-δ} (wherein 0.4<x≤1, 0.4<y≤1, 0.4<z≤1, and 0<δ≤3), Li_{4±x}Ti_{5-y}Gd_{z}O_{12-δ} (wherein 0.4<x≤1, 0.4<y≤1, 0.4<z≤1, and 0<δ≤3), Li_{4±x}Ti_{5-y}Tb_{z}O_{12-δ} (wherein 0.4<x≤1, 0.4<y≤1, 0.4<z≤1, and 0<δ≤3), Li_{4±x}Ti_{5-y}Dy_{z}O_{12-δ} (wherein 0.4<x≤1, 0.4<y≤1, 0.4<z≤1, and 0<δ≤3), Li_{4±x}Ti_{5-y}Ho_{z}O_{12-δ} (wherein 0.4<x≤1, 0.4<y≤1, 0.4<z≤1, and 0<δ≤3), Li_{4±x}Ti_{5-y}Er_{z}O_{12-δ} (wherein 0.4<x≤1, 0.4<y≤1, 0.4<z≤1, and 0<δ≤3), Li_{4±x}Ti_{5-y}Tm_{z}O_{12-δ} (wherein 0.4<x≤1, 0.4<y≤1, 0.4<z≤1, and 0<δ≤3), Li_{4±x}Ti_{5-y}Yb_{z}O_{12-δ} (wherein 0.4<x≤1, 0.4<y≤1, 0.4<z≤1, and 0<δ≤3), Li_{4±x}Ti_{5-y}Lu_{z}O_{12-δ} (wherein 0.4<x≤1, 0.4<y≤1, 0.4<z≤1, and 0<δ≤3), Li_{4±x}Ti_{5-y}Zr_{z}O_{12-δ} (wherein 0.4<x≤1, 0.4<y≤1, 0.4<z≤1, and 0<δ≤3), Li_{4±x}Ti_{5-y}Hf_{z}O_{12-δ} (wherein 0.4<x≤1, 0.4<y≤1, 0.4<z≤1, and 0<δ≤3), Li_{4±x}Ti_{5-y}V_{z}O_{12-δ} (wherein 0.4<x≤1, 0.4<y≤1, 0.4<z≤1, and 0<δ≤3), Li_{4±x}Ti_{5-y}Nb_{z}O_{12-δ} (wherein 0.4<x≤1, 0.4<y≤1, 0.4<z≤1, and 0<δ≤3), Li_{4±x}Ti_{5-y}Ta_{z}O_{12-δ} (wherein 0.4<x≤1, 0.4<y≤1, 0.4<z≤1, and 0<δ≤3), Li_{4±x}Ti_{5-y}Mo_{z}O_{12-δ} (wherein 0.4<x≤1, 0.4<y≤1, 0.4<z≤1, and 0<δ≤3), Li_{4±x}Ti_{5-y}W_{z}O_{12-δ} (wherein 0.4<x≤1, 0.4<y≤1, 0.4<z≤1, and 0<δ≤3), Li_{4±x}Ti_{5-y}Mn_{z}O_{12-δ} (wherein 0.4<x≤1, 0.4<y≤1, 0.4<z≤1, and 0<δ≤3), Li_{4±x}Ti_{5-y}Tc_{z}O_{12-δ} (wherein 0.4<x≤1, 0.4<y≤1, 0.4<z≤1, and 0<δ≤3), Li_{4±x}Ti_{5-y}Re_{z}O_{12-δ} (wherein 0.4<x≤1, 0.4<y≤1, 0.4<z≤1, and 0<δ≤3), Li_{4±x}Ti_{5-y}Fe_{z}O_{12-δ} (wherein 0.4<x≤1, 0.4<y≤1, 0.4<z≤1, and 0<δ≤3), Li_{4±x}Ti_{5-y}Ru_{z}O_{12-δ} (wherein 0.4<x≤1, 0.4<y≤1, 0.4<z≤1, and 0<δ≤3), Li_{4±x}Ti_{5-y}Os_{z}O_{12-δ} (wherein 0.4<x≤1, 0.4<y≤1, 0.4<z≤1, and 0<δ≤3), Li_{4±x}Ti_{5-y}Co_{z}O_{12-δ} (wherein 0.4<x≤1, 0.4<y≤1, 0.4<z≤1, and 0<δ≤3), Li_{4±x}Ti_{5-y}Rh_{z}O_{12-δ} (wherein 0.4<x≤1, 0.4<y≤1, 0.4<z≤1, and 0<δ≤3), Li_{4±x}Ti_{5-y}Ir_{z}O_{12-δ} (wherein 0.4<x≤1, 0.4<y≤1, 0.4<z≤1, and 0<δ≤3), Li_{4±x}Ti_{5-y}Ni_{z}O_{12-δ} (wherein 0.4<x≤1, 0.4<y≤1, 0.4<z≤1, and 0<δ≤3), Li_{4±x}Ti_{5-y}Pd_{z}O_{12-δ} (wherein 0.4<x≤1, 0.4<y≤1, 0.4<z≤1, and 0<δ≤3), Li_{4±x}Ti_{5-y}Pt_{z}O_{12-δ} (wherein 0.4<x≤1, 0.4<y≤1, 0.4<z≤1, and 0<δ≤3), Li_{4±x}Ti_{5-y}Cu_{z}O_{12-δ} (wherein 0.4<x≤1, 0.4<y≤1, 0.4<z≤1, and 0<δ≤3), Li_{4±x}Ti_{5-y}Ag_{z}O_{12-δ} (wherein 0.4<x≤1, 0.4<y≤1, 0.4<z≤1, and 0<δ≤3), Li_{4±x}Ti_{5-y}Au_{z}O_{12-δ} (wherein 0.4<x≤1, 0.4<y≤1, 0.4<z≤1, and 0<δ≤3), Li_{4±x}Ti_{5-y}Zn_{z}O_{12-δ} (wherein 0.4<x≤1, 0.4<y≤1, 0.4<z≤1, and 0<δ≤3), Li_{4±x}Ti_{5-y}Cd_{z}O_{12-δ} (wherein 0.4<x≤1, 0.4<y≤1, 0.4<z≤1, and 0<δ≤3), Li_{4±x}Ti_{5-y}Hg_{z}O_{12-δ} (wherein 0.4<x≤1, 0.4<y≤1, 0.4<z≤1, and 0<δ≤3), Li_{4±x}Ti_{5-y}Al_{z}O_{12-δ} (wherein 0.4<x≤1, 0.4<y≤1, 0.4<z≤1, and 0<δ≤3), Li_{4±x}Ti_{5-y}Ga_{z}O_{12-δ} (wherein 0.4<x≤1, 0.4<y≤1, 0.4<z≤1, and 0<δ≤3), Li_{4±x}Ti_{5-y}In_{z}O_{12-δ} (wherein 0.4<x≤1, 0.4<y≤1, 0.4<z≤1, and 0<δ≤3), Li_{4±x}Ti_{5-y}Tl_{z}O_{12-δ} (wherein 0.4<x≤1, 0.4<y≤1, 0.4<z≤1, and 0<δ≤3), Li_{4±x}Ti_{5-y}Ge_{z}O_{12-δ} (wherein 0.4<x≤1, 0.4<y≤1, 0.4<z≤1, and 0<δ≤3), Li_{4±x}Ti_{5-y}Sn_{z}O_{12-δ} (wherein 0.4<x≤1, 0.4<y≤1, 0.4<z≤1, and 0<δ≤3), Li_{4±x}Ti_{5-y}Pb_{z}O_{12-δ} (wherein 0.4<x≤1, 0.4<y≤1, 0.4<z≤1, and 0<δ≤3), Li_{4±x}Ti_{5-y}Sb_{z}O_{12-δ} (wherein 0.4<x≤1, 0.4<y≤1, 0.4<z≤1, and 0<δ≤3), Li_{4±x}Ti_{5-y}Bi_{z}O_{12-δ} (wherein 0.4<x≤1, 0.4<y≤1, 0.4<z≤1, and 0<δ≤3), Li_{4±x}Ti_{5-y}Po_{z}O_{12-δ} (wherein 0.4<x≤1, 0.4<y≤1, 0.4<z≤1, and 0<δ≤3), Li_{4±x}Ti_{5-y}As_{z}O_{12-δ} (wherein 0.4<x≤1, 0.4<y≤1, 0.4<z≤1, and 0<δ≤3), Li_{4±x}Ti_{5-y}Se_{z}O_{12-δ} (wherein 0.4<x≤1, 0.4<y≤1, 0.4<z≤1, and 0<δ≤3), or Li_{4±x}Ti_{5-y}Te_{z}O_{12-δ} (wherein 0.4<x≤1, 0.4<y≤1, 0.4<z≤1, and 0<δ≤3).

In an embodiment, the spinel compound may be LiMn₂O₄, LiTiNbO₄, Li₄Ti₅O₁₂, Li₄Mn₅O₁₂, or Li_{4.5}Ti_{4.5}Gd_{0.5}O₁₂. Any suitable spinel compound that contains lithium and simultaneously provides electronic conductivity and ionic conductivity may be used.

The spinel compound may have, for example, an electronic conductivity at a temperature of 25 °C of 1.0×10⁻⁶ S/cm or greater and an ionic conductivity of 1.0×10⁻⁷ S/cm or greater.

The spinel compound may have, for example, an electronic conductivity at a temperature of 25 °C of 5.0×10⁻⁶ S/cm or greater, 1.0×10⁻⁵ S/cm or greater, 5.0×10⁻⁵ S/cm or greater, 1.0×10⁻⁴ S/cm or greater, 5.0×10⁻⁴ S/cm or greater, 1.0×10⁻³ S/cm or greater, 5.0×10⁻³ S/cm or greater, 1.0×10⁻² S/cm or greater, 5.0×10⁻² S/cm or greater, or 1.0×10⁻¹ S/cm or greater. When a high electronic conductivity of the spinel compound is within such ranges, internal resistance of the positive electrode and the battery including the spinel compound may decrease, and the battery may have improved cycle characteristics.

The spinel compound may have, for example, an ionic conductivity at a temperature of 25 °C of 5.0×10⁻⁷ S/cm or greater, 1.0×10⁻⁶ S/cm or greater, 5.0×10⁻⁶ S/cm or greater, 1.0×10⁻⁵ S/cm or greater, 5.0×10⁻⁵ S/cm or greater, 1.0×10⁻⁴ S/cm or greater, 5.0×10⁻⁴ S/cm or greater, 1.0×10⁻³ S/cm or greater, 5.0×10⁻³ S/cm or greater, or 1.0×10⁻² S/cm or greater. When a high ionic conductivity of the spinel compound is within such ranges, internal resistance of the positive electrode and the battery including the spinel compound may further decrease, and the battery may have improved cycle characteristics.

The first lithium-containing metal oxide may include, for example, at least one of a layered compound, a garnet compound, a sodium super ionic conductor ("NASICON") compound, a lithium super ionic conductor ("LISICON") compound, a phosphate compound, a tavorite compound, a triplite compound, an anti-perovskite compound, a silicate compound, or a borate compound. As the first lithium-containing metal oxide includes a compound having such a crystalline structure, decomposition of the positive electrode due to, for example, radicals or the like accompanied during electrochemical reactions may be further prevented.

The first lithium-containing metal oxide may include, for example, a layered compound represented by Formula 5:

Formula 5 Li_{1±x}M_{1±y}O_{2±δ}

wherein, in Formula 5, M may be at least one metal element of Groups 2 to 16 of the Periodic Table of Elements, δ may be oxygen vacancy, and 0<x<0.5, 0<y<1, and 0≤δ≤1.

The layered compound may be a compound having a layered crystalline structure.

In an embodiment, the layered compound may be represented by: LiₐA_{1-b}B_{b}D₂ (wherein 0.90≤a≤1.8 and 0≤b≤0.5); LiₐE_{1-b}B_{b}O_{2-c}D_{c} (wherein 0.90≤a≤1.8, 0≤b≤0.5, and 0≤c≤0.05); LiₐNi_{1-b-c}Co_{b}B_{c}D_{α} (wherein 0.90≤a≤1.8, 0≤b≤0.5, 0≤c≤0.05, and 0<α≤2); LiₐNi_{1-b-c}Co_{b}B_{c}O_{2-α}F_{α} (wherein 0.90≤a≤1.8, 0≤b≤0.5, 0≤c≤0.05, and 0<a<2); LiₐNi_{1-b-c}Co_{b}B_{c}O_{2-α}F₂ (wherein 0.90≤a≤1.8, 0≤b≤0.5, 0≤c≤0.05, and 0<a<2); LiₐNi_{1-b-c}Mn_{b}B_{c}D_{α} (wherein 0.90≤a≤1.8, 0≤b≤0.5, 0≤c≤0.05, and 0<α≤2); LiₐNi_{1-b-c}Mn_{b}B_{c}O_{2-α}F_{α} (wherein 0.90≤a≤1.8, 0≤b≤0.5, 0≤c≤0.05, and 0<a<2); LiₐNi_{1-b-c}Mn_{b}B_{c}O_{2-α}F₂ (wherein 0.90≤a≤1.8, 0≤b≤0.5, 0≤c≤0.05, and 0<a<2); LiₐNi_{b}E_{c}G_{d}O₂ (wherein 0.90≤a≤1.8, 0≤b≤0.9, 0≤c≤0.5, and 0.001≤d≤0.1); LiₐNi_{b}Co_{c}Mn_{d}GeO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8 and 0.001≤b≤0.1); LiₐCoG_{b}O₂ (wherein 0.90≤a≤1.8 and 0.001≤b≤0.1); or LiₐMnG_{b}O₂ (wherein 0.90≤a≤1.8 and 0.001≤b≤0.1). A is at least one of Ni, Co, or Mn; B' is at least one of Al, Ni, Co, Mn, Cr, Fe, Mg, Sr, V, or a rare earth element; D is at least one of O, F, S, or P; E is at least one of Co, or Mn; F' is at least one of F, S, or P; G is at least one of Al, Cr, Mn, Fe, Mg, La, Ce, Sr, or V.

The layered compound may be, for example, LiNiO₂, LiCoO₂, LiMnO₂, LiNi₁₋ₓMnₓO₂ (0<x<1), LiNi_{1-x-y}CoₓMn_{y}O₂ (wherein 0<x≤0.5 and 0<y≤0.5), LiNi_{0.8}Co_{0.1}Mn_{0.1}O₂, or LiNi_{1-x-y}CoₓAl_{y}O₂ (wherein 0<x≤0.5 and 0<y≤0.5). Any suitable layered compound containing lithium may be used.

The first lithium-containing metal oxide may include, for example, a NASICON compound represented by Formula 6:

Formula 6 Li₁₊ₓAₓM₂₋ₓ(XO₄)₃

wherein, in Formula 6, A and M may each independently be at least one metal element of Groups 2 to 16 of the Periodic Table of Elements, X may be As, P, Mo, or S, and 0<x<1.0.

The NASICON compound is a compound having a NASICON crystalline structure (e.g., a crystalline structure isostructural to that of a sodium superionic conductor) or a NASICON-like crystalline structure.

The NASICON compound may be, for example, Li_{1.3}Al_{0.3}Ti_{1.7}(PO₄)₃, Li_{1.3}Al_{0.3}Ge_{1.7}(PO₄)₃, or Li_{1.3}Al_{0.3}Zr_{1.7}(PO₄)₃. Any suitable NASICON compound containing lithium may be used.

The first lithium-containing metal oxide may include, for example, a LISICON compound represented by Formula 7:

Formula 7 Li_{8-c}M1ₐM2_{b}O₄

wherein, in Formula 7, M1 and M2 may each independently be at least one metal element of Groups 2 to 16 of the Periodic Table of Elements, c=ma+nb, m may be an oxidation number of M1, n may be an oxidation number of M2, 0<c<8, 0<a≤1, and 0≤b≤1.

The LISICON compound is a compound having a LISICON crystalline structure (e.g., a crystalline structure isostructural to that of a lithium superionic conductor) or a LISICON-like crystalline structure.

The LISICON compound may be, for example, Li₄SiO₄, Li_{3.75}Si_{0.75}P_{0.25}O₄, Li₁₄Zn(GeO₄)₄, Li_{3.4}V_{0.6}Ge_{0.4}O₄, or Li_{3.5}V_{0.5}Ti_{0.5}O₄. Any suitable LISICON compound containing lithium may be used.

The first lithium-containing metal oxide may include, for example, a garnet compound represented by Formula 8:

Formula 8 LiₓM1₃M2₂O₁₂

wherein, in Formula 8, M1 and M2 may each independently be at least one metal element of Groups 2 to 16 of the Periodic Table of Elements, and 3.0≤x≤7.0.

The garnet compound is a compound having a garnet crystalline structure or a garnet-like crystalline structure.

The garnet compound may be, for example, Li₃Tb₃Te₂O₁₂, Li_{4.22}Al_{0.26}La₃Zr₂WO₁₂, Li₅La₃Nb₂O₁₂, Li₆BaLa₂Ta₂O₁₂, or Li₇La₃Zr₂O₁₂. Any suitable garnet compound containing lithium may be used.

The first lithium-containing metal oxide may include, for example, phosphate compounds represented Formulae 9 and 10:

Formula 9 Li_{1±x}MPO₄

Formula 10 Li₂MP₂O₇

wherein, in Formulae 9 and 10, M may be at least one metal element of Groups 2 to 16 of the Periodic Table of Elements, and 0≤x≤1.0.

The compound represented by Formula 9 may be an olivine compound. The olivine compound is a compound having an olivine crystalline structure or an olivine-like crystalline structure.

The phosphate compound may be, for example, LiFePO₄, LiMnPO₄, LiCoPO₄ LiNiPO₄, Li₂MnP₂O₇, or Li₂FeP₂O₇. Any suitable phosphate compound containing lithium may be used.

The first lithium-containing metal oxide may include, for example, a tavorite or triplite compound represented by Formula 11:

Formula 11 Li_{1±x}M(TO₄)X

wherein in Formula 11, M may be at least one metal element of Groups 2 to 16 of the Periodic Table of Elements, T may be P or S, and X may be F, O, or OH, and 0≤x≤1.0.

The tavorite compound is a compound having a tavorite crystalline structure or a tavorite-like crystalline structure. The triplite compound is a compound having a triplite crystalline structure or a triplite-like crystalline structure.

The tavorite or triplite compound may be, for example, LiVO(PO₄), LiV(PO₄)F, LiFe(SO₄)F, or Li₂Fe(PO₄)F. Any suitable tavorite triplite compound containing lithium may be used. The tavorite compound may have the same composition as the triplite compound with a different crystalline structure.

The first lithium-containing metal oxide may include, for example, an anti-perovskite compound represented by Formula 12:

Formula 12 LiₓM_{y}OA

wherein in Formula 11, M may be at least one metal element of Groups 2 to 16 of the Periodic Table of Elements, A may be F, Cl, Br, I, S, Se, or Te, and 2.0≤x≤3.0 and 0≤y≤1.0.

The anti-perovskite compound has a perovskite crystalline structure or a perovskite-like crystalline structure. However, the positions of cations and anions are in reverse to those of the perovskite compound.

The anti-perovskite compound may be, for example, Li₃OCl, Li₂OHBr, Li₂(OH)_{0.9}F_{0.1}Cl, or Li₃OCl_{0.5}Br_{0.5}. Any suitable anti-perovskite compound containing lithium may be used.

The first lithium-containing metal oxide may include, for example, at least one silicate compound represented by Formula 13:

Formula 13 Li_{2±x}MSiO₄

wherein, in Formula 13, M may be at least one metal element of Groups 2 to 16 of the Periodic Table of Elements, and 0≤x≤1.0.

The silicate compound may be a crystalline compound including a SiO₄⁴⁻ anion.

The silicate compound may be, for example, Li₂MnSiO₄ or Li₂FeSiO₄. Any suitable silicate compound containing lithium may be used.

The first lithium-containing metal oxide may include, for example, at least one borate compound represented by Formula 14:

Formula 14 Li_{1±x}MBO₃

wherein, in Formula 14, M may be at least one metal element of Groups 2 to 16 of the Periodic Table of Elements, and 0≤x≤1.0.

The borate compound may be a crystalline compound including a BO₃³⁻ anion.

The borate compound may be, for example, LiFeBO₃ or LiCoBO₃. Any suitable borate compound containing lithium may be used.

At least one of the layered compound represented by Formula 5, the NASICON compound represented by Formula 6, the LISICON compound represented by Formula 7, the garnet compound represented by Formula 8, the phosphate compounds represented by Formulae 9 and 10, the tavorite or triplite compound represented by Formula 11, the anti-perovskite compound represented by Formula 12, the silicate compound represented by Formula 13, or the borate compound represented by Formula 14 may have an ionic conductivity at a temperature of 25 °C, for example, 1.0×10⁻⁶ S/cm or greater, 5.0×10⁻⁶ S/cm or greater, 1.0×10⁻⁵ S/cm or greater, 5.0×10⁻⁵ S/cm or greater, 1.0×10⁻⁴ S/cm or greater, 5.0×10⁻⁴ S/cm or greater, 1.0×10⁻³ S/cm or greater, 5.0×10⁻³ S/cm or greater, 1.0×10⁻² S/cm or greater, 5.0×10⁻² S/cm or greater, or 1.0×10⁻¹ S/cm or greater. When a high ionic conductivity of the compounds of Formulae 5 to 14 is within such ranges, internal resistance of the positive electrode and the lithium-art battery including the compounds of Formulae 5 to 14 may further decrease.

The first lithium-containing metal oxide included in at least one of the porous layer 10a or the barrier layer 10b may be, for example, electrochemically stable in a voltage range of about 2.0 volts (V) to about 4.0 V versus lithium metal. Accordingly, the positive electrode 10 including the porous layer 10a and the barrier layer 10b may be used for a long time in a battery having an operation voltage in a range of about 2.0 V to about 4.0 V versus lithium metal.

A lithium metal battery according to an embodiment may include the positive electrode described above; a negative electrode including lithium; and an electrolyte between the positive electrode and the negative electrode.

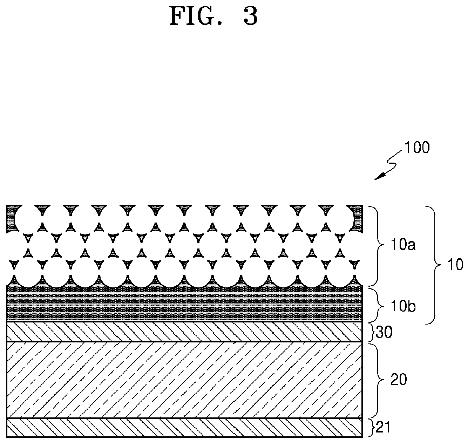

As shown in FIG. 3, as the lithium-air battery 100 may include the positive electrode 10 including the porous layer 10a and the barrier layer 10b disposed on a, e.g., one, surface of the porous layer 10a, wherein the barrier layer 10b may include the first lithium-containing metal oxide, the lithium-air battery 100 may have improved structural stability and deterioration thereof may be prevented. In addition, the lithium-air battery 100 may have a simple structure and a reduced internal resistance, and cycle characteristics may be improved.

The lithium-air battery 100 may include the positive electrode 10. The positive electrode 10 may be an air electrode. For example, the positive electrode 10 may be on a positive electrode current collector (not shown).

The porous layer 10a and the barrier layer 10b included in the positive electrode 10 may include the first lithium-containing metal oxide. A content of the first lithium-containing metal oxide may be in a range of, for example, about 1 part to about 100 parts by weight, about 10 parts to about 100 parts by weight, about 50 parts to about 100 parts by weight, about 60 parts to about 100 parts by weight, about 70 parts to about 100 parts by weight, about 80 parts to about 100 parts by weight, or about 90 parts to about 100 parts by weight, based on 100 parts by weight of the positive electrode 10. In an embodiment, the positive electrode 10 may have a monolithic structure substantially formed of the porous layer 10a and the barrier layer 10b. The porous layer 10a and the barrier layer 10b may be, for example, substantially formed of the first lithium-containing metal oxide. As the positive electrode 10 is formed of the porous layer 10a and the barrier layer 10b including the first lithium-containing metal oxide, the positive electrode 10 may have a simple structure and may be easily manufactured. As the positive electrode 10 includes the barrier layer 10b, a portion of the positive electrode 10 may be, for example, impermeable to gas such as oxygen or air. As the porous layer 10a of the positive electrode 10 is at least one of porous or gas-permeable, oxygen or air may be diffused into the positive electrode 10, and at least one of lithium ions or electrons may migrate through the first lithium-containing metal oxide included in the positive electrode 10. Thus, electrochemical reactions by oxygen, lithium ions, and electrons may occur in the positive electrode 10. In addition, due to, for example, the gas barrier characteristics of the barrier layer 10b of the positive electrode 10, migration of oxygen or air permeated into the positive electrode to the lithium metal negative electrode layer may be prevented, and deterioration of the negative electrode may be prevented and lifespan of the lithium-air battery may be improved.

The positive electrode 10 according to an embodiment may further include, for example, another positive electrode material, in addition to a porous film including a first lithium-containing metal oxide.

The positive electrode 10 may further include, for example, a conductive material. Such a conductive material may be, for example, porous. As the conductive material is porous, permeation of air into the conductive material may be facilitated. The conductive material may be a material that is at least one of porous or electrically conductive. Any suitable conductive material may be used. For example, the conductive material may be a porous carbonaceous material. Examples of the carbonaceous material may include carbon blacks, graphites, graphenes, activated carbons, carbon fibers, or the like. Any suitable carbonaceous material may be used. The conductive material may be, for example, a metallic material. The metallic material may be, for example, metal fibers, metal meshes, metal powders, or the like. The metal powders may be, for example, copper, silver, nickel, aluminum, or the like. The conductive material may be, for example, an electrically conductive organic material. Examples of the electrically conductive organic material include a polyphenylene derivative or a polythiophene derivative. Two or more different conductive material may be used. The positive electrode may include a composite conductor as the conductive material. The positive electrode may further include any of the above-listed conductive materials, in addition to the composite conductor.

The positive electrode 10 may further include, for example, a catalyst for oxidation/reduction of oxygen. The catalyst may be, for example, a precious metal-based catalyst such as platinum, gold, silver, palladium, ruthenium, rhodium, or osmium; an oxide-based catalyst such as manganese oxide, iron oxide, cobalt oxide, or nickel oxide; and an organometallic catalyst such as cobalt phthalocyanine. Any suitable catalyst for oxidation/reduction of oxygen may be used.

For example, the catalyst may be supported on a catalyst support. The catalyst support may be, for example, an oxide catalyst support, a zeolite catalyst support, a clay-based mineral catalyst support, a carbon catalyst support, or the like. The oxide catalyst support may be, for example, a metal/metalloid oxide catalyst support including at least one of Al, Si, Zr, Ti, Ce, Pr, Sm, Eu, Tb, Tm, Yb, Sb, Bi, V, Cr, Mn, Fe, Co, Ni, Cu, Nb, Mo, or W. The oxide catalyst support may include, for example, alumina, silica, zirconium oxide, titanium dioxide, or the like. The carbon catalyst support may be a carbon black such as Ketjen black, acetylene black, channel black, or lamp black; a graphite such as natural graphite, artificial black, or expandable graphite; an activated carbon; or a carbon fiber. Any suitable catalyst support may be used.

The positive electrode 10 may further include, for example, a binder. The binder may include, for example, a thermoplastic resin or a thermocurable resin. Non-limiting examples of the binder include polyethylene, polypropylene, polytetrafluoro ethylene ("PTFE"), polyvinylidene fluoride ("PVdF"), styrene-butadiene rubber, tetrafluoroethylene-perfluoro alkyl vinyl ether copolymer, vinylidene fluoride-hexafluoropropylene copolymer, vinylidene fluoride-chlorotrifluoroethylene copolymer, ethylene-tetrafluoroethylene copolymer, polychlorotrifluoroethylene, vinylidene fluoride-pentafluoro propylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethyl vinyl ether-tetrafluoro ethylene copolymer, and ethylene-acrylic acid copolymer. Two or more different binders may be used. Any suitable binder may be used.

For example, the positive electrode 10 may be manufactured by mixing a conductive material, a catalyst for oxidation/reduction of oxygen, and a binder together, and adding a solvent to the resulting mixture to prepare a positive electrode slurry, coating the positive electrode slurry on a surface of a substrate, drying the coated positive electrode slurry, and press-molding the positive electrode slurry against the base to improve a density of the electrode. The substrate may be, for example, a porous film including the porous layer 10a and the barrier layer 10b. A more specific method of preparing the cathode can be referred to below under the heading "Preparation of positive electrode".

The lithium-air battery 100 may include the negative electrode 20. The negative electrode 20 may include lithium.

The negative electrode 20 may be, for example, a lithium metal thin film or a lithium metal-based alloy thin film. For example, the lithium metal-based alloy may be an alloy of lithium with, for example, aluminum, tin, magnesium, indium, calcium, titanium, or vanadium.

The lithium-air battery 100 may include an electrolyte layer 30 disposed between the positive electrode 10 and the negative electrode 20.

In an embodiment, the thickness of the electrolyte layer 30 may be in a range of about 1 µm to about 1,000 µm, about 1 µm to about 500 µm, about 1 µm to about 300 µm, about 1 µm to about 200 µm, about 1 µm to about 100 µm, about 1 µm to about 50 µm, about 1 µm to about 40 µm, about 1 µm to about 30 µm, about 1 µm to about 20 µm, or about 1 µm to about 10 µm.

The electrolyte layer 30 may include at least one of a liquid electrolyte, a gel electrolyte, or a solid electrolyte. The liquid electrolyte, the gel electrolyte, and the solid electrolyte are not particularly limited, and may be any suitable electrolyte.

The solid electrolyte may include at least one of a solid electrolyte including an ion-conductive inorganic material, a solid electrolyte including a polymeric ionic liquid ("PIL") and a lithium salt, a solid electrolyte including an ion-conductive polymer and a lithium salt, or a solid electrolyte including an electron-conductive polymer. Any suitable solid electrolyte material may be used.

The ion-conductive inorganic material may include at least one of a glass or amorphous metal ionic conductor, a ceramic active metal ionic conductor, or a glass-ceramic active metal ionic conductor. Any suitable ion-conductive inorganic material may be used. The ion-conductive inorganic material may be, for example, a molded product of ion-conductive inorganic particles or sheet.

The ion-conductive inorganic material may be, for example, at least one of LiPON(Lithium phosphorus oxynitride), BaTiO₃, Pb(ZrₐTi₁₋ₐ)O₃ ("PZT") (wherein 0≤a≤1), Pb₁₋ₓLaₓZr_{1-y}Ti_{y}O₃ ("PLZT") (wherein 0≤x<1 and 0≤y<1), Pb(Mg_{1/3}Nb_{2/3})O₃-PbTiO₃ ("PMN-PT"), HfO₂, SrTiO₃, SnO₂, CeO₂, Na₂O, MgO, NiO, CaO, BaO, ZnO, ZrO₂, Y₂O₃, Al₂O₃, TiO₂, SiO₂, SiC, lithium phosphate (Li₃PO₄), lithium titanium phosphate (LiₓTi_{y}(PO₄)₃, wherein 0<x<2 and 0<y<3), lithium aluminum titanium phosphate (LiₓAl_{y}Ti_{z}(PO₄)₃, wherein 0<x<2, 0<y<1, and 0<z<3), Li_{1+x+y}(AlₐGa₁₋ₐ)ₓ(Ti_{b}Ge_{1-b})₂₋ₓSi_{y}P_{3-y}O₁₂ (wherein 0≤x≤1, 0≤y≤1, 0≤a≤1, and 0≤b≤1), lithium lanthanum titanate (LiₓLa_{y}TiO₃, wherein 0<x<2 and 0<y<3), lithium germanium thiophosphate (LiₓGe_{y}P_{z}S_{w}, wherein 0<x<4, 0<y<1, 0<z<1, and 0<w<5), lithium nitride (LiₓN_{y}, wherein 0<x<4 and 0<y<2), SiS₂ based glass (LiₓSi_{y}S_{z}, wherein 0<x<3, 0<y<2, and 0<z<4), P₂S₅ based glass (LiₓP_{y}S_{z}, wherein 0<x<3, 0<y<3, and 0<z<7), Li₂O, LiF, LiOH, Li₂CO₃, LiAlO₂, a Li₂O-Al₂O₃-SiO₂-P₂O₅-TiO₂-GeO₂-based ceramic, or a garnet-based ceramic (Li₃₊ₓLa₃M₂O₁₂ (wherein 0≤x≤4, M is Te, Nb, or Zr)).

When the solid electrolyte layer includes LiPON, the thickness of the solid electrolyte layer may be 10 µm or less, 9 µm or less, 8 µm or less, 7 µm or less, 6 µm or less, 5 µm or less, 4 µm or less, 3 µm or less, 2 µm or less, or 1 µm or less. The thickness of the solid electrolyte layer including LiPON may be, for example, in a range of about 0.1 µm to about 10 µm, about 0.1 µm to about 9 µm, about 0.1 µm to about 8 µm, about 0.1 µm to about 7 µm, about 0.1 µm to about 6 µm, about 0.1 µm to about 5 µm, about 0.1 µm to about 4 µm, about 0.1 µm to about 3 µm, about 0.1 µm to about 2 µm, about 0.1 µm to about 1 µm.

The polymeric ionic liquid ("PIL") may include, for example, a repeating unit including: i) at least one cation of an ammonium-based cation, a pyrrolidinium-based cation, a pyridinium-based cation, pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, or a triazolium-based cation; and ii) at least one anion of BF₄⁻, PF₆⁻, AsF₆⁻, SbF₆⁻, AlCl₄⁻, HSO₄⁻, ClO₄⁻, CH₃SO₃⁻, CF₃CO₂⁻, (CF₃SO₂)₂N, Cl⁻, Br-, I⁻, SO4²⁻,CF₃SO3⁻, (C₂F₅SO₂)₂N⁻, (C₂F₅SO₂)(CF₃SO₂)N⁻, NO₃⁻, Al₂Cl₇⁻, CH₃COO⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, or (O(CF₃)₂C₂(CF₃)₂O)₂PO⁻. For example, the PIL may be poly(diallyldimethyl ammonium bis(trifluoromethane sulfonyl)imide ("TFSI")), poly(1-allyl-3-methyl imidazolium bis(trifluoromethane sulfonyl)imide), and poly(N-methyl-N-propylpiperidinium bis(trifluoromethane sulfonyl)imide).

The ion-conductive polymer may include, for example, at least one ion conductive repeating unit derived from an ether-based monomer, an acryl-based monomer, a methacryl-based monomer, or a siloxane-based monomer.

The ion-conductive polymer may include, for example, polyethylene oxide ("PEO"), polyvinyl alcohol ("PVA"), polyvinyl pyrrolidone ("PVP"), polysulfone, polypropylene oxide ("PPO"), polymethyl methacrylate, polyethyl methacrylate, polydimethyl siloxane, polyacrylic acid, polymethacrylic acid, polymethyl acrylate, polyethyl acrylate, poly2-ethylhexyl acrylate, polybutyl methacrylate, poly 2-ethylhexyl methacrylate, polydecyl acrylate, polyethylene vinylacetate, a phosphate ester polymer, polyester sulfide, polyvinylidene fluoride ("PVdF"), Li-substituted Nafion (e.g., a Li-substituted sulfonated tetrafluoroethylene based fluoropolymer), or the like. Any suitable ion-conductive polymer material may be used.

The electron-conductive polymer may be, for example, a polyphenylene derivative, a polythiophene derivative, or the like. Any suitable electron-conductive polymer may be used.

For example, the gel electrolyte may be obtained by adding a low-molecular weight solvent to the solid electrolyte between the positive electrode and the negative electrode. For example, the gel electrolyte may be obtained by adding a solvent, such as a low-molecular weight organic compound, an oligomer, or the like, into a polymer. For example, the gel electrolyte may be obtained by adding a solvent, such as a low-molecular weight organic compound, an oligomer, or the like, into the polymer electrolyte described above.

For example, the liquid electrolyte may include a solvent and a lithium salt.

The solvent may include at least one of an organic solvent, an ionic liquid, or an oligomer. Any suitable solvent that is in liquid form at room temperature (25°C) may be used.

The organic solvent may include, for example, at least one of an ether-based solvent, a carbonate-based solvent, an ester-based solvent, and a ketone-based solvent. For example, the organic solvent may include at least one selected from propylene carbonate, ethylene carbonate, fluoroethylene carbonate, vinylethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, dimethyl acetamide, dimethylsulfoxide, dioxane, 1,2-dimethoxyethane, sulfolane, dichloroethane, chlorobenzene, nitrobenzene, succinonitrile, diethylene glycol dimethyl ether ("DEGDME"), tetraethylene glycol dimethyl ether ("TEGDME"), polyethylene glycol dimethyl ether ("PEGDME", Mn = about 500), dimethyl ether, diethyl ether, dibutyl ether, or dimethoxyethane. Any suitable organic solvent that is in liquid form at room temperature may be used.

The ionic liquid ("IL") may include, for example, i) at least one cation of an ammonium-based cation, a pyrrolidinium-based cation, a pyridinium-based cation, pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, or a triazolium-based cation; and ii) at least one anion of BF₄⁻, PF₆⁻, AsF₆⁻, SbF₆⁻, AlCl₄⁻, HSO₄⁻, ClO₄⁻, CH₃SO₃⁻, CF₃CO₂⁻, (CF₃SO₂)₂N⁻, Cl⁻, Br, I⁻, SO4²-, CF₃SO₃⁻, (C2F₅SO₂)₂N⁻, (C₂F₅SO₂)(CF₃SO₂)N⁻, NO₃⁻, Al₂Cl₇⁻, CH₃COO⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, or (O(CF₃)₂C₂(CF₃)₂O)₂PO⁻.

The lithium salt may include, for example, at least one of LiTFSI (LiN(SO₂CF₃)₂), LiPF₆, LiBF₄, LiAsF₆, LiClO₄, LiNO₃, lithium bis(oxalato) borate ("LiBOB"), LiN(SO₂C₂F₅)₂, LiC(SO₂CF₃)₃, LiN(SO₃CF₃)₂, LiC₄F₉SO₃, LiAlCl₄, or lithium trifluoromethane sulfonate (LiCF₃SO₃, "LiTfO"). Any suitable lithium salt material may be used. A concentration of the lithium salt may be, for example, in a range of about 0.01 molar (M) to about 5.0 M.

The lithium-air battery 100 may further include, for example, a separator between the positive electrode 10 and the negative electrode 20. The separator may be any suitable separator having a composition durable under usage environments of a lithium-air battery 100. For example, the separator may include at least one of a polymeric non-woven fabric such as polypropylene non-woven fabric or polyphenylene sulfide non-woven fabric; a porous film of an olefin-based resin such as polyethylene or polypropylene; or glass fiber. Two or more different separator materials may be used.

For example, the electrolyte layer 30 may have a structure including a separator impregnated with a solid polymer electrolyte or a liquid electrolyte. The electrolyte film including a separator impregnated with a solid polymer electrolyte may be prepared by disposing a solid polymer electrolyte film(s) on one or both surfaces of the separator while performing roll-pressing thereon at the same time. In an embodiment, the electrolyte film including a separator impregnated with a liquid electrolyte may be prepared by injecting the liquid electrolyte including a lithium salt into the separator.

In the lithium-air battery 100, the negative electrode 20 may be disposed on a, e.g., one, surface of a negative electrode current collector 21 disposed on a side of a case, the electrolyte layer 30 may be disposed on the negative electrode 20, the positive electrode 10 may be disposed on the electrolyte layer 30, a porous positive electrode current collector (not shown) may be disposed on the positive electrode 10, a pressing member (not shown) that allows air to reach the air electrode may be disposed on the porous positive electrode current collector (not shown) and pressurize a cell to fix the cell, and the manufacture nay be completed. The case may be divided into upper and lower portions that contact the negative electrode and the air electrode, respectively. An insulating resin may be between the upper and lower portions to electrically insulate the positive electrode 10 and the negative electrode 20 from each other.

In an embodiment, the lithium-air battery 100 may be used as a lithium primary battery or a lithium secondary battery. The lithium-air battery 100 may have any of various shapes, not limited to a specific shape, for example, a shape like a coin, a button, a sheet, a stack, a cylinder, a plane, or a horn. The lithium-air battery 100 may be applicable to a large battery for electric vehicles.

As shown in FIG. 3, the lithium-air battery 100 according to an embodiment may use oxygen as an active material and include the solid electrolyte layer 30 between the positive electrode 10 having a monolithic structure of the porous layer 10a and the barrier layer 10b and the negative electrode 20 containing lithium, the negative electrode 20 being adjacent to the negative electrode current collector 21. The solid electrolyte layer may be, for example, LiPON. Accordingly, the lithium-air battery 100 as shown in FIG. 3 may be a solid battery not including a liquid electrolyte/gel electrolyte.

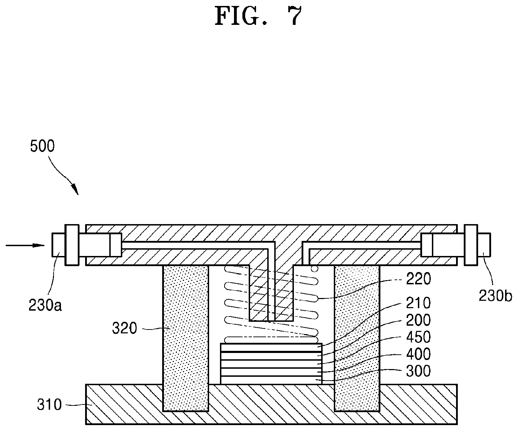

As shown in FIG. 7, a lithium-air battery 500 according to an embodiment may include a positive electrode 200 adjacent to a first current collector 210 and using oxygen as an active material, a negative electrode 300 adjacent to a second current collector 310 and including lithium, and a first electrolyte film 400 between the positive electrode 200 and the negative electrode 300. The first electrolyte film 400 may be a separator impregnated with a liquid electrolyte. The first electrolyte film 400 may be omitted. A second electrolyte film 450 may be between the positive electrode 200 and the first electrolyte film 400. The second electrolyte film 450 may be a lithium ion conductive solid electrolyte film. The first current collector 210, which is porous, may serve as a gas diffusion layer. In an embodiment, a gas diffusion layer may be further included between the first current collector 210 and the positive electrode 200. Also, a pressing member 220 that allows air to reach the positive electrode 200 may be on the first current collector 210. A case 320 of an insulating resin material may electrically separate the positive electrode 200 from the negative electrode 300. Air may be supplied through an air inlet 230a and be discharged through an air outlet 230b. The lithium-air battery 500 may be accommodated in a stainless steel ("SUS") container. The positive electrode 200 may have a monolithic structure including the porous layer and the barrier layer.

The term "air" regarding a lithium-air battery, as used herein is not limited to atmospheric air, and may refer to a combination of gases including oxygen, for example, in an amount of about 1 volume percent (vol%) to about 99 vol%, about 2 vol% to about 95 vol%, about 4 vol% to about 90 vol%, about 5 vol% to about 40 vol%, about 10 vol% to about 30 vol%, or about 15 vol% to about 25 vol%. In an embodiment, air may refer to a suitable combination of gases having an oxygen content of about 99 vol% to about 99.999 vol%, about 99.1 vol% to about 99.99 vol%, or about 99.2 vol% to about 99.9 vol%. This broad definition of "air" also applies to other terms including "air battery" and "air electrode". The phrase "oxidizing atmosphere", as used herein may refer to at least one of air, e.g., atmospheric air, or pure oxygen.

A method of manufacturing a positive electrode according to an embodiment may include: preparing a first layer by molding and heat-treating a first composition including a first lithium-containing metal oxide; preparing a second composition including the first lithium-containing metal oxide and a binder; preparing a second layer by coating and drying the second composition on a substrate; preparing a laminate by disposing the second layer on the first layer; and heat-treating the laminate at a temperature of about 900 °C to about 1,300 °C under, e.g., in, an oxidizing atmosphere.

The first composition may include the first lithium-containing metal oxide. The first composition may further include at least one of the second lithium-containing metal oxide or a lithium salt. The types of the first lithium-containing metal oxide, the second lithium-containing metal oxide, and the lithium salt may be understood by referring to the descriptions of the first lithium-containing metal oxide, the second lithium-containing metal oxide, and the lithium salt provided herein. The first composition may further include a pyrolytic binder. The types of the binder are not particularly limited. Any suitable binder may be used. Examples of the binder may include polyvinyl butyral, polyvinylidene fluoride, polyvinyl alcohol, carboxymethyl cellulose ("CMC"), starch, hydroxypropylcellulose, regenerated cellulose, polyvinyl pyrrolidone, polytetrafluoroethylene, ethylene-propylene-diene terpolymer ("EPDM"), sulfonated EPDM, styrene butadiene rubber, and fluorine rubber.

The content of the first lithium-containing metal oxide included in the first composition may be in a range of about 50 parts to about 100 parts by weight, about 60 parts to about 100 parts by weight, about 70 parts to about 100 parts by weight, about 80 parts to about 100 parts by weight, or about 90 parts to about 100 parts by weight, based on 100 parts by weight of the solid content of the first composition.

The first composition may be formed using a mold. The shape of the mold may be, for example, a disk shape. The shape of the mold may be determined according to the shape of the positive electrode. The heat-treating of the first composition may be performed by, for example, spark plasma sintering ("SPS"). Any suitable method that provides a sinter having a dense structure may be used. The heat-treating of the first composition may be performed in a temperature range of about 700 °C to about 950 °C, about 750 °C to about 950 °C, about 800 °C to about 950 °C, or about 850 °C to about 950 °C.

The second composition may include a first lithium-containing metal oxide and a binder. The first lithium-containing metal oxide included in the second composition may be identical to the first lithium-containing metal oxide included in the first composition.

The second composition may include, for example, a first lithium-containing metal oxide, a binder, a dispersant, a plasticizer, or the like. The types of the binder, the dispersant, and the plasticizer are not particularly limited. Any suitable binder, dispersant, and plasticizer that may be used in forming a second layer including ceramics, i.e., a green sheet, may be used. Examples of the binder may include polyvinyl butyral, polyvinylidene fluoride, polyvinyl alcohol, carboxymethyl cellulose ("CMC"), starch, hydroxypropylcellulose, regenerated cellulose, polyvinyl pyrrolidone, polytetrafluoroethylene, ethylene-propylene-diene terpolymer ("EPDM"), sulfonated EPDM, styrene butadiene rubber, and fluorine rubber.

For example, the binder may be included in a range of about 5 parts to about 20 parts by weight, the dispersant may be included in a range of about 1 parts to about 10 parts by weight, and the plasticizer may be included in a range of about 1 parts to about 10 parts by weight, based on 100 parts by weight of the first lithium-containing metal oxide. The second composition may further include a solvent. The content of the solvent may be, for example, in a range of about 1 part to about 500 parts by weight, based on 100 parts by weight of the first lithium-containing metal oxide, the binder, the dispersant, the plasticizer or the like.

The solvent may be alcohols, such as ethanol or N-methyl-2-pyrrolidone ("NMP"). The content of the solvent may be properly adjusted such that the components constituting the composition may be dissolved or dispersed.

In the preparing of the second layer, for example, the second composition may be coated using a doctor blade to a thickness of 1 to 1,000 µm on a substrate such as a release film and then dried to prepare a second layer.

In the preparing of the second layer, for example, a plurality of coating layers may be prepared on a release film, and the coating layers may be stacked to face one another, followed by laminating, to prepare the second layer. Laminating may be performed by hot-pressing at a constant pressure.

In the preparing of the laminate, for example, the second layer may be stacked on the first layer to prepare the laminate. Laminating may be performed by hot-pressing at a constant pressure.

The heat-treating of the laminate may be performed at a temperature range of about 500 °C to about 700 °C under, e.g., in, an oxidizing atmosphere for 1 hour to 4 hours, followed by heat-treating at a temperature range of about 900 °C to 1,300 °C under, e.g., in, an oxidizing atmosphere for 3 hours to 10 hours.

By the heat-treating at a temperature range of about 500 °C to about 700 °C under, e.g., in, an oxidizing atmosphere for 1 hour to 4 hours, organic substances in the laminate, that is, organic substances mainly included in the second layer, may be stably decomposed and removed. In addition, by the heat-treating at a temperature range of about 900 °C to 1,300 °C under, e.g., in, an oxidizing atmosphere for 3 hours to 10 hours, the first lithium-containing metal oxide powder may be sintered, and the first layer and the second layer may be sintered with each other to manufacture a positive electrode having a monolithic structure of the porous layer and the barrier layer.

The heating rate up to the heat treatment temperature during the heat-treating may be 5 degrees (e.g., °C) per minute, and cooling may be natural cooling.

Hereinafter example embodiments will be described in detail with reference to Examples and Comparative Examples. These examples are provided for illustrative purposes only and are not intended to limit the scope of the present inventive concept.

### EXAMPLES

### Preparation of lithium-containing metal oxide

### Preparation Example 1: Preparation of spinel material (Li_{4.5}Ti_{4.5}Nb_{0.5}O_{12-δ})

Li₂CO₃ as a lithium precursor, TiO₂ as a titanium precursor, and Nb₂O₅ as a niobium precursor were mixed together at a stoichiometric ratio, followed by mixing with ethanol. The mixture was pulverized and mixed using a ball mill including zirconia balls at 280 revolutions per minute (rpm) for 4 hours, thereby obtaining a mixture. The obtained mixture was dried at a temperature of 90 °C for 6 hours, and then subjected to a primary heat treatment at a temperature of 700 °C under, e.g., in, atmospheric air, for 5 hours. The resultant of the primary heat treatment was pulverized by using a ball mill and pressed at an isostatic pressure to prepare pellets. The prepared pellets were subjected to a secondary heat treatment at a temperature of 950 °C under a reductive atmosphere for 24 hours, thereby preparing a composite conductor. The reductive atmosphere included 5 % of hydrogen and 95 % of argon. The prepared lithium-containing metal oxide had a composition of Li_{4.5}Ti_{4.5}Nb_{0.5}O_{12-δ} (wherein 0<δ<3).

### Preparation Example 2: Preparation of spinel material (Li_{3.5}Ti_{4.0}Nb_{1.0}O_{12-δ})

A composite conductor was prepared in substantially the same manner as in Preparation Example 1, except that a stoichiometric ratio of the lithium precursor, the titanium precursor, and the niobium precursor was different.

The prepared lithium-containing metal oxide had a composition of Li_{3.5}Ti_{4.0}Nb_{1.0}O_{12-δ} (wherein 0<δ<3).

### Preparation Example 3: Preparation of spinel material (Li_{3.5}Ti_{4.0}Ta_{1.0}O_{12-δ})

A composite conductor was prepared in substantially the same manner as in Preparation Example 1, except that a tantalum precursor, Ta₂O₅, was used instead of the niobium precursor, and a stoichiometric ratio of the lithium precursor, the titanium precursor, and the tantalum precursor was different.

The prepared lithium-containing metal oxide had a composition of Li_{3.5}Ti_{4.0}Ta_{1.0}O_{12-δ} (wherein 0<δ<3).

### Preparation Example 4: Preparation of spinel material (Li_{4.5}Ti_{4.5}Gd_{0.5}O_{12-δ})

A composite conductor was prepared in substantially the same manner as in Preparation Example 1, except that a gadolinium precursor, Gd₂O₃, was used instead of the niobium precursor.

The prepared lithium-containing metal oxide had a composition of Li_{4.5}Ti_{4.5}Gd_{0.5}O_{12-δ} (wherein 0<δ<3).

### Preparation Example 5: Preparation of spinel material (Li_{5.0}Ti_{4.0}Gd_{0.1}O_{12-δ})

A composite conductor was prepared in substantially the same manner as in Preparation Example 1, except that a gadolinium precursor, Gd₂O₃, was used instead of the niobium precursor, and a stoichiometric ratio of the lithium precursor, the titanium precursor, and the gadolinium precursor was different.

The prepared lithium-containing metal oxide had a composition of Li_{5.0}Ti_{4.0}Gd_{1.0}O_{12-δ} (wherein 0<δ<3).

### Preparation Example 6: Preparation of spinel material (Li_{4.5}Ti_{4.5}In_{0.5}O_{12-δ})

A composite conductor was prepared in substantially the same manner as in Preparation Example 1, except that an indium precursor, In₂O₃ was used instead of the niobium precursor.

The prepared lithium-containing metal oxide had a composition of Li_{4.5}Ti_{4.5}In_{0.5}O_{12-δ} (wherein 0<δ<3).

### Preparation Example 7: Preparation of spinel material (Li_{5.0}Ti_{4.0}In_{1.0}O_{12-δ})

A composite conductor was prepared in substantially the same manner as in Preparation Example 1, except that an indium precursor, In₂O₃, was used instead of a niobium precursor, and a stoichiometric ratio of the lithium precursor, the titanium precursor, and the indium precursor was different.

The prepared lithium-containing metal oxide had a composition of Li_{5.0}Ti_{4.0}In_{1.0}O_{12-δ} (wherein 0<δ<3).

### Preparation Example 8: Preparation of spinel material (Li₄Ti₅O₁₂)

Commercially available Li₄Ti₅O₁₂ was used.

### Preparation Example 9: Preparation of perovskite material (Li_{0.34}La_{0.55}TiO₃)

Li₂CO₃, La₂O₃, and TiO₂ powders were added to ethanol and mixed together for the composition ratio of Li_{0.34}La_{0.55}TiO₃. The content of ethanol was about 4 parts by weight, based on 100 parts by weight of the total weight of Li₂CO₃, La₂O₃, and TiO₂ powders.

The mixture was added to a ball-milling apparatus to perform pulverization and mixing for 4 hours. The mixed resultant was dried and then heated at a heating rate of about 5 °C /min to 800 °C. A primary heat treatment was performed at this temperature under, e.g., in, atmospheric air for 4 hours.

The powder resulting from the primary heat treatment was ground to thereby prepare powder having a primary particle size of about 0.3 micrometer (µm). The prepared powder was pressurized to prepare cylindrical pellets having a diameter of about 1.3 centimeters (cm), a height of about 0.5 cm, and a weight of about 0.3 grams (g). The prepared pellets were subjected to a secondary heat treatment under, e.g., in, atmospheric air at 1,100 °C for about 24 hours to thereby obtain the resulting product. The heating rate for the secondary heat treatment up to 1,100 °C was about 5 °C /min. The composition of the prepared lithium-containing metal oxide was Li_{0.34}La_{0.55}TiO₃.

### Preparation Example 10: Preparation of perovskite material (Li_{0.34}La_{0.55}RuO₃)

The resulting product was obtained in substantially the same manner as in Preparation Example 9, except that RuO₂ was used instead of TiO₂, and the secondary heat treatment was performed at 1,200 °C.

The composition of the prepared lithium-containing metal oxide was Li_{0.34}La_{0.55}RuO₃.

### Preparation Example 11: Preparation of perovskite material (Li_{0.34}La_{0.55}MnO₃)

The resulting product was obtained in substantially the same manner as in Preparation Example 9, except that MnO₂ was used instead of TiO₂, and the secondary heat treatment was performed at 1,200 °C.

The composition of the prepared lithium-containing metal oxide was Li_{0.34}La_{0.55}MnO₃.

### Preparation Example 12: Preparation of perovskite material (Li_{0.34}La_{0.55}NiO₃)

The resulting product was obtained in substantially the same manner as in Preparation Example 9, except that Ni(OH)₂ was used instead of TiO₂, and the secondary heat treatment was performed at 1,200 °C.

The composition of the prepared lithium-containing metal oxide was Li_{0.34}La_{0.55}NiO₃.

### Preparation Example 13: Preparation of perovskite material (Li_{0.34}La_{0.55}CrO₃)

The resulting product was obtained in substantially the same manner as in Preparation Example 9, except that O₂O₃ was used instead of TiO₂, and the secondary heat treatment was performed at 1,200 °C.

The composition of the prepared lithium-containing metal oxide was Li_{0.34}La_{0.55}CrO₃.

### Preparation Example 14: Preparation of perovskite material (Li_{0.34}La_{0.55}IrO₃)

The resulting product was obtained in substantially the same manner as in Preparation Example 9, except that IrO₂ was used instead of TiO₂, and the secondary heat treatment was performed at 1,200 °C.

The composition of the prepared lithium-containing metal oxide was Li_{0.34}La_{0.55}IrO₃.

### Preparation Example 15: Preparation of perovskite material (Li_{0.34}La_{0.55}CoO₃)

The resulting product was obtained in substantially the same manner as in Preparation Example 9, except that Co₂O₃ was used instead of TiO₂, and the secondary heat treatment was performed at 1,200 °C.

The composition of the prepared lithium-containing metal oxide was Li_{0.34}La_{0.55}CoO₃.

### Preparation of positive electrode

### Example 1: Sequential preparation of barrier layer/porous layer

### Barrier layer

Li_{0.34}La_{0.55}RuO₃ (hereinafter, referred to as "LLRuO"), i.e., a lithium-containing metal oxide prepared in Preparation Example 10, was ball-milled for pulverization to thereby obtain powder having a particle size of about 300 nanometers (nm).

0.5 g of the resulting lithium-containing metal oxide powder was added to a carbon mold having a diameter of 1 cm, followed by spark plasma sintering ("SPS"), thereby obtaining a disk having a dense structure. The SPS was performed at 900 °C under 50 megapascals (MPa) for 10 minutes.

### Positive electrode of monolithic structure of barrier layer/porous layer

The obtained LLRuO lithium-containing metal oxide powder, a binder, i.e., a polyvinyl butyral resin (Butvar B79, available from Eastman), a dispersant (DISPERBYK111, available from BYK-Chemie GmbH), and a plasticizer (di-n-butyl phthalate, available from DBP) were mixed at a weight ratio of 100:10:5:5, followed by adding ethanol as a solvent and mixing, thereby obtaining a slurry. The prepared slurry was coated on a release film using a doctor blade to a thickness of 200 micrometer (µm) and then dried in atmospheric air for 12 hours, followed by drying for 12 hours in a vacuum oven at 60 °C, to prepare a coating layer.

The prepared coating layer was cut to size of 7×7 square millimeters (mm²) on the release film. Then, the cut coating layer was stacked on the disk having a dense structure and hot-pressed at 250 pounds per square inch (psi) at 100 °C for 15 minutes for lamination.

Subsequently, the release film was removed to obtain the laminate. The obtained laminate was heat-treated in atmospheric air at 600 °C for 2 hours, followed by heat-treating at 1,100 °C for 6 hours, to manufacture a positive electrode of a monolithic structure.

The positive electrode of a monolithic structure had a structure including a barrier layer and a porous layer formed on the barrier layer. The thickness of the porous layer was 27 µm, and the thickness of the barrier layer was 100 µm.

The same disk used in the preparation of the positive electrode was not coated with a slurry, and the disk obtained in substantially the same manner as in the preparation of the positive electrode using the same method, hot-pressing, and heat-treating, was regarded as a barrier layer.

From the weight and volume of the disk and a theoretical density of the lithium-containing metal oxide, a relative density was calculated. The relative density of the barrier layer was 75 %.

From the weight difference and the volume difference between the prepared positive electrode and the heat-treated disk and a theoretical density of the lithium-containing metal oxide, a porosity and a loading level of the porous layer was calculated.

The area was measured using an optical microscope, and the thickness was measured using a scanning electron microscope ("SEM") to calculate the volume of the heat-treated disk and positive electrode, respectively. The porosity of the porous layer was calculated using the calculated volume and weight.

The porosity of the porous layer included in the prepared positive electrode was 70 %. Porosity is the volume occupied by pores in the total volume of the porous layer. The weight (loading level) of the porous layer of the prepared positive electrode was 5.22 milligrams per square centimeter (mg/cm²).

The size of the pores included in the porous layer measured from the cross section of the prepared positive electrode was less than 1 µm.

### Example 2: Sequential preparation of barrier layer/porous layer

### Barrier layer

Li_{0.34}La_{0.55}RuO₃, i.e., a lithium-containing metal oxide prepared in Preparation Example 10, was ball-milled for pulverization to thereby obtain powder having a particle size of about 300 nm.

0.5 g of the mixture of the lithium-containing metal oxide powder, LiBO₃, and LiF at a weight ratio of 90:7:3 was added to a carbon mold having a diameter of 1 cm, followed by SPS, thereby obtaining a disk having a dense structure. The SPS was performed at 900 °C under 50 megapascals (MPa) for 5 minutes.

The prepared disk was regarded as a barrier layer. From the weight and volume of the disk and a theoretical density of the used compounds, a relative density of the barrier layer was calculated. The relative density of the barrier layer was 99 %.

### Positive electrode of monolithic structure of barrier layer/porous layer

A positive electrode of a monolithic structure was manufactured in substantially the same manner as in Example 1, except that the disk prepared above was used.

### Example 3: Simultaneous preparation of barrier layer/porous layer

Li_{0.34}La_{0.55}RuO₃, i.e., a lithium-containing metal oxide prepared in Preparation Example 10, was ball-milled for pulverization to thereby obtain LLRuO powder having a particle size of about 300 nm.

0.2 g of a mixture of lithium-containing metal oxide powder, LiBO₃, and LiF at a weight ratio of 90:7:3 was added to a carbon mold having a diameter of 1 cm to prepare a first powder layer.

Subsequently, 0.3 g of the LLRuO powder was added onto the first powder layer, and a positive electrode having a monolithic structure, in which a barrier layer (a dense layer) and a porous layer are stacked, was manufactured by SPS.

The SPS was performed at 900 °C under 50 megapascals (MPa) for 10 minutes. The thickness of the porous layer and the barrier layer were the same as those of Example 1.

The porosity of the barrier layer included in the positive electrode was 1 % or less, and the weight (loading level) of the barrier layer was 200 mg/cm². The porosity of the porous layer included in the positive electrode was 50 %, and the weight (loading level) of the porous layer was 300 mg/cm².

### Comparative Example 1: Preparation of barrier membrane and porous membrane Barrier membrane

Li_{0.34}La_{0.55}RuO₃ (hereinafter, referred to as "LLRuO"), i.e., a lithium-containing metal oxide prepared in Preparation Example 10, was ball-milled for pulverization to thereby obtain powder having a particle size of about 300 nm.

0.5 g of the resulting LLRuO lithium-containing metal oxide powder was added to a carbon mold having a diameter of 1 cm, followed by spark plasma sintering ("SPS"), thereby obtaining a barrier membrane having a disk shape of a dense structure.

The SPS was performed at 900 °C under 50 MPa for 10 minutes.

### Porous membrane

Li_{0.34}La_{0.55}RuO₃ (hereinafter, referred to as "LLRuO"), i.e., a lithium-containing metal oxide prepared in Preparation Example 10, was ball-milled for pulverization to thereby obtain powder having a particle size of about 300 nm.

The obtained LLRuO lithium-containing metal oxide powder, a binder, i.e., a polyvinyl butyral resin (Butvar B79, available from Eastman), a dispersant (DISPERBYK111, available from BYK-Chemie GmbH), and a plasticizer (di-n-butyl phthalate, available from DBP) were mixed at a weight ratio of 100:10:5:5, followed by adding ethanol as a solvent and mixing, thereby obtaining a slurry. The prepared slurry was coated on a release film using a doctor blade to a thickness of 200 µm and then dried in atmospheric air for 12 hours, followed by drying for 12 hours in a vacuum oven at 60 °C, to prepare a coating layer.

The prepared coating layer was cut to size of 7×7 mm² on the release film. Then, the cut coating layer was hot-pressed at 250 pounds per square inch (psi) at 100 °C for 15 minutes.

Subsequently, the release film was removed to obtain the pressed coating film. The obtained coating film was heat-treated in atmospheric air at 600 °C for 2 hours, followed by heat-treating at 1,100 °C for 6 hours, to manufacture a porous film.

A separately prepared barrier membrane and the porous membrane were prepared.

### Manufacture of lithium-air battery

### Example 4: Preparation of lithium-air battery (positive electrode/LiPON/Li negative electrode)

A LiPON layer was formed as a solid electrolyte layer on the barrier layer included in the positive electrode manufactured in Example 1 to a thickness of 2 µm by sputtering (Radio Frequency ("RF") magnetron sputtering).

A lithium metal layer was formed as a negative active material layer on the LiPON layer to a thickness of 30 µm by thermal evaporation.

A copper foil was disposed as a negative electrode current collector on the lithium metal layer to a thickness of 10 µm.

A gas diffusion layer (25BC, available from SGL) was disposed on the porous layer included in the positive electrode, and a nickel mesh was disposed on the gas diffusion layer.

A pressing member was disposed on the nickel mesh to allow air to reach the positive electrode and to fix the cell, thereby completing the manufacture of a lithium-air battery. The lithium-air battery had a structure shown in FIG. 7, wherein the first electrolyte film 400 is omitted.

### Example 5

A lithium-air battery was manufactured in substantially the same manner as in Example 4, except that the positive electrode prepared in Example 2 was used instead of the positive electrode prepared in Example 1.

### Example 6

A lithium-air battery was manufactured in substantially the same manner as in Example 4, except that the positive electrode prepared in Example 3 was used instead of the positive electrode prepared in Example 1.

### Comparative Example 2

A barrier film was disposed on the porous film prepared in Comparative Example 1, and a LiPON layer was formed as a solid electrolyte layer on the barrier film to a thickness of 2 µm by sputtering (RF magnetron sputtering).

A lithium metal layer was formed as a negative active material layer on the LiPON layer to a thickness of 30 µm by thermal evaporation.

A copper foil was disposed as a negative electrode current collector on the lithium metal layer to a thickness of 10 µm.

A gas diffusion layer (25BC, available from SGL) was disposed on the porous film included in the positive electrode, and a nickel mesh was disposed on the gas diffusion layer.

A pressing member was disposed on the nickel mesh to allow air to reach the positive electrode and to fix the cell, thereby completing the manufacture of a lithium-air battery. The lithium-air battery had a structure shown in FIG. 7, wherein the first electrolyte film 400 is omitted.

### Evaluation Example 1: Evaluation of electronic conductivity

Both sides of each of the pellets of the spinel compounds and the pellets of the perovskite compound prepared in Preparation Examples 1 to 15 were subjected to sputtering with gold to thereby complete the manufacture of an ion blocking cell. The electronic conductivity thereof was measured at a temperature of 25 °C by using a DC (direct current) polarization method.

A time-dependent current was measured, which was obtained while applying a constant voltage of 100 millivolts (mV) to the complete symmetric cell for 30 minutes. An electronic resistance of the composite conductor was calculated from the measured current, and an electronic conductivity was calculated from the electronic resistance. The results of measured electronic conductivity are shown in Tables 1 and 2.

### Evaluation Example 2: Evaluation of ionic conductivity

Separator layers each impregnated with a liquid electrolyte (1 molar (M) LiTFSI in propylene carbonate ("PC")) were disposed on both sides of the pellets of the spinel compounds and the perovskite compounds prepared in Preparation Examples 1 to 15, and stainless steel ("SUS") current collectors were disposed on the separator layers to thereby complete the manufacture of an electron blocking cell. The ionic conductivity thereof was measured at a temperature of 25 °C by using a DC (direct current) polarization method.

A time-dependent current was measured, which was obtained while applying a constant voltage of 100 millivolts (mV) to the complete symmetric cell for 30 minutes. An ion resistance of the cell was calculated from the measured current, and an ion resistance of the separator layers was subtracted from the ion resistance of the cell to calculate an ionic resistance of the mixed conductor. The ionic conductivity was calculated from the ionic resistance of the mixed conductor. The results of measured ionic conductivity are shown in Tables 1 and 2.

**Table 1**

| | Composition | Electronic conductivity (S/cm) | Ionic conductivity (S/cm) |
|---|---|---|---|
| Preparation Example 1 | Li_{4.5}Ti_{4.5}Nb_{0.5}O_{12-δ} | 1.4×10⁻³ | 4.7 × 10⁻⁵ |
| Preparation Example 2 | Li_{3.5}Ti_{4.0}Nb_{1.0}O_{12-δ} | 3.5×010⁻⁴ | 2.0×10⁻⁷ |
| Preparation Example 3 | Li_{3.5}Ti_{4.0}Ta_{1.0}O_{12-δ} | 1.2×10⁻⁴ | 1.8×10⁻⁷ |
| Preparation Example 4 | Li_{4.5}Ti_{4.}5Gd_{0.5}O_{12-δ} | 2.1×10⁻⁴ | 3.2×10⁻⁷ |
| Preparation Example 5 | Li_{5.0}Ti_{4.0}Gd_{1.0}O_{12-δ} | 9.6×10⁻⁶ | 5.1 ×10⁻⁶ |
| Preparation Example 6 | Li_{4.5}Ti_{4.5}in_{0.5}0O_{12-δ} | 7.4×10⁻⁵ | 8.1×10⁻⁷ |
| Preparation Example 7 | Li_{5.0}Ti_{4.0}In_{1.0}O_{12-δ} | 1.1×10⁻⁵ | 2.9×10⁻⁶ |
| Preparation Example 8 | Li₄Ti₅O₁₂ | 4.3×10⁻⁹ | 6.8×10⁻⁸ |

As shown in Table 1, the spinel compounds manufactured in Preparation Examples 1 to 8 are crystalline ionic conductors that provide ionic conductivity of 1×10⁻⁸ S/cm or greater.

In addition, the spinel compounds of Preparation Examples 1 to 7 were found to have improved electronic conductivity and ionic conductivity simultaneously, as compared with the spinel compound of Preparation Example 8.

**Table 2**

| | Composition | Electronic conductivity (S/cm) | Ionic conductivity (S/cm) |
|---|---|---|---|
| Preparation Example 9 | Li_{0.34}La_{0.55}TiO₃ | 3.8 X 10⁻⁹ | 1.2 X 10⁻⁵ |
| Preparation Example 10 | Li_{0.34}La_{0.55}RuO₃ | 5.6 X 10⁻² | 2.1 X 10⁻⁵ |
| Preparation Example 11 | Li_{0.34}La_{0.55}MnO₃ | 2.0 X 10⁻³ | 8.8 X 10⁻⁵ |
| Preparation Example 12 | Li_{0.34}La_{0.55}NiO₃ | 2.8 X 10⁻² | 3.0 X 10⁻⁶ |
| Preparation Example 13 | Li_{0.34}La_{0.55}CrO₃ | 2.6 X 10⁻⁴ | 2.0 X 10⁻⁶ |
| Preparation Example 14 | Li_{0.34}La_{0.55}IrO₃ | 4.3 X 10⁻³ | 1.7 X 10⁻⁵ |
| Preparation Example 15 | Li_{0.34}La_{0.55}CoO₃ | 4.5 X 10⁻⁴ | 4.6 X 10⁻⁶ |

As shown in Table 2, the perovskite compounds manufactured in Preparation Examples 9 to 15 are crystalline ionic conductors that provide ionic conductivity of 1×10⁻⁷ S/cm or greater.

In addition, the perovskite compounds of Preparation Examples 10 to 15 were found to have improved electronic conductivity, as compared with the perovskite compound of Preparation Example 9.

### Evaluation Example 3: Evaluation of XRD spectrum

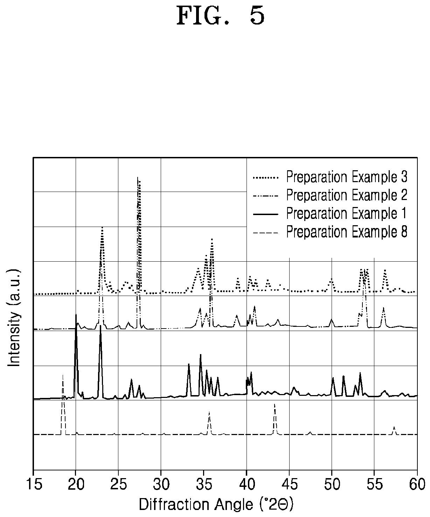

The XRD spectra of the spinel compounds of Preparation Examples 1, 2, 3, and 8 were measured. The results thereof are shown in FIG. 5. In each XRD spectrum measurement, Cu Ka radiation was used.

As shown in FIG. 5, Li₄Ti₅O₁₂ in Preparation Example 8 showed a peak corresponding to a spinel crystalline structure, and the spinel compounds of Preparation Examples 1 to 3 showed spectra similar to that of Li₄Ti₅O₁₂ in Preparation Example 8.

As shown in FIG. 5, in the cases of the spinel compounds of Preparation Examples 1 to 3, new peaks were shown at a diffraction angle 2θ=23.5°±2.5°, and the intensity of this new peak (Ib) was greater than the intensity of the peak (Ia) corresponding to a crystal plane (111).

That is, in the spinel compounds of Preparation Examples 1 to 3, a peak intensity ratio (Iₐ:I_{b}) of the peak intensity (Iₐ) corresponding to a crystal plane (111) at a diffraction angle 2θ=18°±2.5° to the peak intensity (I_{b}) at a diffraction angle 2θ=23.5°±2.5° was 1:1 or less.

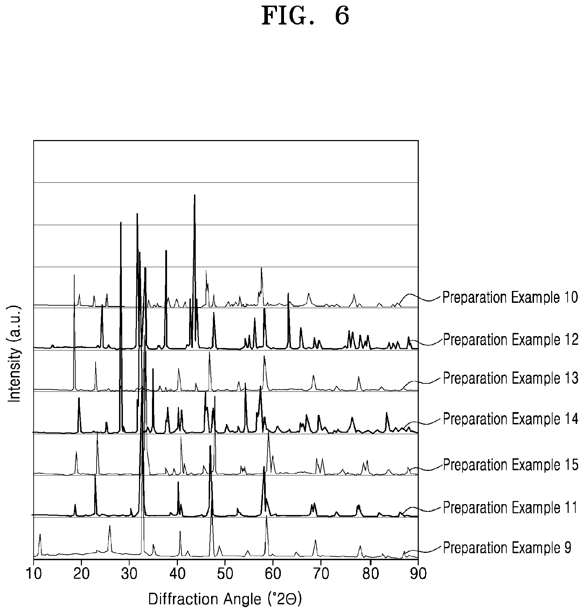

The XRD spectra of the perovskite compounds of Preparation Examples 9 to 15 were measured. The results thereof are shown in FIG. 6. In each XRD spectrum measurement, Cu Ka radiation was used.

As shown in FIG. 6, the perovskite compound of Preparation Examples 9 to 15 showed peaks corresponding to a perovskite crystalline structure.

In the XRD spectra, an intensity ratio (I(46.5°±2.5°):I(32.5°±2.5°)) (I_{b}:Iₐ) of the peak intensity (I(46.5°±2.5°):I_{b}) at 2θ=46.5°±2.5° to the peak intensity (I(32.5°±2.5°):Iₐ) at a diffraction angle 2θ=32.5°±2.5°, and an intensity ratio (I(57.5°±2.5°):I(32.5°±2.5°)) (I_{c}:Iₐ) of the peak intensity (I(57.5°±2.5°):I_{c}) at 2θ=57.5°±2.5° to the peak intensity (I(32.5°±2.5°):Iₐ) at a diffraction angle 2θ=32.5°±2.5° are shown in Table 3.

**Table 3**

| | Composition | Intensity ratio I_{b}:Iₐ | Intensity ratio I_{c}:Iₐ |
|---|---|---|---|
| Preparation Example 9 | Li_{0.3}4La_{0.55}TiO₃ | 0.3:1 | 0.3:1 |
| Preparation Example 10 | Li_{0.34}La_{0.55}RuO₃ | 0.2:1 | 0.2:1 |
| Preparation Example 11 | Li_{0.34}La_{0.55}MnO₃ | 0.5:1 | 0.4:1 |
| Preparation Example 12 | Li_{0.34}La_{0.55}NiO₃ | 0.3:1 | 0.3:1 |
| Preparation Example 13 | Li_{0.34}La_{0.55}CrO₃ | 0.3:1 | 0.3:1 |
| Preparation Example 14 | Li_{0.34}La_{0.55}IrO₃ | 0.2:1 | 0.3:1 |
| Preparation Example 15 | Li_{0.34}La_{0.55}CoO₃ | 0.6:1 | 0.3:1 |

As shown in FIG. 6, the perovskite compounds of Preparation Example 9 showed a peak at a diffraction angle 11.3±0.5°, however, a peak was not observed at a diffraction angle 11.3±0.5° in the perovskite compounds of Preparation Examples 10 to 15.

### Evaluation Example 4: liquid barrier characteristics

After dropping an organic liquid electrolyte (1 mole per liter (Molar (M)) LiTFSI in PC) on the disk of the dense structure prepared in Example 2, it was observed whether liquid droplets permeate the disk.

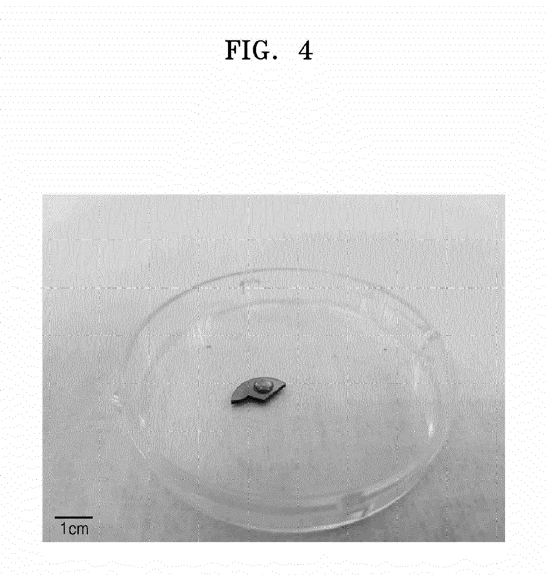

As shown in FIG. 4, even after 12 hours, the organic liquid electrolyte (1 M LiTFSI in PC) did not permeate the disk.

Accordingly, the barrier layer included in the positive electrode of Example 2 was found to have liquid barrier characteristics.

### Evaluation Example 5: Evaluation of charging and discharging characteristics of lithium-air battery (I)

Charging and discharging were performed in an oxygen atmosphere at 40 °C under 1 atmospheric pressure (1 atm) and at a relative humidity of 100 %.

The lithium-air batteries manufactured in Examples 4 and 5 were discharged at a constant current of 0.06 milliamperes per square centimeter (mA/cm²) until the voltage reached 2.0 volts (V) (vs. Li). Then, the lithium-air batteries were charged at the same constant current until the voltage reached 4.5 V. At a voltage of 4.5 V, the lithium-air batteries were charged at the same constant voltage until the current decreased to 0.006 mA/cm², thereby a charging and discharging cycle was performed once.

However, upon discharging, a cut-off was made at a discharge capacity of 3.0 milliampere-hours per square centimeter (mAh/cm²). The lithium-air battery was found to stably operate.

### Evaluation Example 6: Evaluation of charging and discharging characteristics of lithium-air battery (II)

Charging and discharging were performed in an oxygen atmosphere at 40 °C under 1 atmospheric pressure (1 atm) in a non-humidity condition.

The lithium-air battery manufactured in Example 4 was discharged at a constant current of 0.06 mA/cm² until the voltage reached 2.0 V (vs. Li). Then, the lithium-air battery was charged at the same constant current until the voltage reached 4.5 V. At a voltage of 4.5 V, the lithium-air batteries were charged at the same constant voltage until the current decreased to 0.006 mA/cm², thereby a charging and discharging cycle was performed once. However, upon discharging, a cut-off was made at a discharge capacity of 3.0 mAh/cm². The lithium-air battery of Example 4 was found to stably operate.

In contrast, due to, for example, a high interfacial resistance between the porous membrane and the barrier membrane, the lithium-air battery of Comparative Example 2 had a voltage drop to 2.0 V or less under the same charging and discharging condition as Example 4. That is, the lithium-air battery of Comparative Example 2 did not stably operate.

As apparent from the foregoing description, as the positive electrode includes the barrier layer including the first lithium-containing metal oxide, the lithium-air battery may have a simpler structure, a reduced internal resistance, and improved cycle characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A positive electrode configured to use oxygen as a positive active material, the positive electrode comprising:
a porous layer; and
a barrier layer disposed on a surface of the porous layer,
wherein the barrier layer comprises a first lithium-containing metal oxide.

2. The positive electrode of claim 1, wherein the barrier layer has a monolithic structure with the porous layer, and has a gas permeability of 0.001 to 2,000 cubic centimeters for a 1 centimeter film thickness per square meter per day under a pressure difference of 1 atmosphere, preferably wherein the gas comprises water vapor; and/or
wherein the barrier layer has a relative density of 70 percent to 100 percent; and/or
wherein a content of the first lithium-containing metal oxide is 50 percent by weight to 100 percent by weight, based on a total weight of the barrier layer; and/or
wherein the barrier layer further comprises at least one of a second lithium-containing metal oxide or a lithium salt, and wherein a melting point of the second lithium-containing metal oxide is lower than a melting point of the first lithium-containing metal oxide.

3. The positive electrode of claims 1 or 2, wherein a thickness of the barrier layer is 0.1 % to 500 % of a thickness of the porous layer; and/or
wherein the porous layer comprises the first lithium-containing metal oxide; and/or
wherein a porosity of the porous layer is 50% to 99%, based on a total volume of the porous layer, and a loading level of the porous layer is 4 milligrams per square centimeter to 100 milligrams per square centimeter; and/or
wherein a size of a pore in the porous layer is 1 nm to 1,000 nm.

4. The positive electrode of any of claims 1-3, wherein the first lithium-containing metal oxide is a crystalline lithium ionic conductor having an ionic conductivity of 1×10⁻⁷ siemens per centimeter to 1×10⁻¹ siemens per centimeter; or
wherein the first lithium-containing metal oxide is a crystalline electronic conductor having an electronic conductivity of 1×10⁻⁶ siemens per centimeter to 5×10⁻¹ siemens per centimeter; or
wherein the first lithium-containing metal oxide is a mixed conductor having an electronic conductivity at a temperature of 25 °C of 1×10⁻⁶ siemens per centimeter to 5×10⁻¹ siemens per centimeter, and an ionic conductivity at a temperature of 25 °C of 2×10⁻⁷ siemens per centimeter to 1×10⁻¹ siemens per centimeter.

5. The positive electrode of any of claims 1-4, wherein the first lithium-containing metal oxide comprises at least one of a perovskite compound or a spinel compound.

6. The positive electrode of any of claims 1-5, wherein the first lithium-containing metal oxide comprises a perovskite compound represented by Formula 1:
Formula 1 LiₓAyG_{z}O_{3-δ}
wherein, in Formula 1,
A and G are each independently at least one metal element of Groups 2 to 16 of the Periodic Table of Elements,
δ is an oxygen vacancy, and
0<x<1, 0<y<1, 0<x+y≤1, 0<z≤1.5, and 0≤δ≤1.5-,
preferably wherein A is at least one of Ca, Sr, Ba, Y, La, Ce, Pr, Nd, Pm, Sm, Gd, Tb, Dy, Ho, or Er,
G is at least one of Ti, Pd, Pb, Fe, Ir, Co, Rh, Mn, Cr, Ni, Ru, Re, Sn, V, Ge, W, Zr, Mo, Hf, U, Nb, Th, Ta, Bi, Ca, Sr, Ba, Y, La, Ce, Pr, Nd, Pm, Sm, Gd, Tb, Dy, Ho, Er, Mg, Al, Sc, Zn, Ga, Rb, Ag, Cd, In, Sb, Pt, or Au,
δ is an oxygen vacancy, and
0.2<x≤0.7, 0<y≤0.7, 0<x+y<1, 0<z≤1.2, and 0≤δ≤1.2.

7. The positive electrode of claim 6, wherein A is at least one of La, Ce, Pr, Gd, Ca, Sr, or Ba,
G is at least one of Ti, Mn, Ni, Ru, Cr, Co, Ir, Fe, Pd, Pb, Rh, Sn, V, Re, Ge, W, Zr, Mo, Nb, Ta, Hf, or Bi,
δ is an oxygen vacancy, and
0.2<x≤0.5, 0.4<y≤0.7, 0<x+y<1, 0.8<z≤1.2, and 0≤δ≤1.0; and/or
wherein an electronic conductivity of the perovskite compound at a temperature of 25 °C is 1×10⁻⁶ siemens per centimeter to 5×10⁻¹ siemens per centimeter, and an ionic conductivity of the perovskite compound at a temperature of 25 °C is 2×10⁻⁷ siemens per centimeter to 1×10⁻¹ siemens per centimeter.

8. The positive electrode of any of claims 1-7, wherein the first lithium-containing metal oxide comprises a spinel compound represented by Formula 2 or Formula 3:
Formula 2 Li_{1±x}M_{2±y}O_{4-δ1}
Formula 3 Li_{4±a}M_{5±b}O_{12-δ2}
wherein, in Formulae 2 and 3,
M in Formulae 2 and 3 are each independently at least one metal element of Groups 2 to 16 of the Periodic Table of Elements,
δ1 and δ2 are each an oxygen vacancy, and
0<x<1, 0<y<1, 0≤δ1≤1, 0<a<2, 0.3<b<5, and 0≤δ2≤3.

9. The positive electrode of claim 8, wherein M in Formulae 2 and 3 are each independently at least one of Ni, Pd, Pb, Fe, Ir, Co, Rh, Mn, Cr, Ru, Re, Sn, V, Ge, W, Zr, Ti, Mo, Hf, U, Nb, Th, Ta, Bi, Ca, Sr, Ba, Y, La, Ce, Pr, Nd, Pm, Sm, Gd, Tb, Dy, Ho, Er, Mg, Al, Sc, Zn, Ga, Rb, Ag, Cd, In, Sb, Pt, or Au.

10. The positive electrode of claims 8 or 9, wherein the spinel compound is represented by Formula 4:
Formula 4 Li_{4±a}Ti_{5-b}M'_{c}O_{12-δ}
wherein, in Formula 4,
M' is at least one of Cr, Mg, Ca, Sr, Sc, Y, La, Ce, Pr, Nd, Sm, Eu, Gd, Tb, Dy, Ho, Er, Tm, Yb, Lu, Zr, Hf, V, Nb, Ta, Mo, W, Mn, Tc, Re, Fe, Ru, Os, Co, Rh, Ir, Ni, Pd, Pt, Cu, Ag, Au, Zn, Cd, Hg, Al, Ga, In, TI, Ge, Sn, Pb, Sb, Bi, Po, As, Se, or Te,
δ is an oxygen vacancy, and
0.3<a<2, 0.3<b<2, 0.3<c<2, and 0≤5≤3; and/or
wherein an electronic conductivity of the spinel compound at a temperature of 25 °C is 1×10⁻⁶ siemens per centimeter to 5×10⁻¹ siemens per centimeter, and an ionic conductivity of the spinel compound at a temperature of 25 °C is 1×10⁻⁷ siemens per centimeter to 1×10⁻¹ siemens per centimeter.

11. The positive electrode of any of claims 1-10, wherein the first lithium-containing metal oxide comprises at least one of a layered compound, a garnet compound, a sodium super ionic conductor compound, a lithium super ionic conductor compound, a phosphate compound, a tavorite compound, a triplite compound, an anti-perovskite compound, a silicate compound, or a borate compound;
preferably wherein the first lithium-containing metal oxide comprises at least one of a layered compound represented by Formula 5, a sodium super ionic conductor compound represented by Formula 6, a lithium super ionic conductor compound represented by Formula 7, a garnet compound represented by Formula 8, phosphate compounds represented by Formulae 9 and 10, a tavorite compound or a triplite compound represented by Formula 11, an anti-perovskite compound represented by Formula 12, a silicate compound represented by Formula 13, or a borate compound represented by Formula 14:
Formula 5 Li_{1±x}M_{1±y}O_{2±δ}
wherein, in Formula 5,
M is at least one metal element of Groups 2 to 16 of the Periodic Table of Elements,
δ is an oxygen vacancy, and
0<x<0.5, 0<y<1, and 0≤δ≤1,
Formula 6 Li₁₊ₓAₓM₂₋ₓ(XO₄)₃
wherein, in Formula 6,
A and M are each independently at least one metal element of Groups 2 to 16 of the Periodic Table of Elements,
X is As, P, Mo, or S, and
0<x<1.0,
Formula 7 Li_{8-c}M1ₐM2_{b}O4
wherein, in Formula 7,
M1 and M2 are each independently at least one metal element of Groups 2 to 16 of the Periodic Table of Elements,
c=ma+nb, m is an oxidation number of M1, and n is an oxidation number of M2, and
0<c<8, 0<a:51, and 0≤b≤1,
Formula 8 LiₓM1₃M2₂O₁₂
wherein, in Formula 8,
M1 and M2 are each independently at least one metal element of Groups 2 to 16 of the Periodic Table of Elements, and
3.0≤x≤7.0,
Formula 9 Li_{1±x}MPO₄
Formula 10 Li₂MP₂O₇
wherein, in Formulae 9 and 10,
M is at least one metal element of Groups 2 to 16 of the Periodic Table of Elements, and
0≤x≤1.0,
Formula 11 Li_{1±x}M(TO₄)X
wherein, in Formula 11,
M is at least one metal element of Groups 2 to 16 of the Periodic Table of Elements,
T is P or S,
X is F, O, or OH, and
0≤x≤1.0,
Formula 12 LiₓM_{y}OA
wherein, in Formula 12,
M is at least one metal element of Groups 2 to 16 of the Periodic Table of Elements,
A is F, Cl, Br, I, S, Se, or Te, and
2.0≤x≤3.0 and 0≤y≤1.0,
Formula 13 Li_{2±x}MSiO₄
wherein, in Formula 13,
M is at least one metal element of Groups 2 to 16 of the Periodic Table of Elements, and
0≤x≤1.0, and
Formula 14 Li_{1±x}MBO₃
wherein, in Formula 14,
M is at least one metal element of Groups 2 to 16 of the Periodic Table of Elements, and
0≤x≤1.0.

12. The positive electrode of claim 11, wherein the first lithium-containing metal oxide has an ionic conductivity at a temperature of 25 °C of 1×10⁻⁶ siemens per centimeter to 5×10⁻¹ siemens per centimeter.

13. The positive electrode of any of claims 1-12, wherein the first lithium-containing metal oxide is electrochemically stable at a voltage in a range of 2 volts to 4 volts versus lithium metal.

14. A lithium-air battery comprising:
a positive electrode according to any of claims 1 to 13;
a negative electrode comprising lithium; and
an electrolyte between the positive electrode and the negative electrode;
preferably wherein the electrolyte comprises a solid electrolyte.

15. A method of manufacturing a positive electrode of any of claims 1 to 13, the method comprising:
molding a first composition comprising a first lithium-containing metal oxide to form a molded composition;
heat-treating the molded composition to prepare a first layer;
preparing a second composition comprising the first lithium-containing metal oxide and a binder;
coating the second composition on a substrate;
drying the second composition on the substrate to form a second layer;
disposing the second layer on the first layer to form a laminate; and
heat-treating the laminate at a temperature of 900 °C to 1,300 °C under an oxidizing atmosphere to manufacture the positive electrode.
